# EUROPÄISCHE PATENTANMELDUNG

(11) **EP 4 763 744 A1**
(43) Veröffentlichungstag der Anmeldung: **24.06.2026**
(21) Anmeldenummer: 24221340.3
(22) Anmeldetag: 19.12.2024
(51) Int. Cl.: B65G 1/04

(54) **WARENLAGERSYSTEM**

(71) Anmelder: FlexStore Systems UG, 83093 Bad Endorf (DE)
(72) Erfinder: FORSTER, Florian, 83093 Bad Endorf (DE); HROH, Sascha, 83098 Brannenburg (DE)
(74) Vertreter: Vossius & Partner Patentanwälte Rechtsanwälte mbB

(57) **Zusammenfassung**

Warenlagersystem, aufweisend:
eine Mehrzahl vertikaler Schächte, wobei jeder Schacht zur Aufnahme einer Mehrzahl vertikal übereinander angeordneter Lagergutträger ausgebildet ist, wobei jeder Schacht mindestens ein erstes Zugmittel aufweist, das vertikal durch den Schacht bewegbar ist, wobei das erste Zugmittel mehrere vertikal beabstandete erste Aufnahmeelemente aufweist, die jeweils dazu ausgebildet sind, mindestens einen der im Schacht aufzunehmenden Lagergutträger zu halten, wobei die ersten Aufnahmeelemente entlang des ersten Zugmittels angeordnet und mittels des ersten Zugmittels durch den Schacht bewegbar sind;
eine Steuerung, die ausgebildet ist, eine Bewegung eines bestimmten Zugmittels zu veranlassen, sodass sich eine vertikale Position der ersten Aufnahmeelemente des Zugmittels im jeweiligen Schacht um eine definierte Distanz verändert, wobei die Steuerung ausgebildet ist, die definierte Distanz abhängig von einer Höhe eines in den jeweiligen Schacht aufzunehmenden oder aus dem jeweiligen Schacht zu entnehmenden Lagergutträgers und/oder einer Höhe eines auf dem Lagergutträger befindlichen Lagerguts zu steuern;
mindestens ein Bediengerät mit mindestens einem Antrieb;
eine Schnittstelle, die dazu ausgebildet ist, das erste Zugmittel mechanisch mit dem Antrieb des Bediengeräts zu koppeln, um das erste Zugmittel mittels des Antriebs des Bediengeräts anzutreiben; sowie Verfahren zum Betrieb eines solchen Warenlagersystems.

## Beschreibung

Die vorliegende Erfindung ist im Bereich der Logistik angesiedelt. Insbesondere betrifft die vorliegende Erfindung den Bereich der Intralogistik, vorzugsweise die Intralogistik von Distributions- und Logistikzentren.

In Distributions- und Logistikzentren kommen neben Regallagern häufig sogenannte Blocklager zum Einsatz. Grundsätzlich werden Blocklager gebildet aus mehreren rasterförmig aneinander angeordneten Behälterstapeln, wobei eine Bedienung des Blocklagers in der Regel von oben (oberhalb der Behälterstapel) oder von unten (unterhalb der Behälterstapel) erfolgt. Die Behälterstapel können frei stehend ausgebildet sein oder in Schächten angeordnet sein, beispielsweise entlang von Führungsschienen, Führungspfeilern oder Führungswänden angeordnet und/oder abgestützt sein.

Aus dem Stand der Technik sind vielfältige Varianten von Blocklagern bekannt.

Ein bekanntes Blocklager mit Bedienung von unten ist beispielsweise das System "Powercube" von der Jungheinrich AG, Hamburg, Deutschland, beschrieben u.a. auch in EP 4 238 902 A1. In diesem System werden alle Produkte in Behälter, bspw. Kisten, geladen. Diese Behälter werden von unten in einen vertikalen Schacht geladen. Dabei liegt der obige Behälter immer direkt auf dem darunter liegenden Behälter auf. Der unterste Behälter eines jeden Schachts ist durch ein Klinkensystem je Schacht gegen Herunterfallen und damit aus dem Lager Rausfallen gesichert. Die Behälter werden mit einem unter den Schächten verfahrbaren Fahrzeug von unten in einen jeweiligen Schacht geladen und aus einem Schacht entnommen. Das Fahrzeug bewegt sich hier unterhalb der Schächte auf einem Schienensystem. Bei diesem System wird viel Platz verloren, wenn die einzulagernde Ware niedriger ist als der Behälter. Dies verringert die Lagerdichte, da ein (oft relativ großer) Teil des Behälters leer bleibt. Zudem kann grundsätzlich nur so eingelagert werden, dass der obere Behälter durch den unteren gestützt wird. Daher ist auch eine Bauhöhe der Schächte und damit des Blocklagers begrenzt. Es können maximal so viele Behälter aufeinander gestapelt werden, wie der unterste Behälter tragen kann. Zusätzlich ist eine Verwendung dieses Lagersystems begrenzt auf kistenförmige Behälter welche aufeinander stapelbar sind. Das Ein- und Auslagern ist sehr energieaufwändig, da für den jeweiligen Prozess immer der komplette Behälterstapel eines Schachts angehoben werden muss. Eine Verwendung anderer Lagergutträger wie z.B. Trays mit darauf befindlicher Ware, welche über den Trayrand nach oben hinaussteht, beispielsweise in Form von Kartons, ist nicht möglich, da hier kein Stapel gebildet werden kann.

Ein weiteres bekanntes Blocklagersystem, ist beispielsweise das System "Autostore" der Autostore Ltd., Vindafjord, Norwegen. Hier erfolgt eine Bedienung von oben, ein Zugriff ist also immer nur auf den obersten Behälter eines Lagerturms bzw. Schachts möglich. In ähnlicher Weise wie im "Powercube" werden auch hier alle Produkte in Behälter eingebracht und darin gelagert. Diese Behälter werden dann aber von oben nach unten durch ein geeignetes Fahrzeug in einen jeweiligen Schacht hinunter gesenkt. Dabei liegt der obige Behälter immer direkt auf dem darunter liegenden Behälter auf, die Behälter werden also auch hier aufeinander gestapelt, was den Nachteil mit sich bringt, dass die gesamte Masse des kompletten Stapels je Schacht auf dem untersten Behälter lastet. Somit ist die Stapelhöhe und damit auch die Blocklagerhöhe durch die Stabilität des untersten Behälters in der Höhe begrenzt. Das Fahrzeug senkt einen Greifer mit einer "Winde" in den Schacht hinunter und kann dort den obersten Behälter greifen und nach oben heben. Das Fahrzeug bewegt sich oberhalb der Schächte auf einem Schienensystem. Auch bei diesem System wird viel Platz verloren, wenn die einzulagernde Ware niedriger ist als der Behälter. Es kann grundsätzlich nur so eingelagert werden, dass der obere Behälter durch den unteren gestützt wird. Eine Verwendung anderer Lagergutträger wie z.B. Trays bei denen die Ware über den Trayrand hinaussteht mit z.B. Kartons als Ware ist nicht möglich, da hier kein Stapel gebildet werden kann. Auch ist es nicht möglich, einen Behälter in einem relativ leeren Schacht ganz oben anzuordnen, um einen direkten Zugriff zu ermöglichen. Im Gegenteil muss für jeden Behälterzugriff ein Senken sowie ein Heben des Greifers bis zum obersten bereits eingelagerten Behälter stattfinden.

Ferner sind sogenannte Shuttle-Lager bzw. automatische Kleinteillager bekannt. Diese weisen ein Regalsystem mit einzelnen Stellplätzen auf, in welche einfach- oder mehrfachtief der Lagergutträger horizontal gelagert wird. Hierbei handelt es sich in der Regel um ein Regallager. Dieses Regalsystem ist definiert durch eine Auflagefläche für den Lagergutträger je Stellplatz und einer seitlichen Einteilung. Die Höhe des Stellplatzes ist fix. Ist der Lagergutträger inkl. Ware niedriger als der Hohlraum des Faches, so ist der darüberliegende Raum ungenutzt. Eine Seite des Stellplatzes ist offen. Auf dieser Seite befindet sich die Fahrgasse für die Fahrzeuge (Shuttle oder Regalbediengerät), welche die Lagergutträger ein- und auslagern. Die Stellplatzhöhe ist nicht flexibel. Dadurch wird bei niedrigeren Produkten viel Platz verloren. Das Shuttle bzw. Regalbediengerät benötigt Platz vor jedem Stellplatz zum seitlichen Verfahren, Aufnehmen und Abgeben von Lagergutträgern. Dieser Platz kann nicht zum Lagern genutzt werden. Häufig benötigt ein solches System viel mehr Platz als ein Blocklager. Grundsätzlich sind Shuttle- und Regalbediengeräte-Lager weniger redundant, da bestimmte Gewerke einen Knotenpunkt bilden, durch welchen alle Behältern müssen.

DE 10 2019 111 709 B4 offenbart ein System zum Lagern und Bewegen von Waren in einem dreidimensionalen Lager. Das System weist u.a. mindestens vier aufrechte Stützen, die einen Schacht bilden und mindestens zwei unabhängige Hebeeinheiten auf. Die zwei Hebeeinheiten sind an gegenüberliegenden Seiten des Raums zwischen den zwei Stützen der Seite angeordnet und ausgestaltet, um synchronisiert zusammenzuarbeiten, um Waren vertikal zu bewegen. Jede Hebeeinheit beinhaltet Antriebe und Steuerungsmittel in einem Grundkörper und weist Haltemittel für eine Ware auf, wobei die Halteelemente zwischen einer Halteposition und einer Freigabeposition derart verstellbar sind, dass die jeweilige Ware in der Halteposition gehalten und vertikal bewegt werden kann, während die Freigabeposition eine Bewegung der Hebeeinheit vertikal an der Ware vorbei erlaubt. Das System umfasst also eine Mehrzahl von Hebeeinheiten, welche aktiv mit einem Antrieb ausgestattet sind. Dies führt zumindest zu einem wartungsintensiven System, zu erhöhten Kosten und höherer Fehleranfälligkeit. Sofern dieses System mit dem Ziel einer hohen Lagerdichte eingesetzt wird ist vorgesehen, mehrere Schächte rasterförmig aneinander angrenzend anzuordnen und die Schächte möglichst nie vollständig mit Ware zu bestücken, sondern immer auch Freiräume in den Schächten vorzusehen, um Ware mittels der Hebeeinheiten auch horizontal zwischen verschiedenen Schächten zu verfahren. Somit kann dieses System die Lagergutdichte betreffend bei Weitem nicht an die Effizienz herkömmlicher Blocklager heranreichen.

EP 3 210 917 A1 offenbart ein Vertikallager für Waren, enthaltend einen Bereitstellungsträger, auf den die Waren in einer horizontalen Transportrichtung bringbar sind und ein Gestell mit Hubelementen für die Waren, wobei die Hubelemente mittels mindestens eines im Gestell angeordneten umlaufenden Zugmittels in einer vertikalen Transportrichtung auf- und ab bewegbar sind, wobei mehrere Hubelemente in Abständen übereinander angeordnet und mit dem Zugmittel dauernd verbunden sind. Das Vertikallager funktioniert allerdings nur bei einer seitlichen, d.h. horizontalen Zuführung von Waren über den (horizontal fördernden) Bereitstellungsträger, um eine sichere Kopplung von Ware zu Hubelement gewährleisten zu können. Damit ist dieser Mechanismus ungeeignet, in platzsparende Lagerlösungen, beispielsweise nach dem Vorbild von Blocklagern eingesetzt zu werden. Darüber hinaus ist es nicht möglich, bei diesem Vertikallager Waren mittels eines Bediengeräts bzw. Transportfahrzeugs direkt in das Gestell mit Hubelementen einzubringen, wodurch dieses Vertikallager unpraktikabel für den Einsatz in Kombination mit Bediengeräten bzw. Transportfahrzeugen ist.

All diesen Lagern ist es gemein, dass sie nicht in der Lage sind, den benötigten Raum für das gesamte Lagersystem, insbesondere den Raum innerhalb der Schächte, möglichst vollständig für Waren zu nutzen. Damit sind diese Systeme in ihrer Lagerdichte begrenzt. Aufgrund der hohen Anzahl an zu lagernder Ware wird für die Lagerung insb. in einem Distributions- oder Logistikzentrum ein enormer Platzbedarf benötigt. Dies kommt daher, da alle herkömmlichen Lagersysteme gewisse Abstände und Freiräume für die Ein- und Auslagerung in die starren Stellplätze benötigen oder der Lagergutträger (z.B. Behälter) selbst die Höhe vorgibt. Bei einem klassischen Blocklager werden als Lagergutträger ausschließlich Behälter verwendet und im Schacht übereinander oder untereinander gestapelt. Dadurch wird die Flexibilität des Blocklagers auf den Behälter als Lagergutträger eingeschränkt und erfordert einen Decanting-Prozess (Beladen der Behälter mit Ware) im Eingang. Hierbei wird die Lagerdichte zusätzlich reduziert, da der Raum des Behälters bei niedriger Ware oder beim "leer" werden des Behälters ungenutzt bleibt. Bei hoher Ware begrenzt der Behälter dagegen das maximale Maß der Ware, da diese nicht darüber hinausstehen darf. Die Höhe des gesamten Behälterstapels und somit des Blocklagers ist wiederum vom Gesamtgewicht begrenzt, da der unterste Behälter immer die gesamte Last aufnehmen muss. Der Behälterstapel verhindert außerdem ein optimales Brandschutzkonzept, sowie einen optimalen Luftstrom um die Ware, beispielsweise in einem Kühlbereich.

Im Stand der Technik fehlt es an einem System, welches eine höhere Lagerdichte ermöglicht, für schwere Lasten geeignet ist, energieeffizient betrieben werden kann, in hoher Bauhöhe realisiert werden kann, eine gute Belüftung der Waren und/oder verbesserten Brandschutz gewährleistet.

Es besteht daher ein Bedarf nach einer Lagerlösung (beispielsweise einer Blocklager- oder Regallagerlösung) bzw. einem Warenlagersystem mit dem die oben genannten Nachteile zumindest teilweise überwunden werden können. Insbesondere besteht ein Bedarf nach einer Lagerlösung und/oder einem Warenlagersystem, das den Stand der Technik zumindest in einem der nachstehenden Punkte verbessert: höhere Lagerdichte, höherer Umschlag, einfachere Prozesse, höhere Automatisierung, zügige Betriebsabläufe, einfachere IT-Strategien, erhöhte Flexibilität und sichererer Betrieb.

Die vorstehend genannten Problematiken können zumindest teilweise überwunden werden, bzw. der vorstehend genannte Bedarf kann zumindest teilweise befriedigt werden durch die vorliegende Erfindung.

In einem ersten Aspekt betrifft die vorliegende Erfindung ein Warenlagersystem, aufweisend:
eine Mehrzahl vertikaler Schächte, wobei jeder Schacht zur Aufnahme einer Mehrzahl vertikal übereinander angeordneter Lagergutträger ausgebildet ist, wobei jeder Schacht mindestens ein erstes Zugmittel aufweist, das vertikal durch den Schacht bewegbar ist, wobei das erste Zugmittel mehrere vertikal beabstandete erste Aufnahmeelemente aufweist, die jeweils dazu ausgebildet sind, mindestens einen der im Schacht aufzunehmenden Lagergutträger zu halten, wobei die ersten Aufnahmeelemente entlang des ersten Zugmittels angeordnet und mittels des ersten Zugmittels durch den Schacht bewegbar sind;
eine Steuerung, die ausgebildet ist, eine Bewegung eines bestimmten Zugmittels zu veranlassen, sodass sich eine vertikale Position der ersten Aufnahmeelemente des Zugmittels im jeweiligen Schacht um eine definierte Distanz verändert, wobei die Steuerung ausgebildet ist, die definierte Distanz abhängig von einer Höhe eines in den jeweiligen Schacht aufzunehmenden oder aus dem jeweiligen Schacht zu entnehmenden Lagergutträgers und/oder einer Höhe eines auf dem Lagergutträger befindlichen Lagerguts zu steuern;
mindestens ein Bediengerät mit mindestens einem Antrieb;
eine Schnittstelle, die dazu ausgebildet ist, das erste Zugmittel mechanisch mit dem Antrieb des Bediengeräts zu koppeln, um das erste Zugmittel mittels des Antriebs des Bediengeräts anzutreiben.

Die Begriffe "vertikal" bzw. "horizontal" bezeichnen im Rahmen der vorliegenden Erfindung Richtungen, die in Bezug auf das Warenlagersystem hauptsächlich und/oder in etwa vertikal bzw. horizontal sind. Insbesondere sind damit auch Richtungen umfasst, die eine Abweichung von maximal 15°, bevorzugt maximal 10°, weiter bevorzugt maximal 5°, weiter bevorzugt maximal 2° zur Vertikalen bzw. Horizontalen aufweisen.

Ein Schacht bezeichnet im Rahmen der vorliegenden Erfindung eine Konstruktion, insbesondere einen begrenzenden Raum, in den Lagergutträger eingelagert und/oder in dem Lagergutträger vertikal bewegt werden können. Insbesondere kann ein Schacht bevorzugt von einer oder mehreren Seitenpfeilern bzw. Seitenwänden und/oder einer oder mehreren Eckpfeilern begrenzt sein. Anders ausgedrückt kann ein Schacht vorzugsweise als dreidimensionaler, sich bevorzugt vertikal erstreckender, Raum definiert werden, der von mindestens zwei Pfeilern, und/oder von mindestens einer Seitenwand und mindestens einem Pfeiler, und/oder von mindestens zwei Seitenwänden begrenzt wird. Eine Seitenwand kann bevorzugt eine Platte oder ein Pfeiler sein. Ein Pfeiler kann bevorzugt einen rechteckigen, runden, L-förmigen, C-förmigen, U-förmigen, Z-förmigen oder kreuzförmigen Querschnitt aufweisen und sich weiter bevorzugt säulenartig in die Höhe erstrecken. Ein Pfeiler kann entweder als Eckpfeiler ausgebildet sein oder als Seitenpfeiler und vorzugsweise zur Begrenzung von mindestens einem Schacht oder von zwei bis vier benachbarten Schächten beitragen. Bevorzugt ist jeder Schacht definiert durch mindestens zwei, weiter bevorzugt vier, Eckpfeiler und/oder durch mindestens zwei, weiter bevorzugt vier, Seitenwände bzw. Seitenpfeiler, insbesondere durch einen Freiraum zwischen den Eckpfeilern und/oder Seitenwänden, in welchem ein Lagergutträger vertikal verfahrbar ist und welcher eine annährend gleich große Grundfläche wie der Lagergutträger aufweist. Derartige Schächte sind beispielsweise bekannt aus dem System "Powercube" von der Jungheinrich AG, oder aus dem System "Autostore" von der Autostore Ltd., wie oben erläutert.

Der Schacht kann (bzw. die Schächte können) bevorzugt eine vieleckige, insbesondere eine rechteckige, bevorzugt quadratische, eine kreisförmige und/oder eine ovale Grundfläche aufweisen, wobei die Grundfläche bevorzugt in einer Draufsicht auf den Schacht definierbar ist. Der Schacht kann entsprechend einen korrespondierenden dreidimensionalen Freiraum bilden, beispielsweise also quaderförmig und/oder zylindrisch ausgebildet sein. Der Schacht kann insbesondere von oben, von unten und/oder seitlich zugänglich sein. Anders ausgedrückt kann der Schacht ausgebildet sein, sodass Lagergutträger von unten und/oder von oben in den Schacht eingebracht bzw. aus dem Schacht entnommen werden können.

Die Mehrzahl von Schächten ist vorzugsweise direkt aneinander angrenzend angeordnet. Insbesondere kann bevorzugt sein, dass keine Gassen für ein Bediengerät zwischen einzelnen Schächten aus der Mehrzahl von Schächten vorgesehen sind. Die Mehrzahl vertikaler Schächte können beispielsweise eine Blocklageranordnung bilden. Dies kann bevorzugt zu hoher Lagerdichte im Warenlagersystem beitragen. Bevorzugt kann in einem Bereich unter oder über der Mehrzahl von Schächten ein Verfahrbereich für Bediengeräte vorgesehen sein.

Die Steuerung ist ausgebildet, die definierte Distanz abhängig von einer Höhe eines in den jeweiligen Schacht aufzunehmenden oder aus dem jeweiligen Schacht zu entnehmenden Lagergutträgers und/oder einer Höhe eines auf dem Lagergutträger befindlichen Lagerguts zu steuern. Mit anderen Worten ist die Steuerung ausgebildet, die definierte Distanz zu steuern abhängig von der Gesamthöhe eines mit Lagergut beladenen Lagergutträgers, wobei die Gesamthöhe definiert ist, als das Maximum aus: einer Höhe von Unterkante Lagergutträger zu Oberkante Lagergut oder einer Höhe von Unterkante Lagergutträger zu Oberkante Lagergutträger. Die so definierte Gesamthöhe kann auch als effektive Gesamthöhe bezeichnet werden. Anders ausgedrückt ist also die Steuerung ausgebildet, die definierte Distanz zu steuern abhängig von der effektiven Gesamthöhe eines in den jeweiligen Schacht aufzunehmenden oder aus dem jeweiligen Schacht zu entnehmenden Lagergutträgers. Die effektive Gesamthöhe kann definiert sein als die maximale Höhe, die der Lagergutträger zusammen mit einer eventuell darauf oder darin befindlichen Ware aufweist. Beispielsweise kann die effektive Gesamthöhe einer mit Ware beladenen Palette die Summe aus der Höhe der Palette selbst und der Höhe der darauf befindlichen Ware sein. Die effektive Gesamthöhe einer leeren Palette kann die Höhe der Palette selbst sein. Die effektive Gesamthöhe einer mit Ware beladenen Kiste kann die Höhe von Unterkante zu Oberkante der Kiste sein, evtl. zuzüglich eines Teils der Ware, die über die Oberkante der Kiste hinausragt. Die effektive Gesamthöhe einer leeren Kiste kann die Höhe von Unterkante zu Oberkante der Kiste sein, also die Höhe der Kiste selbst, sein. Die definierte Distanz entspricht bevorzugt mindestens der effektiven Gesamthöhe eines einzulagernden Lagergutträgers, weiter bevorzugt der effektiven Gesamthöhe eines einzulagernden Lagergutträgers zuzüglich eines Abstandswerts, wobei der Abstandswert bevorzugt mindestens 10 mm, weiter bevorzugt mindestens 20 mm und/oder bevorzugt maximal 200 mm, weiter bevorzugt maximal 150 mm beträgt.

Bevorzugt weist in dem Warenlagersystem jeder Schacht ferner mindestens ein zweites Zugmittel auf, das vorzugsweise vertikal durch den und/oder entlang des Schachts bewegbar ist, wobei das zweite Zugmittel mehrere vertikal beabstandete zweite Aufnahmeelemente aufweist, die jeweils dazu ausgebildet sind, mindestens einen der im Schacht aufzunehmenden Lagergutträger zu halten, wobei die zweiten Aufnahmeelemente entlang des zweiten Zugmittels angeordnet und mittels des zweiten Zugmittels durch den Schacht bewegbar sind. Auch das zweite Zugmittel weist vorzugsweise eine Schnittstelle auf, um das zweite Zugmittel, bevorzugt mechanisch, mit dem Antrieb des Bediengeräts und/oder mit dem ersten Zugmittel zu koppeln. Somit kann auch das zweite Zugmittel, z.B. direkt oder indirekt, mittels des Antriebs des Bediengeräts angetrieben werden.

Weiter bevorzugt ist das zweite Zugmittel im Schacht gegenüberliegend zum ersten Zugmittel angeordnet, vorzugsweise diagonal gegenüberliegend.

Zusätzlich oder alternativ kann jedes zweite Aufnahmeelement einem gegenüberliegenden ersten Aufnahmeelement zugeordnet sein, wobei die einander zugeordneten Aufnahmeelemente ausgebildet sind, gemeinsam den im Schacht aufzunehmenden Lagergutträger zu halten. Die zugeordneten Aufnahmeelemente liegen vorzugsweise in einer gemeinsamen horizontalen Ebene. Diese gemeinsame horizontale Ebene weist vorzugsweise eine Dicke (vertikale Ausdehnung) von maximal 10 mm, weiter bevorzugt maximal 5 mm auf. Mit anderen Worten liegen die zugeordneten Aufnahmeelemente vorzugsweise in zwei parallelen Ebenen, die einen Abstand von maximal 10 mm, weiter bevorzugt maximal 5 mm zueinander aufweisen.

Die ersten und/oder zweiten Aufnahmeelemente sind bevorzugt in regelmäßigen Abständen entlang des entsprechenden ersten und/oder zweiten Zugmittels angeordnet. Weiter bevorzugt beträgt ein Abstand zwischen zwei benachbarten Aufnahmeelementen an dem entsprechenden ersten und/oder zweiten Zugmittel mindestens 20 mm, weiter bevorzugt mindestens 50 mm, weiter bevorzugt mindestens 80 mm. Zusätzlich oder alternativ kann ein Abstand zwischen zwei benachbarten Aufnahmeelementen an dem entsprechenden ersten und/oder zweiten Zugmittel maximal 2000 mm, weiter bevorzugt maximal 1500 mm, weiter bevorzugt maximal 1000 mm, weiter bevorzugt maximal 500 mm, weiter bevorzugt maximal 350 mm, weiter bevorzugt maximal 250 mm, weiter bevorzugt maximal 150 mm betragen. Vorzugsweise können das erste und das zweite Zugmittel identisch gestaltet sein. Mit anderen Worten sind vorzugsweise die ersten Aufnahmeelemente in regelmäßigen Abständen entlang des ersten Zugmittels angeordnet; weiter bevorzugt beträgt ein Abstand zwischen zwei benachbarten Aufnahmeelementen an dem ersten Zugmittel mindestens 20 mm, weiter bevorzugt mindestens 50 mm, weiter bevorzugt mindestens 80 mm und/oder ein Abstand zwischen zwei benachbarten Aufnahmeelementen an dem ersten Zugmittel beträgt bevorzugt maximal 2000 mm, weiter bevorzugt maximal 1500 mm, weiter bevorzugt maximal 1000 mm, weiter bevorzugt maximal 500 mm, weiter bevorzugt maximal 350 mm, weiter bevorzugt maximal 250 mm, weiter bevorzugt maximal 150 mm. Diese geometrische Ausgestaltung lässt sich vorzugsweise auch auf das zweite Zugmittel übertragen. Ein bevorzugter möglichst kleiner Abstand der Aufnahmeelemente zueinander kann dazu beitragen, dass Lagergüter höhenabhängig und damit mit möglichst kleinen vertikalen Abständen zueinander in einem Schacht gelagert werden können. Ein bevorzugter nicht zu kleiner Abstand der Aufnahmeelemente zueinander kann dazu beitragen, dass Lagergutträger prozesssicher in die Schächte eingebracht und aus diesen entnommen werden können.

Vorzugsweise weist das erste und/oder das zweite Zugmittel mindestens 2, vorzugsweise mindestens 10, vorzugsweise mindestens 20, mindestens 50 oder mindestens 100 Aufnahmeelemente auf.

Bevorzugt ist das Warenlagersystem ausgebildet, das erste und das zweite Zugmittel eines jeweiligen Schachts simultan zu bewegen. Beispielsweise können das erste und das zweite Zugmittel mechanisch gekoppelt sein und/oder die Steuerung kann ausgebildet sein, eine simultane Bewegung des ersten und zweiten Zugmittels zu veranlassen. Das erste und/oder zweite Zugmittel kann bevorzugt in einen den Schacht definierenden Eckpfeiler und/oder in eine Seitenwand integriert sein.

Bevorzugt sind die ersten und/oder zweiten Aufnahmeelemente ausgebildet, Lagergutträger vertikal durch den Schacht zu bewegen. Bevorzugt sind die ersten und/oder zweiten Aufnahmeelemente als Stifte, Platten, Winkel, Gabeln, Nuten oder Löcher ausgebildet. Das erste und/oder zweite Zugmittel ist bevorzugt eine Kette, ein Riemen oder ein Seil.

Mittels derartiger Zugmittel und/oder Aufnahmeelemente kann vorzugsweise erreicht werden, dass Lagergutträger an einer Vielzahl von Positionen und/oder mit einem beliebigen Abstand zueinander im Schacht gehalten werden können und/oder durch den Schacht, vorzugsweise vertikal, bewegt werden können. Somit kann im Schacht eine Lagerdichte, vorzugsweise dynamisch, an eine effektive Gesamthöhe eines Lagergutträgers (d.h. Höhe Lagergutträger inkl. Ware bzw. Lagergut) angepasst werden.

Das erste und/oder zweite Zugmittel kann um einen oberen Umlenkmechanismus verlaufen, vorzugsweise wobei der obere Umlenkmechanismus im Bereich eines oberen Endes des Schachts angeordnet ist. Zusätzlich oder alternativ kann das erste und/oder zweite Zugmittel um einen unteren Umlenkmechanismus verlaufen, vorzugsweise wobei der untere Umlenkmechanismus im Bereich eines unteren Endes des Schachts angeordnet ist. Bevorzugt ist das erste und/oder zweite Zugmittel ein umlaufendes Zugmittel, welches um den oberen und den unteren Umlenkmechanismus läuft. Weiter bevorzugt sind die ersten und/oder zweiten Aufnahmeelemente umlaufend entlang des gesamten jeweiligen ersten bzw. zweiten Zugmittels angeordnet, besonders bevorzugt in regelmäßigem Abstand zueinander.

Bevorzugt ist der obere und/oder untere Umlenkmechanismus eine Umlenkrolle bzw. Umlenkscheibe, vorzugsweise eine Riemenscheibe, oder ein Kettenritzel. Das umlaufende Zugmittel weist vorzugsweise eine Innenseite, die zumindest teilweise mit dem oberen und dem unteren Umlenkmechanismus in Kontakt steht, und eine gegenüberliegende Außenseite auf, von der die ersten bzw. zweiten Aufnahmeelemente hervorstehen, vorzugsweise in einem Winkel zwischen 30° und 120°, besonders bevorzugt normal, d.h. 90° ± 5°, zur Außenseite.

Bevorzugt ist das umlaufende Zugmittel an einem Rand des Schachts angeordnet. Weiter bevorzugt bildet ein erster Teil des Zugmittels eine vertikal durch den Schacht verlaufende Förderstrecke zwischen dem unteren und dem oberen Umlenkmechanismus, wobei die ersten und/oder zweiten Aufnahmeelemente des ersten Teils vorzugsweise in Richtung einer vertikalen Schachtmittelebene orientiert sind. Zusätzlich oder alternativ kann ein zweiter Teil des Zugmittels eine Rückförderstrecke zwischen dem oberen und dem unteren Umlenkmechanismus bilden, wobei die ersten und/oder zweiten Aufnahmeelemente des zweiten Teils bevorzugt in Richtung weg von der vertikalen Schachtmittelebene orientiert sein können. Mittels einem oder mehrerer dieser Merkmale kann zumindest ein robuster und/oder kostengünstiger Aufbau von Schacht, Aufnahmeelement und/oder Zugmittel erreicht werden. Tragfähigkeiten, Zugänglichkeit und/oder störungsarmer Betrieb kann verbessert werden.

Bevorzugt ist das erste Zugmittel zumindest teilweise in einem ersten Eckpfeiler angeordnet und/oder das zweite Zugmittel ist zumindest teilweise in einem zweiten Eckpfeiler angeordnet. Der erste und/oder zweite Eckpfeiler weist bevorzugt eine Vertikalführung für das erste und/oder zweite Zugmittel auf. Weiter bevorzugt bildet der erste und/oder zweite Eckpfeiler einen Eckpfeiler für mindestens zwei, weiter bevorzugt für vier an den Eckpfeiler angrenzende Schächte.

Bevorzugt kann die Mehrzahl vertikaler Schächte ihrer Bauhöhe nach in unterschiedliche Segmente einteilbar sein, wobei die Bauhöhe aller Schächte eines Segments gleich hoch ist. In zumindest einem Segment beträgt die Bauhöhe bevorzugt mindestens 3 m, weiter bevorzugt mindestens 6 m, weiter bevorzugt mindestens 9 m und/oder bevorzugt maximal 30 m, weiter bevorzugt maximal 20 m, weiter bevorzugt maximal 15 m. Somit kann das Warenlagersystem in seiner Höhe bevorzugt flexibel an gegebene Deckenhöhen einer Halle angepasst werden und/oder das verfügbare Raumvolumen eines Hallenbereichs kann möglichst gut ausgenutzt werden.

Das System ist vorzugsweise konfiguriert, einen in den Schacht einzulagernden Lagergutträger mit einem der ersten und/oder zugeordneten zweiten Aufnahmeelemente zu koppeln, bevorzugt im Bereich bzw. auf Höhe des oberen und/oder unteren Umlenkmechanismus. Ferner ist das System vorzugsweise konfiguriert, einen aus dem Schacht auszulagernden Lagergutträger von einem der ersten und/oder zugeordneten zweiten Aufnahmeelemente zu entkoppeln, bevorzugt im Bereich bzw. auf Höhe des oberen und/oder unteren Umlenkmechanismus.

Bevorzugt weist das Warenlagersystem einen Lagergutaufnahmebereich unterhalb oder oberhalb des mindestens einen ersten und/oder zweiten Zugmittels auf, wobei das Warenlagersystem bevorzugt ausgebildet ist, einen von den zugeordneten Aufnahmeelementen gehaltenen Lagergutträger in den Lagergutaufnahmebereich abzugeben.

Bevorzugt ist das System ausgebildet, Lagergüter von oben in einen der Mehrzahl von Schächten einzubringen oder von oben aus einem der Mehrzahl von Schächten zu entnehmen, bevorzugt im Bereich bzw. auf Höhe des oberen Umlenkmechanismus. Dies kann vorteilhaft sein, da unterhalb der Schächte dann u.U. kein Freiraum mehr benötigt wird und die Schächte (und damit die über die Zugmittel auf die Schächte übertragenen Gewichtskräfte der eingelagerten Lagergüter) direkt auf dem Boden abgestützt werden können. In dieser bevorzugten Variante kann ein Verfahrbereich für ein Bediengerät, bspw. ein Raumportal, oberhalb der Schächte, insbesondere oberhalb des oberen Umlenkmechanismus, vorgesehen sein.

Alternativ oder zusätzlich ist das System bevorzugt ausgebildet, Lagergüter von unten in einen der Mehrzahl von Schächten einzubringen oder von unten aus einem der Mehrzahl von Schächten zu entnehmen, bevorzugt im Bereich bzw. auf Höhe des unteren Umlenkmechanismus. Hierfür werden die Schächte in der Regel auf einem Gestell aufgestützt, welches einen Freiraum zwischen Schachtunterkante und Boden gewährleistet, in dem das Bediengerät verfahrbar sein kann. In dieser bevorzugten Variante kann ein Verfahrbereich für ein Bediengerät unterhalb der Schächte, insbesondere unterhalb des unteren Umlenkmechanismus, vorgesehen sein. Vorteile können sich hierbei u.a. auch dadurch ergeben, dass ein Bediengerät eingesetzt werden kann, welches auch außerhalb der Mehrzahl von Schächten auf demselben Boden verfahrbar ist.

Das Warenlagersystem weist vorzugsweise ferner eine Vermessungseinheit und/oder eine Freiraumkontrolleinheit auf. Die Vermessungseinheit und/oder die Freiraumkontrolleinheit ist weiter bevorzugt ausgebildet, einen oder mehrere der folgenden Werte zu bestimmen und/oder einen Lagergutträger basierend auf einem oder mehrerer der folgenden Werte in ein vorgegebenes Höhenraster einzuordnen:
die Höhe eines Lagergutträgers;
die Höhe von auf dem Lagergutträger befindlichen Lagergütern; und/oder
die Gesamthöhe eines mit Lagergut beladenen Lagergutträgers, vorzugsweise zuzüglich eines definierten Abstandswerts.

Mit anderen Worten ist die Vermessungseinheit und/oder die Freiraumkontrolleinheit bevorzugt ausgebildet, die effektive Gesamthöhe eines Lagergutträgers zu bestimmen und/oder einen Lagergutträger basierend auf seiner effektiven Gesamthöhe in ein vorgegebenes Höhenraster einzuordnen.

Bevorzugt weist das Warenlagersystem ferner mindestens einen lösbaren Arretiermechanismus an jedem der Schächte auf, wobei der Arretiermechanismus eine Bewegung des ersten und/oder zweiten Zugmittels und/oder eine Bewegung des oberen und/oder unteren Umlenkmechanismus in zumindest eine Richtung hemmt, bevorzugt unterbindet (z.B. eine Rotation verhindert). Bevorzugt ist der Arretiermechanismus ausgebildet, wenn die Arretierung aktiv ist, eine Bewegung der ersten und/oder zweiten Aufnahmeelemente nach unten zu hemmen, bevorzugt zu unterbinden. Mittels eines Arretiermechanismus kann vorzugsweise ein Verfahrbereich unterhalb der Schächte freigehalten und/oder eine Bedienung des Warenlagersystems von unten ermöglicht werden.

Zusätzlich oder alternativ ist der Arretiermechanismus bevorzugt ausgebildet, wenn die Arretierung gelöst ist, eine Bewegung der ersten und/oder zweiten Aufnahmeelemente nach unten zuzulassen.

Bevorzugt weist der Arretiermechanismus eine entsperrbare Sperrklinke auf. Weiter bevorzugt weist die entsperrbare Sperrklinke ein Sperrrad und eine Sperrklinke auf, wobei das Sperrrad vorzugsweise drehfest mit dem oberen und/oder unteren Umlenkmechanismus gekoppelt ist, wobei die Sperrklinke mit dem Schacht, insbesondere mit einem Eckpfeiler des Schachts, gekoppelt ist, und wobei das Sperrrad und die Sperrklinke ausgebildet sind, eine Bewegung des ersten Teils des Zugmittels in eine vertikale Richtung nach oben zuzulassen und eine Bewegung des ersten Teils des Zugmittels in eine vertikale Richtung nach unten zu hemmen, bevorzugt zu unterbinden. Mit anderen Worten können Sperrrad und Sperrklinke ausgebildet sein, eine Bewegung der Aufnahmeelemente innerhalb des Schachts nach oben zuzulassen und eine Bewegung der Aufnahmeelemente innerhalb des Schachts nach unten zu hemmen, bevorzugt zu unterbinden. Bevorzugt ist der Arretiermechanismus von dem Bediengerät oder durch die Steuerung lösbar, weiter bevorzugt ist der Arretiermechanismus von dem Bediengerät mechanisch betätigbar.

Bevorzugt weist das System an jedem Schacht der Mehrzahl von Schächten eine Schnittstelle auf. Die Schnittstelle ist bevorzugt eine mechanische Schnittstelle, weiter bevorzugt eine Klauenkupplung, eine Zahnradkupplung oder eine Reibkupplung. Die Schächte, insbesondere eine Mehrzahl der Schächte, bevorzugt alle Schächte, weisen bevorzugt keinen Antriebsmotor zur Bewegung des ersten und/oder zweiten Zugmittels auf. Insbesondere weisen die Zugmittel und/oder Aufnahmeelemente selbst bevorzugt keinen Antriebsmotor auf.

Vorzugsweise kann das erste und/oder zweite Zugmittel mittels des Bediengeräts angetrieben werden. Somit kann ein Antrieb des Bediengeräts genutzt werden, um an einem gewünschten, d.h. angefahrenen Schacht, das Zugmittel zu bewegen und die Zahl an kosten- und wartungsintensiven sowie u.U. fehleranfälligen Antrieben im Lager kann reduziert werden.

Das Bediengerät kann vorzugsweise ein Flurförderzeug, ein Raumportal, ein fahrerloses Transportfahrzeug (FTF) ein schienengebundenes Fahrzeug, ein Autonome Mobile Robot (AMR) oder ein Automated Guided Vehicle (AGV) sein. Das Bediengerät kann dazu ausgebildet sein, einen und/oder mehrere Lagergutträger aufzunehmen, zu puffern und/oder abzugeben, vorzugsweise mittels einer Hub- und/oder Senkeinheit nach oben und/oder unten abzugeben.

Bevorzugt weist das Warenlagersystem ferner einen Lagergutträger auf, welcher zumindest in einem Randbereich eine Dicke aufweist, die kleiner ist als der vertikale Abstand zweier benachbarter erster Aufnahmeelemente.

Mit dem geschilderten Warenlagersystem kann ein blocklagerartiges System realisiert werden, welches deutliche Verbesserungen zumindest hinsichtlich der Lagerdichte und Durchlüftung der Lagerplätze aufweist. Ähnlich wie bei einem Blocklager, ist in der Regel zunächst immer nur der oberste bzw. unterste Lagergutträger für ein Bediengerät zugänglich (je nachdem, ob das Bediengerät oberhalb oder unterhalb der Schächte verfährt).

Die Zugänglichkeit zu einzelnen Lagergütern kann weiter verbessert werden, indem das erste und/oder zweite Zugmittel nicht nur lediglich in separaten Schächten angeordnet werden, sondern die Zugmittel derart angeordnet sind, dass ein erstes und ein zweites Zugmittel jeweils mindestens zwei Schächte durchlaufen und/oder jeweils ein erstes und ein zweites Zugmittel benachbarter Schächte miteinander gekoppelt sind. Somit können Lagergüter von einem ersten Schacht in einen benachbarten zweiten Schacht überführt werden und somit ein spezifisches Lagergut gewählt werden, welches aus dem aus zwei Schächten bestehenden Schacht-Teilsystem entnommen werden soll. Bevorzugt weist lediglich der erste der beiden Schächte die Schnittstelle auf, die dazu ausgebildet ist, das erste Zugmittel mechanisch mit dem Antrieb des Bediengeräts zu koppeln. Der zweite Schacht weist bevorzugt keine Schnittstelle auf, die dazu ausgebildet ist, das erste Zugmittel mechanisch mit dem Antrieb des Bediengeräts zu koppeln.

Eine derartige Funktion lässt sich im Rahmen des ersten Aspekts der vorliegenden Erfindung erreichen, indem ein erster und ein zweiter Schacht aus der Mehrzahl von Schächten aneinander angrenzend angeordnet sind und das erste Zugmittel des ersten Schachts mit dem ersten Zugmittel des zweiten Schachts gekoppelt ist, sodass eine Bewegung des ersten Zugmittels des ersten Schachts in eine erste Richtung eine Bewegung des ersten Zugmittels des zweiten Schachts in eine der ersten Richtung entgegengesetzte zweite Richtung veranlasst. Alternativ oder zusätzlich kann das zweite Zugmittel des ersten Schachts mit dem zweiten Zugmittel des zweiten Schachts gekoppelt sein, sodass eine Bewegung des zweiten Zugmittels des ersten Schachts in eine erste Richtung eine Bewegung des zweiten Zugmittels des zweiten Schachts in eine der ersten Richtung entgegengesetzte zweite Richtung veranlasst. Das erste Zugmittel des ersten Schachts und das erste Zugmittel des zweiten Schachts können vorzugsweise mittels eines einzelnen Zugmittels realisiert werden. Das zweite Zugmittel des ersten Schachts und das zweite Zugmittel des zweiten Schachts können vorzugsweise mittels eines einzelnen Zugmittels realisiert werden.

In anderen Worten kann das erste Zugmittel des ersten Schachts und das erste Zugmittel des zweiten Schachts durch ein durchgehendes Zugmittel (z.B. eine durchgehende Kette oder einen durchgehenden Riemen, etc.) bereitgestellt sein, welches sich durch den ersten und den zweiten Schacht erstreckt. Entsprechendes gilt für die zweiten Zugmittel.

Bevorzugt ist das erste und/oder zweite Zugmittel ausgebildet, einen Lagergutträger von dem ersten Schacht in den zweiten Schacht zu überführen, wobei weiter bevorzugt, der Lagergutträger bei der Überführung im Bereich des oberen und/oder unteren Umlenkmechanismus zumindest teilweise horizontal bewegt wird, beispielweise entlang der oberen und/oder unteren Umlenkmechanismen. Das System kann weiter bevorzugt für einen Ein- bzw. Auslagerprozess sowohl von oben als auch und von unten ausgebildet sein. Somit kann eine sehr gute Zugänglichkeit erreicht werden, die noch weiter verbessert werden kann, wenn das Schacht-System für eine Bedienung von oben und von unten gestaltet ist.

In einem zweiten Aspekt betrifft die vorliegende Erfindung einen Lagergutträger für ein Warenlagersystem nach dem ersten Aspekt der Erfindung. Der Lagergutträger weist bevorzugt eine rechteckige oder quadratische Grundfläche auf mit einer Kantenlänge von maximal 1400 mm, weiter bevorzugt maximal 1000 mm. Zusätzlich oder alternativ kann der Lagergutträger in einem Randbereich eine Dicke von maximal 150 mm aufweisen, vorzugsweise maximal 200 mm vorzugsweise maximal 100 mm, vorzugsweise maximal 80 mm, vorzugsweise maximal 60 mm, vorzugsweise maximal 40 mm, vorzugsweise maximal 20 mm, vorzugsweise maximal 10 mm, vorzugsweise maximal 5 mm.

Der Lagergutträger ist bevorzugt ein Tablar, ein Tray, oder eine Palette, beispielsweise EURO-Palette. Bevorzugt ist der Lagergutträger als annähernd flaches Tablar ausgestaltet, auf dem Ware, beispielsweise in Form von Kisten oder Kartons abgelegt und/oder gestapelt werden kann. Alternativ kann der Lagergutträger eine Box, eine Kiste oder ein sonstiger Behälter sein, wobei der Lagergutträger vorzugsweise Seitenwände aufweist, wobei die Seitenwände weiter bevorzugt klappbar mit der Grundfläche verbunden sind.

Bevorzugt ist der Lagergutträger ausgelegt, Lagergut mit einem Gewicht von mindestens 1 kg, bevorzugt mindestens 5 kg, weiter bevorzugt mindestens 10 kg, weiter bevorzugt mindestens 30 kg, weiter bevorzugt mindestens 50 kg, weiter bevorzugt mindestens 70 kg aufzunehmen.

Bevorzugt weist der Lagergutträger in zumindest einem Randbereich eine Dicke (d.h. vertikale Erstreckung bzw. Höhe) auf, die kleiner ist als der vertikale Abstand zweier benachbarter erster Aufnahmeelemente des Warenlagersystems nach dem ersten Aspekt der Erfindung.

In einem dritten Aspekt betrifft die Erfindung ein Bediengerät für ein Warenlagersystem nach dem ersten Aspekt der Erfindung, wobei das Bediengerät dazu ausgebildet ist, einen und/oder mehrere Lagergutträger, bevorzugt Lagergutträger nach dem zweiten Aspekt der Erfindung aufzunehmen, zu puffern und/oder abzugeben, bevorzugt nach oben und/oder unten abzugeben.

Das Bediengerät ist bevorzugt dazu ausgebildet, oberhalb und/oder unterhalb der Vielzahl von Schächten zu verfahren, bevorzugt in mindestens zwei senkrecht zueinander orientierten Richtungen einer horizontalen Ebene. Das Bediengerät kann vorzugsweise ein Flurförderzeug, ein Transportfahrzeug und/oder ein Warenumschlagsystem sein. Das Bediengerät kann frei verfahrbar oder geführt sein. Insbesondere kann das Bediengerät auch raumgebunden sein und beispielsweise lediglich eine bewegliche Transporteinheit aufweisen.

Das Bediengerät kann beispielsweise ein Raumportal, ein Deckenkran oder allgemein ein Hubzeug sein. Bevorzugt ist das Bediengerät ein fahrerloses Transportfahrzeug (FTF) ein Autonome Mobile Robot (AMR) oder ein Automated Guided Vehicle (AGV).

Bevorzugt weist das Bediengerät ein drittes Zugmittel auf, das im Bediengerät vertikal bewegbar ist, wobei das dritte Zugmittel mehrere vertikal beabstandete dritte Aufnahmeelemente aufweist, die jeweils dazu ausgebildet sind, mindestens einen Lagergutträger zu halten, wobei die dritten Aufnahmeelemente entlang des dritten Zugmittels angeordnet und mittels des dritten Zugmittels im Bediengerät vertikal bewegbar sind.

Vorzugsweise sind mindestens 5, mindestens 10 oder mindestens 20 Aufnahmeelemente entlang des dritten Zugmittels angeordnet.

Das Bediengerät kann ferner eine Hubsteuerung aufweisen, die ausgebildet ist, eine Bewegung des dritten Zugmittels zu veranlassen, sodass sich eine jeweilige vertikale Position der dritten Aufnahmeelemente entlang einer Vertikalachse des Bediengeräts um eine definierte Distanz verändert. Bevorzugt ist die Hubsteuerung ausgebildet, die definierte Distanz abhängig von einer effektiven Gesamthöhe eines Lagergutträgers (d.h. einer Höhe eines Lagergutträgers und/oder einer Höhe eines auf dem Lagergutträger befindlichen Lagerguts) festzulegen.

Das Bediengerät kann ferner ein viertes Zugmittel aufweisen, das im Bediengerät vertikal bewegbar ist, wobei das vierte Zugmittel mehrere vertikal beabstandete vierte Aufnahmeelemente aufweist, die jeweils dazu ausgebildet sind, mindestens einen Lagergutträger zu halten, wobei die vierten Aufnahmeelemente entlang des vierten Zugmittels angeordnet und mittels des vierten Zugmittels im Bediengerät vertikal bewegbar sind. Bevorzugt ist jedes vierte Aufnahmeelement einem gegenüberliegenden dritten Aufnahmeelement zugeordnet, wobei die einander zugeordneten Aufnahmeelemente weiter bevorzugt in einer gemeinsamen horizontalen Ebene liegen. Bevorzugt kann das Bediengerät einen Bediengerät-Schacht aufweisen, in dem die dritten und vierten Aufnahmeelemente einander gegenüberliegend angeordnet sind.

Das dritte und/oder vierte Zugelement kann sich durch den und/oder entlang des Bediengerät-Schachts bewegen.

Bevorzugt sind die dritten und/oder vierten Aufnahmeelemente in regelmäßigen Abständen entlang des dritten und/oder vierten Zugmittels angeordnet, wobei ein Abstand zwischen zwei benachbarten dritten Aufnahmeelementen und/oder zwischen zwei benachbarten vierten Aufnahmemitteln vorzugsweise mindestens 20 mm, weiter bevorzugt mindestens 50 mm, weiter bevorzugt mindestens 80 mm beträgt und/oder bevorzugt maximal 2000 mm, weiter bevorzugt maximal 1500 mm, weiter bevorzugt maximal 1000 mm, weiter bevorzugt maximal 500 mm, weiter bevorzugt maximal 350 mm, weiter bevorzugt maximal 250 mm, weiter bevorzugt maximal 150 mm beträgt.

Bevorzugt sind das dritte und das vierte Zugmittel simultan bewegbar. Bevorzugt sind das dritte und das vierte Zugmittel mechanisch gekoppelt und/oder die Hubsteuerung ist ausgebildet, eine simultane Bewegung des dritten und vierten Zugmittels zu veranlassen. Somit kann ein Hubmechanismus gestaltet werden, der gewährleistet, dass ein Lagergutträger sicher im Tarnsportfahrzeug vertikal bewegt werden kann. Bevorzugt kann es dadurch ermöglicht werden, dass auch im Bediengerät, vorzugsweise im Bediengerät-Schacht, mehrere Lagergutträger gehalten werden können.

Bevorzugt ist die Steuerung ausgebildet, das erste und/oder zweite Zugmittel zumindest zu bestimmten Zeitpunkten simultan mit dem dritten und/oder vierten Zugmittel zu bewegen. Das erste und/oder zweite Zugmittel können dabei mit der gleichen Geschwindigkeit wie das dritte und/oder vierte Zugmittel bewegt werden.

Bevorzugt weist das Bediengerät eine Bediengerät-Schnittstelle zur Kopplung mit der Schnittstelle des Warenlagersystems auf. Die Bediengerät-Schnittstelle ist bevorzugt dazu ausgebildet, das erste und/oder zweite Zugmittel des Warenlagersystems mittels eines Antriebs des Bediengeräts anzutreiben. Bevorzugt weist das Bediengerät einen Antrieb auf, der ausgebildet ist, das erste und/oder zweite Zugmittel am Schacht anzutreiben, bevorzugt wenn das Bediengerät mit der Schnittstelle gekoppelt ist. Der Antrieb ist vorzugsweise auch dazu ausgebildet, das Bediengerät anzutreiben.

Bevorzugt ist das Bediengerät ausgebildet, sich an einem Schacht aus der Vielzahl von Schächten mit der Schnittstelle zu koppeln, bevorzugt wenn das Bediengerät, weiter bevorzugt der Bediengerät-Schacht, sich über oder unter einem Schacht des Warenlagersystems nach dem ersten Aspekt der Erfindung befindet. Bevorzugt weist das Bediengerät eine mechanische Fahrzeug-Schnittstelle, bevorzugt eine Klauenkupplung oder eine Reibkupplung auf. Bevorzugt kann die Kopplung mittels dieser mechanischen Fahrzeug-Schnittstelle erfolgen.

Die Hubsteuerung kann ausgebildet sein, eine Datenverbindung mit einer Steuerung des Warenlagersystems herzustellen und basierend auf einem Datenaustausch mit der Steuerung des Warenlagersystems gesteuert zu werden. Bevorzugt ist die Hubsteuerung ausgebildet, eine Bewegung des dritten und/oder vierten Zugmittels synchron zu einer Bewegung des ersten und/oder zweiten Zugmittels zu veranlassen, bevorzugt wenn das Bediengerät über die Schnittstelle mit einem Schacht aus der Vielzahl von Schächten gekoppelt ist. Bevorzugt sind die dritten und/oder vierten Aufnahmeelemente geeignet und ausgebildet, einen Lagergutträger am Bediengerät zu halten und in einen Schacht aus der Mehrzahl von Schächten (d.h. in einen Schacht des Warenlagersystems nach dem ersten Aspekt der Erfindung) einzubringen, vorzugsweise durch Bewegung der dritten und/oder vierten Aufnahmeelemente in eine vertikale Richtung, weiter bevorzugt nach oben, weiter bevorzugt wenn das Bediengerät über die Schnittstelle mit dem Schacht gekoppelt ist. Mit ein oder mehreren der genannten Maßnahmen kann die Effizienz eines Einlagerungs- bzw. Auslagerungsvorgangs gesteigert und/oder notwendige Umlagerungsprozesse können minimiert werden.

Bevorzugt sind die dritten und/oder vierten Aufnahmeelemente Stifte, Platten, Gabeln, Nuten oder Löcher.

Das dritte und/oder vierte Zugmittel ist bevorzugt eine Kette, ein Riemen oder ein Seil. Somit können Zugmittel, Aufnahmeelemente und/oder Lagergutträger robust und/oder kostengünstig sein.

Bevorzugt verläuft das dritte und/oder vierte Zugmittel um einen oberen Umlenkmechanismus. Der obere Umlenkmechanismus ist vorzugsweise an einem oberen Ende des Bediengeräts angeordnet. Zusätzlich oder alternativ kann das dritte und/oder vierte Zugmittel um einen unteren Umlenkmechanismus verlaufen, wobei der untere Umlenkmechanismus vorzugsweise an einem unteren Ende des Bediengeräts angeordnet ist. Der Umlenkmechanismus kann eine Umlenkrolle bzw. Umlenkscheibe, bevorzugt eine Riemenscheibe, oder ein Kettenritzel sein.

Das dritte und/oder vierte Zugmittel kann ein umlaufendes Zugmittel sein, welches um den oberen und den unteren Umlenkmechanismus verläuft, wobei die dritten und/oder vierten Aufnahmeelemente vorzugsweise umlaufend entlang des gesamten dritten und/oder vierten Zugmittels, weiter bevorzugt in regelmäßigem Abstand zueinander, angeordnet sind.

Bevorzugt ist das Bediengerät konfiguriert, einen in einen Schacht einzulagernden Lagergutträger mit einem der dritten und/oder zugeordneten vierten Aufnahmeelemente vertikal zu einer Oberseite oder Unterseite des Bediengeräts zu fördern und an eines der ersten und/oder zugeordneten zweiten Aufnahmeelemente zu übergeben, vorzugsweise im Bereich des oberen und/oder unteren Umlenkmechanismus, weiter bevorzugt wenn das Bediengerät über die Schnittstelle mit dem Schacht gekoppelt ist. Bevorzugt kann das Bediengerät konfiguriert sein, einen aus dem Schacht auszulagernden Lagergutträger von einem der ersten und/oder zugeordneten zweiten Aufnahmeelemente zu entkoppeln, vorzugsweise im Bereich des oberen und/oder unteren Umlenkmechanismus, und an eines der dritten und/oder zugeordneten vierten Aufnahmeelemente zu übergeben, bevorzugt wenn das Bediengerät über die Schnittstelle mit dem Schacht gekoppelt ist.

Das Bediengerät kann ferner eine Vermessungseinheit und/oder eine Freiraumkontrolleinheit aufweisen, wobei die Vermessungseinheit und/oder die Freiraumkontrolleinheit bevorzugt ausgebildet ist, einen oder mehrere der folgenden Werte zu bestimmen und/oder einen Lagergutträger basierend auf einem oder mehrerer der folgenden Werte in ein vorgegebenes Höhenraster einzuordnen: die Höhe eines Lagergutträgers; die Höhe von auf dem Lagergutträger befindlichen Lagergütern; und/oder die Gesamthöhe eines mit Lagergut beladenen Lagergutträgers. Mit anderen Worten ist die Vermessungseinheit und/oder die Freiraumkontrolleinheit bevorzugt ausgebildet, zumindest die effektive Gesamthöhe eines Lagergutträgers zu bestimmen und/oder einen Lagergutträger basierend auf zumindest seiner effektiven Gesamthöhe in ein vorgegebenes Höhenraster einzuordnen.

Bevorzugt ist das Bediengerät und/oder die Bediengerät-Schnittstelle ferner ausgebildet, an einem Schacht aus der Mehrzahl von Schächten eine elektrische Verbindung mit einem elektrischen Stromnetz herzustellen. Die elektrische Verbindung kann dazu geeignet sein, einen Akku des Bediengeräts zu laden und/oder Energie für den Hubmechanismus bereitzustellen. Dadurch kann Kapazität am Fahrzeugakku gespart werden und/oder das Fahrzeug kann ohne Ladepausen und/oder Akkuwechsel über zumindest 8 Stunden hinweg, vorzugsweise für zumindest 12 Stunden betrieben werden.

Bevorzugt ist das Bediengerät ausgebildet, einen Arretiermechanismus des Warenlagersystems am Schacht zu lösen, vorzugsweise wenn das Bediengerät mit der Schnittstelle des Schachts gekoppelt ist. Der Arretiermechanismus kann ein Arretiermechanismus gemäß dem entsprechenden Merkmal nach dem ersten Aspekt der Erfindung sein.

Das Bediengerät kann insofern eine Entriegelungsvorrichtung und/oder ein Betätigungselement aufweisen, der bzw. das dazu ausgebildet ist, den Arretiermechanismus des Schachts zu lösen.

In einem vierten Aspekt betrifft die Erfindung ein Verfahren zum Betrieb eines Warenlagersystems, vorzugsweise des Warenlagersystems nach dem ersten Aspekt der Erfindung, aufweisend einen Einlagerungsprozess mit den Schritten:
a. Bestimmung der Gesamthöhe eines einzulagernden Lagergutträgers;
b. Transport des einzulagernden Lagergutträgers zu einem Zielschacht aus der Mehrzahl von Schächten durch ein Bediengerät, vorzugsweise durch ein Bediengerät nach dem dritten Aspekt der Erfindung;
c. Koppeln des Bediengeräts mit der Schnittstelle des Zielschachts;
d. Bewegen des ersten und/oder zweiten Zugmittels, sodass sich ein erstes und/oder zugeordnetes zweites Aufnahmeelement im Schacht um eine definierte Distanz vertikal bewegt, wobei die definierte Distanz abhängig ist von der Gesamthöhe des einzulagernden Lagergutträgers;
e. Koppeln des Lagergutträgers mit dem ersten und/oder zweiten Aufnahmeelement.

Bevorzugt ist die Gesamthöhe eines einzulagernden Lagergutträgers definiert als das Maximum aus: einer Höhe von Unterkante Lagergutträger zu Oberkante Lagergut; oder einer Höhe von Unterkante Lagergutträger zu Oberkante Lagergutträger. Mit anderen Worten ist die Gesamthöhe eines einzulagernden Lagergutträgers bevorzugt die effektive Gesamthöhe des Lagergutträgers.

Bevorzugt umfasst die Bestimmung der Gesamthöhe in Schritt a. eine oder mehrere der folgenden Aktivitäten: Eingabe, Einordnung in ein vordefiniertes Höhenraster, und/oder Messung. Die Bestimmung der Gesamthöhe in Schritt a. erfolgt bevorzugt mittels einer Vermessungseinheit und/oder Freiraumkontrolle.

Bevorzugt ist das Bediengerät ein Bediengerät nach dem dritten Aspekt der Erfindung. Weiter bevorzugt erfolgt Schritt d. synchron mit einer Bewegung des dritten und/oder vierten Zugmittels.

Bevorzugt ist das Verfahren geeignet für eine Einlagerung von unten in die Schächte. Anders ausgedrückt erfolgt der Einlagerungsprozess bevorzugt von unten in die Schächte. Das Bediengerät verfährt bevorzugt unterhalb der Mehrzahl von Schächten. Weiter bevorzugt sind ein oder mehrere der folgenden Bedingungen erfüllt:
- Schritt c. erfolgt vor Schritt d.;
- Schritt d. erfolgt vor Schritt e.;
- Schritt e. erfolgt im Bereich des unteren Umlenkmechanismus (wobei der untere Umlenkmechanismus in einem Bereich eines unteren Endes des Schachts angeordnet ist);
- Schritt e. umfasst ein Vorbeibewegen des Lagergutträgers am unteren Umlenkmechanismus.

Das Verfahren weist bevorzugt ferner den Schritt auf:
f. Lösen des Arretiermechanismus, bevorzugt mittels des Bediengeräts.

Bevorzugt ist das Verfahren, alternativ oder zusätzlich, geeignet für eine Einlagerung von oben in die Schächte. Anders ausgedrückt kann der Einlagerungsprozess von oben in die Schächte erfolgen. Das Bediengerät verfährt bevorzugt oberhalb der Vielzahl von Schächten.

Weiter bevorzugt sind ein oder mehrere der folgenden Bedingungen erfüllt:
- Schritt c. erfolgt vor den Schritten d. und e.;
- Schritt e. erfolgt vor Schritt d.;
- Schritt f. erfolgt vor Schritt d.;
- Schritt e. erfolgt im Bereich des oberen Umlenkmechanismus
- Schritt e. umfasst ein Vorbeibewegen des Lagergutträgers am oberen Umlenkmechanismus.

In einem fünften Aspekt betrifft die Erfindung ein Verfahren zum Betrieb eines Warenlagersystems, vorzugsweise des Warenlagersystems nach dem ersten Aspekt der Erfindung, aufweisend einen Auslagerungsprozess mit den Schritten:
a. Koppeln des Bediengeräts mit dem Zielschacht über die Schnittstelle;
b. Bewegen des ersten und/oder zweiten Zugmittels, sodass sich ein erstes und/oder zugeordnetes zweites Aufnahmeelement im Schacht um eine definierte Distanz vertikal bewegt, wobei die definierte Distanz abhängig ist von der Gesamthöhe eines auszulagernden Lagergutträgers;
c. Entkoppeln des Lagergutträgers mit dem ersten und/oder zweiten Aufnahmeelement.

Bevorzugt ist die Gesamthöhe des auszulagernden Lagergutträgers definiert, als das Maximum aus: einer Höhe von Unterkante Lagergutträger zu Oberkante Lagergut; oder einer Höhe von Unterkante Lagergutträger zu Oberkante Lagergutträger. Mit anderen Worten ist die Gesamthöhe des auszulagernden Lagergutträgers bevorzugt die effektive Gesamthöhe des Lagergutträgers.

Bevorzugt ist das Bediengerät ein Bediengerät nach dem dritten Aspekt der Erfindung. Weiter bevorzugt erfolgt Schritt b. synchron mit einer Bewegung des dritten und/oder vierten Zugmittels.

Bevorzugt ist das Verfahren geeignet für eine Auslagerung von oben aus den Schächten. Anders ausgedrückt erfolgt der Auslagerungsprozess bevorzugt von oben aus den Schächten. Das Bediengerät verfährt bevorzugt oberhalb der Vielzahl von Schächten. Weiter bevorzugt sind ein oder mehrere der folgenden Bedingungen erfüllt:
- Schritt a. erfolgt vor Schritt b.;
- Schritt b. erfolgt vor Schritt c.;
- Schritt c. erfolgt im Bereich des oberen Umlenkmechanismus (wobei der obere Umlenkmechanismus in einem Bereich eines oberen Endes des Schachts angeordnet ist);
- Schritt c. umfasst ein Vorbeibewegen des Lagergutträgers am oberen Umlenkmechanismus.

Alternativ oder zusätzlich ist das Verfahren für eine Auslagerung von unten aus den Schächten geeignet. Anders ausgedrückt erfolgt der Auslagerungsprozess bevorzugt von unten aus den

Schächten. Das Bediengerät verfährt bevorzugt unterhalb der Mehrzahl von Schächten. Das Verfahren weist bevorzugt ferner den Schritt auf:
d. Lösen des Arretiermechanismus, bevorzugt mittels des Bediengeräts.

Weiter bevorzugt sind ein oder mehrere der folgenden Bedingungen erfüllt:
- Schritt a. erfolgt zuerst;
- Schritt d. erfolgt vor Schritt b.;
- Schritt b. erfolgt vor Schritt c.;
- Schritt c. erfolgt im Bereich des unteren Umlenkmechanismus (wobei der untere Umlenkmechanismus in einem Bereich eines unteren Endes des Schachts angeordnet ist);
- Schritt c. umfasst ein Vorbeibewegen des Lagergutträgers am unteren Umlenkmechanismus.

Mittels einem Verfahren nach dem vierten und/oder fünften Aspekt der Erfindung kann ein Warenlagersystem betrieben werden, wobei der Betrieb insbesondere hinsichtlich Lagerdichte und/oder Flexibilität des Lagers optimiert sein kann.

Mittels der vorliegenden Erfindung gemäß ein oder mehrerer der geschilderten Aspekte und/oder Merkmale kann ein Warenlagersystem realisiert werden, welches im Vergleich zu bekannten Systemen, insbesondere verglichen zu herkömmlichen Blocklagern, ein oder mehrere der folgenden Vorteile aufweist: höhere Lagerdichte, bessere Durchlüftung des Lagers, höhere Flexibilität, höhere Kapazität, sicherer Betrieb, höhere Schacht- bzw. Blocklagerhöhen, verbesserter Brandschutz, weniger Umlagerungsprozesse.

Im Vergleich zu herkömmlichen Blocklagern werden Lagergutträger im Warenlagersystem der vorliegenden Erfindung nicht aufeinandergestapelt. Die schachtbegrenzenden Strukturen, z.B. Eckpfeiler weisen stattdessen Zugmittel mit entsprechenden Aufnahmeelementen auf, an denen Lagergutträger abhängig von ihrer effektiven Gesamthöhe am Schacht, also im Blocklager, gehalten werden können. Der Lagergutträger kann also abhängig von seiner tatsächlichen Höhe, welche je nach Beladungszustand variieren kann, mit einem entsprechenden Aufnahmeelement am Zugmittel gekoppelt werden und daher an einer gewünschten Position im Schacht (relativ zu einem Schachtende und/oder einem anderen im Schacht befindlichen Lagergutträger) eingelagert sein. Mit anderen Worten können die Lagergutträger mit Ware entsprechend der tatsächlichen Ladungshöhe flexibel gelagert werden und müssen nicht gestapelt werden. Dadurch können auch verschiedene Produkte wie beispielsweise Kartons, Behälter, Trays, etc. auf dem Lagergutträger raumoptimiert im Blocklager gelagert werden. Ebenso ist eine Lagerung von Paletten möglich.

Die vorliegende Erfindung umfasst ferner die folgenden Aspekte:
1. Warenlagersystem, aufweisend:
   - eine Mehrzahl vertikaler Schächte,
      wobei jeder Schacht zur Aufnahme einer Mehrzahl vertikal übereinander angeordneter Lagergutträger ausgebildet ist,
      wobei jeder Schacht mindestens ein erstes Zugmittel aufweist, das vertikal durch den Schacht bewegbar ist, wobei das erste Zugmittel mehrere vertikal beabstandete erste Aufnahmeelemente aufweist, die jeweils dazu ausgebildet sind, mindestens einen der im Schacht aufzunehmenden Lagergutträger zu halten,
      wobei die ersten Aufnahmeelemente entlang des ersten Zugmittels angeordnet und mittels des ersten Zugmittels durch den Schacht bewegbar sind;
   - eine Steuerung, die ausgebildet ist, eine Bewegung eines bestimmten Zugmittels zu veranlassen, sodass sich eine vertikale Position der ersten Aufnahmeelemente des Zugmittels im jeweiligen Schacht um eine definierte Distanz verändert, wobei die Steuerung ausgebildet ist, die definierte Distanz abhängig von einer Höhe eines in den jeweiligen Schacht aufzunehmenden oder aus dem jeweiligen Schacht zu entnehmenden Lagergutträgers und/oder einer Höhe eines auf dem Lagergutträger befindlichen Lagerguts zu steuern;
   - mindestens ein Bediengerät mit mindestens einem Antrieb;
   - eine Schnittstelle, die dazu ausgebildet ist, das erste Zugmittel mechanisch mit dem Antrieb des Bediengeräts zu koppeln, um das erste Zugmittel mittels des Antriebs des Bediengeräts anzutreiben.
2. Warenlagersystem nach Aspekt 1,
   wobei jeder Schacht ferner mindestens ein zweites Zugmittel aufweist, das vertikal durch den Schacht bewegbar ist,
   wobei das zweite Zugmittel mehrere vertikal beabstandete zweite Aufnahmeelemente aufweist, die jeweils dazu ausgebildet sind, mindestens einen der im Schacht aufzunehmenden Lagergutträger zu halten,
   wobei die zweiten Aufnahmeelemente entlang des zweiten Zugmittels angeordnet und mittels des zweiten Zugmittels durch den Schacht bewegbar sind, vorzugsweise wobei die Schnittstelle das zweite Zugmittel mechanisch mit dem Antrieb des Bediengeräts koppelt, um das zweite Zugmittel mittels des Antriebs des Bediengeräts anzutreiben,
   vorzugsweise wobei:
      das zweite Zugmittel im Schacht gegenüberliegend zum ersten Zugmittel angeordnet ist, vorzugsweise diagonal gegenüberliegend, und/oder
      jedes zweite Aufnahmeelement einem gegenüberliegenden ersten Aufnahmeelement zugeordnet ist, wobei die einander zugeordneten Aufnahmeelemente ausgebildet sind, gemeinsam den im Schacht aufzunehmenden Lagergutträger zu halten, vorzugsweise wobei die zugeordneten Aufnahmeelemente in einer gemeinsamen horizontalen Ebene liegen.
3. Warenlagersystem nach Aspekt 1 oder 2,
   wobei die ersten und/oder zweiten Aufnahmeelemente in regelmäßigen Abständen entlang des ersten und/oder zweiten Zugmittels angeordnet sind,
   vorzugsweise wobei:
      ein Abstand zwischen zwei benachbarten Aufnahmeelementen an dem ersten und/oder zweiten Zugmittel mindestens 20 mm, bevorzugt mindestens 50 mm, weiter bevorzugt mindestens 80 mm beträgt, und/oder
      ein Abstand zwischen zwei benachbarten Aufnahmeelementen an dem ersten und/oder zweiten Zugmittel maximal 500 mm, bevorzugt maximal 350 mm, bevorzugt maximal 250 mm, weiter bevorzugt maximal 150 mm beträgt.
4. Warenlagersystem nach einem der Aspekte 2 oder 3,
   wobei das Warenlagersystem ausgebildet ist, das erste und das zweite Zugmittel eines jeweiligen Schachts simultan zu bewegen,
   vorzugsweise wobei:
   das erste und das zweite Zugmittel mechanisch gekoppelt sind, und/oder
   die Steuerung ausgebildet ist, eine simultane Bewegung des ersten und zweiten Zugmittels zu veranlassen.
5. Warenlagersystem nach einem der vorstehenden Aspekte, wobei die ersten und/oder zweiten Aufnahmeelemente ausgebildet sind, Lagergutträger vertikal durch den Schacht zu bewegen; und/oder
   wobei die ersten und/oder zweiten Aufnahmeelemente als Stifte, Platten, Winkel, Gabeln, Nuten, Klemmstücke, Haken, Bolzen, Mitnehmerelemente, Schraubenköpfe oder Löcher, insbesondere Freiräume im Zugmittel, ausgebildet sind.
6. Warenlagersystem nach einem der vorstehenden Aspekte, wobei das erste und/oder zweite Zugmittel eine Kette, ein Riemen oder ein Seil ist.
7. Warenlagersystem nach einem der vorstehenden Aspekte, wobei die Mehrzahl von Schächten direkt aneinander angrenzend angeordnet ist und/oder wobei keine Gassen für ein Bediengerät zwischen einzelnen Schächten aus der Mehrzahl von Schächten vorgesehen sind.
8. Warenlagersystem nach einem der vorstehenden Aspekte, wobei das erste und/oder zweite Zugmittel um einen oberen Umlenkmechanismus verläuft, vorzugsweise wobei der obere Umlenkmechanismus im Bereich eines oberen Endes des Schachts angeordnet ist.
9. Warenlagersystem nach einem der vorstehenden Aspekte, wobei das erste und/oder zweite Zugmittel um einen unteren Umlenkmechanismus verläuft, vorzugsweise wobei der untere Umlenkmechanismus im Bereich eines unteren Endes des Schachts angeordnet ist.
10. Warenlagersystem nach Aspekt 9, rückbezogen auf Aspekt 8, wobei das erste und/oder zweite Zugmittel ein umlaufendes Zugmittel ist, welches um den oberen und den unteren Umlenkmechanismus läuft, vorzugsweise wobei die ersten und/oder zweiten Aufnahmeelemente umlaufend entlang des gesamten jeweiligen ersten bzw. zweiten Zugmittels angeordnet sind, weiter bevorzugt in regelmäßigem Abstand zueinander.
11. Warenlagersystem nach einem der Aspekte 8-10,
   wobei der obere und/oder untere Umlenkmechanismus eine Umlenkrolle, vorzugsweise eine Riemenscheibe, oder ein Kettenritzel ist;
12. Warenlagersystem nach Aspekt 10 oder 11, wobei das umlaufende Zugmittel eine Innenseite, die zumindest teilweise mit dem oberen und dem unteren Umlenkmechanismus in Kontakt steht, und eine gegenüberliegende Außenseite aufweist, von der die ersten und/oder zweiten Aufnahmeelemente hervorstehen, vorzugsweise normal zur Außenseite.
13. Warenlagersystem nach einem der Aspekte 10-12,
   wobei das umlaufende Zugmittel an einem Rand des Schachts angeordnet ist,
   vorzugsweise wobei ein erster Teil des Zugmittels eine vertikal durch den Schacht verlaufende Förderstrecke zwischen dem unteren und dem oberen Umlenkmechanismus bildet, wobei die ersten und/oder zweiten Aufnahmeelemente des ersten Teils vorzugsweise in Richtung einer vertikalen Schachtmittelebene orientiert sind; und
   weiter bevorzugt wobei ein zweiter Teil des Zugmittels eine Rückförderstrecke zwischen dem oberen und dem unteren Umlenkmechanismus bildet, wobei die ersten und/oder zweiten Aufnahmeelemente des zweiten Teils bevorzugt in Richtung weg von der vertikalen Schachtmittelebene orientiert sind.
14. Warenlagersystem nach einem der vorstehenden Aspekte, wobei die Schächte rasterförmig angeordnet sind, wobei die Schächte bevorzugt rechteckige, vorzugsweise quadratische, Innenquerschnitte aufweisen und/oder wobei jeder Schacht definiert ist durch mindestens zwei, vorzugsweise vier Eckpfeiler und/oder durch zwei, vorzugsweise vier, Seitenwände.
15. Warenlagersystem nach Aspekt 14,
   wobei das erste Zugmittel zumindest teilweise in einem ersten Eckpfeiler angeordnet ist und/oder wobei das zweite Zugmittel zumindest teilweise in einem zweiten Eckpfeiler angeordnet ist,
   vorzugsweise wobei:
      der erste und/oder zweite Eckpfeiler eine Vertikalführung für das erste und/oder zweite Zugmittel aufweist, und/oder
      der erste und/oder zweite Eckpfeiler bevorzugt einen Eckpfeiler für mindestens zwei, weiter bevorzugt für vier an den Eckpfeiler angrenzende Schächte bildet.
16. Warenlagersystem nach einem der vorstehenden Aspekte, wobei die Mehrzahl vertikaler Schächte ihrer Bauhöhe nach in unterschiedliche Segmente einteilbar ist, wobei die Bauhöhe aller Schächte eines Segments gleich hoch ist, wobei in zumindest einem Segment die Bauhöhe bevorzugt mindestens 3 m, weiter bevorzugt mindestens 6 m, weiter bevorzugt mindestens 9 m beträgt und/oder bevorzugt maximal 30 m, weiter bevorzugt maximal 20 m, weiter bevorzugt maximal 15 m beträgt.
17. Warenlagersystem nach einem der vorstehenden Aspekte, wobei das System konfiguriert ist,
   einen in den Schacht einzulagernden Lagergutträger mit einem der ersten und/oder zugeordneten zweiten Aufnahmeelemente zu koppeln, bevorzugt im Bereich des oberen und/oder unteren Umlenkmechanismus; und/oder
   einen aus dem Schacht auszulagernden Lagergutträger von einem der ersten und/oder zugeordneten zweiten Aufnahmeelemente zu entkoppeln, bevorzugt im Bereich des oberen und/oder unteren Umlenkmechanismus.
18. Warenlagersystem nach einem der vorstehenden Aspekte, wobei das Warenlagersystem einen Lagergutaufnahmebereich unterhalb oder oberhalb des mindestens einen ersten und/oder zweiten Zugmittels aufweist, wobei das Warenlagersystem ausgebildet ist, einen von den zugeordneten Aufnahmeelementen gehaltenen Lagergutträger in den Lagergutaufnahmebereich abzugeben.
19. Warenlagersystem nach einem der vorstehenden Aspekte, wobei das System ausgebildet ist, Lagergüter von oben in einen der Mehrzahl von Schächten einzubringen oder von oben aus einem der Mehrzahl von Schächten zu entnehmen, bevorzugt im Bereich des oberen Umlenkmechanismus.
20. Warenlagersystem nach einem der vorstehenden Aspekte, wobei das System ausgebildet ist, Lagergüter von unten in einen der Mehrzahl von Schächten einzubringen oder von unten aus einem der Mehrzahl von Schächten zu entnehmen, bevorzugt im Bereich des unteren Umlenkmechanismus.
21. Warenlagersystem nach einem der vorstehenden Aspekte, wobei die Steuerung ausgebildet ist, die definierte Distanz zu steuern abhängig von einer Gesamthöhe eines mit Lagergut beladenen Lagergutträgers, wobei die Gesamthöhe definiert ist, als das Maximum aus:
   einer Höhe von Unterkante Lagergutträger zu Oberkante Lagergut; oder
   einer Höhe von Unterkante Lagergutträger zu Oberkante Lagergutträger.
22. Warenlagersystem nach einem der vorstehenden Aspekte, wobei die definierte Distanz mindestens der Gesamthöhe eines einzulagernden Lagergutträgers entspricht, bevorzugt der Gesamthöhe eines einzulagernden Lagergutträgers zuzüglich eines Abstandswerts, wobei der Abstandswert bevorzugt mindestens 10 mm, weiter bevorzugt mindestens 20 mm und/oder bevorzugt maximal 200 mm, weiter bevorzugt maximal 150 mm beträgt.
23. Warenlagersystem nach einem der vorstehenden Aspekte, ferner aufweisend eine Vermessungseinheit und/oder eine Freiraumkontrolleinheit, wobei die Vermessungseinheit und/oder die Freiraumkontrolleinheit ausgebildet ist, einen oder mehrere der folgenden Werte zu bestimmen und/oder einen Lagergutträger basierend auf einem oder mehrerer der folgenden Werte in ein vorgegebenes Höhenraster einzuordnen:
   die Höhe eines Lagergutträgers;
   die Höhe von auf dem Lagergutträger befindlichen Lagergütern; und/oder
   die Gesamthöhe eines mit Lagergut beladenen Lagergutträgers, vorzugsweise zuzüglich eines definierten Abstandswerts.
24. Warenlagersystem nach einem der vorstehenden Aspekte, ferner aufweisend mindestens einen lösbaren Arretiermechanismus an jedem der Schächte, wobei der Arretiermechanismus eine Bewegung des ersten und/oder zweiten Zugmittels und/oder eine Bewegung des oberen und/oder unteren Umlenkmechanismus in zumindest eine Richtung hemmt, bevorzugt unterbindet.
25. Warenlagersystem nach Aspekt 24, wobei der Arretiermechanismus ausgebildet ist,
   wenn die Arretierung aktiv ist, eine Bewegung der ersten und/oder zweiten Aufnahmeelemente nach unten zu hemmen, bevorzugt zu unterbinden; und/oder
   wenn die Arretierung gelöst ist, eine Bewegung der ersten und/oder zweiten Aufnahmeelemente nach unten zuzulassen.
26. Warenlagersystem nach Aspekt 24 oder 25, wobei der Arretiermechanismus eine entsperrbare Sperrklinke aufweist und/oder wobei der Arretiermechanismus von dem Bediengerät oder durch die Steuerung lösbar ist, vorzugsweise wobei der Arretiermechanismus von dem Bediengerät mechanisch betätigbar ist.
27. Warenlagersystem nach Aspekt 26,
   wobei die entsperrbare Sperrklinke ein Sperrrad und eine Sperrklinke aufweist,
   wobei das Sperrrad vorzugsweise drehfest mit dem oberen und/oder unteren Umlenkmechanismus gekoppelt ist,
   wobei die Sperrklinke mit dem Schacht gekoppelt ist, und
   wobei das Sperrrad und die Sperrklinke ausgebildet sind, eine Bewegung des ersten Teils des Zugmittels in eine vertikale Richtung nach oben zuzulassen und eine Bewegung des ersten Teils des Zugmittels in eine vertikale Richtung nach unten zu hemmen, bevorzugt zu unterbinden.
28. Warenlagersystem nach einem der vorstehenden Aspekte, wobei das System an jedem Schacht der Mehrzahl von Schächten eine Schnittstelle aufweist.
29. Warenlagersystem nach einem der vorstehenden Aspekte, wobei die Schnittstelle eine mechanische Schnittstelle, bevorzugt eine Klauenkupplung oder eine Reibkupplung ist.
30. Warenlagersystem nach einem der vorstehenden Aspekte, wobei die Schächte keinen Antriebsmotor zur Bewegung des ersten und/oder zweiten Zugmittels aufweisen.
31. Warenlagersystem nach einem der vorstehenden Aspekte,
   wobei das Bediengerät dazu ausgebildet ist, einen und/oder mehrere Lagergutträger aufzunehmen, zu puffern und/oder abzugeben, vorzugsweise mittels einer Hub- und/oder Senkeinheit nach oben und/oder unten abzugeben.
32. Warenlagersystem nach einem der vorstehenden Aspekte, ferner aufweisend einen Lagergutträger, wobei der Lagergutträger zumindest in einem Randbereich eine Dicke aufweist, die kleiner ist als der vertikale Abstand zweier benachbarter erster Aufnahmeelemente.
33. Warenlagersystem nach einem der vorstehenden Aspekte, wobei ein erster und ein zweiter Schacht aus der Mehrzahl von Schächten aneinander angrenzend angeordnet sind und wobei das erste Zugmittel des ersten Schachts mit dem ersten Zugmittel des zweiten Schachts gekoppelt ist, sodass eine Bewegung des ersten Zugmittels des ersten Schachts in eine erste Richtung eine Bewegung des ersten Zugmittels des zweiten Schachts in eine der ersten Richtung entgegengesetzte zweite Richtung veranlasst.
34. Warenlagersystem nach Aspekt 33, rückbezogen auf einen der Aspekte 2-32, wobei das zweite Zugmittel des ersten Schachts mit dem zweiten Zugmittel des zweiten Schachts gekoppelt ist, sodass eine Bewegung des zweiten Zugmittels des ersten Schachts in eine erste Richtung eine Bewegung des zweiten Zugmittels des zweiten Schachts in eine der ersten Richtung entgegengesetzte zweite Richtung veranlasst.
35. Warenlagersystem nach Aspekt 33 oder 34, wobei das erste und/oder zweite Zugmittel ausgebildet ist, einen Lagergutträger von dem ersten Schacht in den zweiten Schacht zu überführen, vorzugsweise wobei der Lagergutträger bei der Überführung im Bereich des oberen und/oder unteren Umlenkmechanismus zumindest teilweise horizontal bewegt wird, wobei das System weiter bevorzugt für einen Ein- bzw. Auslagerprozess sowohl von oben als auch und von unten ausgebildet ist.
36. Warenlagersystem nach einem der Aspekte 33-35 wobei lediglich der erste Schacht die Schnittstelle aufweist, die dazu ausgebildet ist, das erste Zugmittel mechanisch mit dem Antrieb des Bediengeräts zu koppeln, vorzugsweise, wobei der zweite Schacht keine Schnittstelle aufweist, die dazu ausgebildet ist, das erste Zugmittel mechanisch mit dem Antrieb des Bediengeräts zu koppeln.
37. Lagergutträger für ein Warenlagersystem nach einem der vorstehenden Aspekte,
   wobei der Lagergutträger eine rechteckige oder quadratische Grundfläche aufweist mit einer Kantenlänge von maximal 1400 mm, vorzugsweise maximal 1000 mm; und/oder
   wobei der Lagergutträger in einem Randbereich eine Dicke von maximal 200 mm aufweist, vorzugsweise maximal 100 mm, vorzugsweise maximal 80 mm, vorzugsweise maximal 60 mm, vorzugsweise maximal 40 mm, vorzugsweise maximal 20 mm, vorzugsweise maximal 10 mm, vorzugsweise maximal 5 mm.
38. Lagergutträger nach Aspekt 37, wobei der Lagergutträger ein Tablar, ein Tray, oder eine Palette ist.
39. Lagergutträger nach Aspekt 37, wobei der Lagergutträger eine Box, eine Kiste oder ein sonstiger Behälter ist, wobei der Lagergutträger vorzugsweise Seitenwände aufweist, wobei die Seitenwände vorzugsweise klappbar mit der Grundfläche verbunden sind.
40. Lagergutträger nach einem der Aspekte 37-39, wobei der Lagergutträger zumindest in einem Randbereich eine Dicke aufweist, die kleiner ist als der vertikale Abstand zweier benachbarter erster Aufnahmeelemente des Warenlagersystems nach einem der Aspekte 1-36.
41. Lagergutträger nach einem der Aspekte 37-40, wobei der Lagergutträger ausgelegt ist, Lagergut mit einem Gewicht von mindestens 1 kg, bevorzugt mindestens 5 kg, weiter bevorzugt mindestens 10 kg, weiter bevorzugt mindestens 30 kg, weiter bevorzugt mindestens 50 kg, weiter bevorzugt mindestens 70 kg aufzunehmen.
42. Bediengerät für ein Warenlagersystem nach einem der Aspekte 1-36, wobei das Bediengerät dazu ausgebildet ist, einen und/oder mehrere Lagergutträger, bevorzugt Lagergutträger nach einem der Aspekte 37-41 aufzunehmen, zu puffern und/oder abzugeben, bevorzugt nach oben und/oder unten abzugeben.
43. Bediengerät nach Aspekt 42, wobei das Bediengerät dazu ausgebildet ist, oberhalb und/oder unterhalb der Vielzahl von Schächten zu verfahren, bevorzugt in mindestens zwei senkrecht zueinander orientierten Richtungen einer horizontalen Ebene, weiter bevorzugt wobei das Bediengerät frei verfahrbar ist.
44. Bediengerät nach Aspekt 42 oder 43, wobei das Bediengerät ein drittes Zugmittel aufweist, das im Bediengerät vertikal bewegbar ist, wobei das dritte Zugmittel mehrere vertikal beabstandete dritte Aufnahmeelemente aufweist, die jeweils dazu ausgebildet sind, mindestens einen Lagergutträger zu halten, wobei die dritten Aufnahmeelemente entlang des dritten Zugmittels angeordnet und mittels des dritten Zugmittels im Bediengerät vertikal bewegbar sind.
45. Bediengerät nach einem der Aspekte 42-44, ferner aufweisend eine Hubsteuerung, die ausgebildet ist, eine Bewegung des dritten Zugmittels zu veranlassen, sodass sich eine jeweilige vertikale Position der dritten Aufnahmeelemente entlang einer Vertikalachse des Bediengeräts um eine definierte Distanz verändert, wobei die Hubsteuerung ausgebildet ist, die definierte Distanz abhängig von einer Höhe eines Lagergutträgers und/oder einer Höhe eines auf dem Lagergutträger befindlichen Lagerguts festzulegen.
46. Bediengerät nach einem der Aspekte 42-45, wobei das Bediengerät ferner ein viertes Zugmittel aufweist, das im Bediengerät vertikal bewegbar ist, wobei das vierte Zugmittel mehrere vertikal beabstandete vierte Aufnahmeelemente aufweist, die jeweils dazu ausgebildet sind, mindestens einen Lagergutträger zu halten, wobei die vierten Aufnahmeelemente entlang des vierten Zugmittels angeordnet und mittels des vierten Zugmittels im Bediengerät vertikal bewegbar sind; wobei jedes vierte Aufnahmeelement bevorzugt einem gegenüberliegenden dritten Aufnahmeelement zugeordnet ist, wobei die einander zugeordneten Aufnahmeelemente weiter bevorzugt in einer gemeinsamen horizontalen Ebene liegen.
47. Bediengerät nach einem der Aspekte 42-46, wobei die dritten und/oder vierten Aufnahmeelemente in regelmäßigen Abständen entlang des dritten und/oder vierten Zugmittels angeordnet sind, wobei ein Abstand zwischen zwei benachbarten dritten Aufnahmeelementen und/oder zwischen zwei benachbarten vierten Aufnahmemitteln vorzugsweise mindestens 20 mm, weiter bevorzugt mindestens 50 mm, weiter bevorzugt mindestens 80 mm und/oder bevorzugt maximal 350 mm, weiter bevorzugt maximal 250 mm, weiter bevorzugt maximal 150 mm beträgt.
48. Bediengerät nach einem der Aspekte 42-47, wobei das dritte und das vierte Zugmittel simultan bewegbar sind, wobei das dritte und das vierte Zugmittel vorzugsweise mechanisch gekoppelt sind und/oder die Hubsteuerung bevorzugt ausgebildet ist, eine simultane Bewegung des dritten und vierten Zugmittels zu veranlassen.
49. Bediengerät nach einem der Aspekte 42-48, wobei das Bediengerät eine Fahrzeug-Schnittstelle zur Kopplung mit der Schnittstelle des Warenlagersystems aufweist, wobei die Fahrzeug-Schnittstelle dazu ausgebildet ist, das erste und/oder zweite Zugmittel des Warenlagersystems mittels eines Antriebs des Bediengeräts anzutreiben.
50. Bediengerät nach einem der Aspekte 42-49, wobei das Bediengerät einen Antrieb aufweist, der ausgebildet ist, das erste und/oder zweite Zugmittel am Schacht anzutreiben, bevorzugt wenn das Bediengerät mit der Schnittstelle gekoppelt ist, wobei der Antrieb vorzugsweise ferner ausgebildet ist, das Bediengerät anzutreiben.
51. Bediengerät nach einem der Aspekte 42-50, wobei das Bediengerät ausgebildet ist, sich an einem Schacht aus der Vielzahl von Schächten mit der Schnittstelle zu koppeln, vorzugsweise wobei das Bediengerät eine mechanische Bediengerät-Schnittstelle, bevorzugt eine Klauenkupplung oder eine Reibkupplung aufweist.
52. Bediengerät nach einem der Aspekte 42-51,
   wobei die Hubsteuerung ausgebildet ist, eine Datenverbindung mit einer Steuerung des Warenlagersystems herzustellen und basierend auf einem Datenaustausch mit der Steuerung des Warenlagersystems gesteuert zu werden.
53. Bediengerät nach einem der Aspekte 42-52, wobei die Hubsteuerung ausgebildet ist, eine Bewegung des dritten und/oder vierten Zugmittels synchron zu einer Bewegung des ersten und/oder zweiten Zugmittels zu veranlassen, bevorzugt wenn das Bediengerät über die Schnittstelle mit einem Schacht aus der Vielzahl von Schächten gekoppelt ist.
54. Bediengerät nach einem der Aspekte 42-53, wobei die dritten und/oder vierten Aufnahmeelemente geeignet und ausgebildet sind, einen Lagergutträger am Bediengerät zu halten und in einen Schacht aus der Mehrzahl von Schächten einzubringen, vorzugsweise durch Bewegung der dritten und/oder vierten Aufnahmeelemente in eine vertikale Richtung, weiter bevorzugt nach oben, weiter bevorzugt wenn das Bediengerät über die Schnittstelle mit dem Schacht gekoppelt ist.
55. Bediengerät nach einem der Aspekte 42-54, wobei die dritten und/oder vierten Aufnahmeelemente Stifte, Platten, Gabeln, Nuten oder Löcher sind; und/oder wobei das dritte und/oder vierte Zugmittel eine Kette, ein Riemen oder ein Seil ist.
56. Bediengerät nach einem der Aspekte 42-55, wobei das dritte und/oder vierte Zugmittel um einen oberen Umlenkmechanismus verläuft, wobei der obere Umlenkmechanismus vorzugsweise an einem oberen Ende des Bediengeräts angeordnet ist.
57. Bediengerät nach einem der Aspekte 42-56, wobei das dritte und/oder vierte Zugmittel um einen unteren Umlenkmechanismus verläuft, wobei der untere Umlenkmechanismus vorzugsweise an einem unteren Ende des Bediengeräts angeordnet ist.
58. Bediengerät nach Aspekt 56 oder 57,
   wobei der Umlenkmechanismus eine Umlenkrolle, bevorzugt eine Riemenscheibe, oder ein Kettenritzel ist; und/oder
   wobei das dritte und/oder vierte Zugmittel ein umlaufendes Zugmittel ist, welches um den oberen und den unteren Umlenkmechanismus verläuft, wobei die dritten und/oder vierten Aufnahmeelemente vorzugsweise umlaufend entlang des gesamten dritten und/oder vierten Zugmittels, weiter bevorzugt in regelmäßigem Abstand zueinander, angeordnet sind.
59. Bediengerät nach einem der Aspekte 42-58, wobei das Bediengerät konfiguriert ist,
   einen in einen Schacht einzulagernden Lagergutträger mit einem der dritten und/oder zugeordneten vierten Aufnahmeelemente vertikal zu einer Oberseite oder Unterseite des Bediengeräts zu fördern und an eines der ersten und/oder zugeordneten zweiten Aufnahmeelemente zu übergeben, vorzugsweise auf Höhe des oberen und/oder unteren Umlenkmechanismus, weiter bevorzugt wenn das Bediengerät über die Schnittstelle mit dem Schacht gekoppelt ist; und/oder
   einen aus dem Schacht auszulagernden Lagergutträger von einem der ersten und/oder zugeordneten zweiten Aufnahmeelemente zu entkoppeln, vorzugsweise auf Höhe des oberen und/oder unteren Umlenkmechanismus, und an eines der dritten und/oder zugeordneten vierten Aufnahmeelemente zu übergeben, bevorzugt wenn das Bediengerät über die Schnittstelle mit dem Schacht gekoppelt ist.
60. Bediengerät nach einem der Aspekte 42-59, ferner aufweisend eine Vermessungseinheit und/oder eine Freiraumkontrolleinheit, wobei die Vermessungseinheit und/oder Freiraumkontrolleinheit ausgebildet ist, einen oder mehrere der folgenden Werte zu bestimmen und/oder einen Lagergutträger basierend auf einem oder mehrerer der folgenden Werte in ein vorgegebenes Höhenraster einzuordnen:
   die Höhe eines Lagergutträgers;
   die Höhe von auf dem Lagergutträger befindlichen Lagergütern; und/oder
   die Gesamthöhe eines mit Lagergut beladenen Lagergutträgers, vorzugsweise zuzüglich eines definierten Abstandswerts.
61. Bediengerät nach einem der Aspekte 42-60, wobei das Bediengerät und/oder die Bediengerät-Schnittstelle ferner ausgebildet ist, an einem Schacht aus der Mehrzahl von Schächten eine elektrische Verbindung mit einem elektrischen Stromnetz herzustellen, wobei die elektrische Verbindung dazu geeignet ist, einen Akku des Bediengeräts zu laden.
62. Bediengerät nach einem der Aspekte 42-61, wobei das Bediengerät ausgebildet ist, einen Arretiermechanismus, vorzugsweise den Arretiermechanismus nach einem der Aspekte 24-27, des Warenlagersystems am Schacht zu lösen, vorzugsweise wenn das Bediengerät mit der Schnittstelle des Schachts gekoppelt ist.
63. Verfahren zum Betrieb eines Warenlagersystems nach einem der Aspekte 1-36, aufweisend einen Einlagerungsprozess mit den Schritten:
   a. Bestimmung der Gesamthöhe eines einzulagernden Lagergutträgers;
   b. Transport des einzulagernden Lagergutträgers zu einem Zielschacht aus der Mehrzahl von Schächten durch ein Bediengerät, vorzugsweise durch ein Bediengerät nach einem der Aspekte 42-62;
   c. Koppeln des Bediengeräts mit der Schnittstelle des Zielschachts;
   d. Bewegen des ersten und/oder zweiten Zugmittels, sodass sich ein erstes und/oder zugeordnetes zweites Aufnahmeelement im Schacht um eine definierte Distanz vertikal bewegt, wobei die definierte Distanz abhängig ist von der Gesamthöhe des einzulagernden Lagergutträgers;
   e. Koppeln des Lagergutträgers mit dem ersten und/oder zweiten Aufnahmeelement.
64. Verfahren nach Aspekt 63, wobei die Gesamthöhe eines einzulagernden Lagergutträgers bevorzugt definiert ist, als das Maximum aus:
   einer Höhe von Unterkante Lagergutträger zu Oberkante Lagergut; oder
   einer Höhe von Unterkante Lagergutträger zu Oberkante Lagergutträger.
65. Verfahren nach Aspekt 63 oder 64, wobei die Bestimmung in Schritt a. umfasst:
   Eingabe, Einordnung in ein vordefiniertes Höhenraster, und/oder Messung,
   bevorzugt mittels einer Vermessungseinheit.
66. Verfahren nach einem der Aspekte 63-65, wobei das Bediengerät ein Bediengerät nach einem der Aspekte 44-62 ist und wobei bevorzugt Schritt d. synchron mit einer Bewegung des dritten und/oder vierten Zugmittels erfolgt.
67. Verfahren nach einem der Aspekte 63-66, wobei das Bediengerät unterhalb der Mehrzahl von Schächten verfährt und/oder wobei der Einlagerungsprozess von unten in die Schächte erfolgt, wobei ein oder mehrere der folgenden Bedingungen erfüllt sind:
   - Schritt c. erfolgt vor Schritt d.;
   - Schritt d. erfolgt vor Schritt e.;
   - Schritt e. erfolgt im Bereich des unteren Umlenkmechanismus;
   - Schritt e. umfasst ein Vorbeibewegen des Lagergutträgers am unteren Umlenkmechanismus.
68. Verfahren nach einem der Aspekte 63-66, wobei das Bediengerät oberhalb der Vielzahl von Schächten verfährt und/oder wobei der Einlagerungsprozess von oben in die Schächte erfolgt, wobei das Verfahren ferner den Schritt aufweist:
   f. Lösen des Arretiermechanismus, bevorzugt mittels des Bediengeräts.
69. Verfahren nach Aspekt 68, wobei ein oder mehrere der folgenden Bedingungen erfüllt sind:
   - Schritt c. erfolgt vor den Schritten d. und e.;
   - Schritt e. erfolgt vor Schritt d.;
   - Schritt f. erfolgt vor Schritt d.;
   - Schritt e. erfolgt im Bereich des oberen Umlenkmechanismus
   - Schritt e. umfasst ein Vorbeibewegen des Lagergutträgers am oberen Umlenkmechanismus.
70. Verfahren zum Betrieb eines Warenlagersystems nach einem der Aspekte 1-36, aufweisend einen Auslagerungsprozess mit den Schritten:
   a. Koppeln des Bediengeräts mit dem Zielschacht über die Schnittstelle;
   b. Bewegen des ersten und/oder zweiten Zugmittels, sodass sich ein erstes und/oder zugeordnetes zweites Aufnahmeelement im Schacht um eine definierte Distanz vertikal bewegt, wobei die definierte Distanz abhängig ist von der Gesamthöhe des auszulagernden Lagergutträgers;
   c. Entkoppeln des Lagergutträgers mit dem ersten und/oder zweiten Aufnahmeelement.
71. Verfahren nach Aspekt 70, wobei die Gesamthöhe eines einzulagernden Lagergutträgers definiert ist, als das Maximum aus:
   einer Höhe von Unterkante Lagergutträger zu Oberkante Lagergut; oder
   einer Höhe von Unterkante Lagergutträger zu Oberkante Lagergutträger.
72. Verfahren nach Aspekt 70 oder 71, wobei das Bediengerät ein Bediengerät nach einem der Aspekte 44-62 ist und wobei bevorzugt Schritt b. synchron mit einer Bewegung des dritten und/oder vierten Zugmittels erfolgt.
73. Verfahren nach einem der Aspekte 70-72, wobei das Bediengerät oberhalb der Vielzahl von Schächten verfährt und/oder wobei der Auslagerungsprozess von oben aus dem Schacht heraus erfolgt, wobei ein oder mehrere der folgenden Bedingungen erfüllt sind:
   - Schritt a. erfolgt vor Schritt b.;
   - Schritt b. erfolgt vor Schritt c.;
   - Schritt c. erfolgt im Bereich des oberen Umlenkmechanismus
   - Schritt c. umfasst ein Vorbeibewegen des Lagergutträgers am oberen Umlenkmechanismus.
74. Verfahren nach einem der Aspekte 70-72, wobei das Bediengerät unterhalb der Vielzahl von Schächten verfährt und/oder wobei der Auslagerungsprozess von unten aus dem Schacht heraus erfolgt, wobei das Verfahren ferner den Schritt aufweist:
   d. Lösen des Arretiermechanismus, bevorzugt mittels des Bediengeräts.
75. Verfahren nach Aspekt 74, wobei ein oder mehrere der folgenden Bedingungen erfüllt sind:
   - Schritt a. erfolgt zuerst;
   - Schritt d. erfolgt vor Schritt b.;
   - Schritt b. erfolgt vor Schritt c.;
   - Schritt c. erfolgt im Bereich des unteren Umlenkmechanismus
   - Schritt c. umfasst ein Vorbeibewegen des Lagergutträgers am unteren Umlenkmechanismus.

Im Folgenden ist mit Bezug auf die folgenden Figuren beispielhaft eine bevorzugte Ausführungsform der Erfindung beschrieben. Die Figuren zeigen:
- Fig. 1: eine schematische Darstellung eines Schachts aus einem Warenlagersystem nach dem ersten Aspekt der vorliegenden Erfindung in einer ersten bevorzugten Ausführungsform in einer Seitenansicht;
- Fig. 2: eine schematische Darstellung eines Ausschnitts eines Warenlagersystems nach dem ersten Aspekt der vorliegenden Erfindung in der ersten bevorzugten Ausführungsform in einer Ansicht von unten;
- Fig. 3: eine Detailansicht einer Umlenkrolle in einer bevorzugten Ausführungsform in einer Perspektivansicht;
- Fig. 4: eine erste bevorzugte Ausführungsform eines Bediengeräts nach dem dritten Aspekt der vorliegenden Erfindung in einer Perspektivansicht;
- Fig. 5: die erste bevorzugte Ausführungsform des Bediengeräts nach dem dritten Aspekt der vorliegenden Erfindung in einer Seitenansicht;
- Fig. 6: ein Detail der ersten bevorzugten Ausführungsform des Bediengeräts nach dem dritten Aspekt der vorliegenden Erfindung;
- Fig. 7: ein Detail des Bediengeräts in der ersten bevorzugten Ausführungsform in einem Koppel-Zustand, angedockt an einen Schacht eines Warenlagersystems;
- Fig. 8: eine zweite bevorzugte Ausführungsform eines Bediengeräts nach dem dritten Aspekt der vorliegenden Erfindung in einer Perspektivansicht;
- Fig. 9: die zweite bevorzugte Ausführungsform des Bediengeräts nach dem dritten Aspekt der vorliegenden Erfindung in einer Seitenansicht
- Fig. 10: eine zweite bevorzugte Ausführungsform eines Warenlagersystems nach dem ersten Aspekt der vorliegenden Erfindung in einer Perspektivansicht;
- Fig. 11: eine Seitenansicht der zweiten bevorzugten Ausführungsform des Warenlagersystems nach Fig. 10;
- Fig. 12: eine geschnittene Seitenansicht eines Bereichs des Warenlagersystems nach Fig. 10 mit einem Bediengerät in einem Transport-Zustand;
- Fig. 13: eine geschnittene Seitenansicht eines Bereichs des Warenlagersystems nach Fig. 10 mit einem Bediengerät in einem Koppel-Zustand;
- Fig. 14: eine dritte bevorzugte Ausführungsform eines Warenlagersystems nach dem ersten Aspekt der vorliegenden Erfindung in einer Perspektivansicht;
- Fig. 15: eine Seitenansicht der dritten bevorzugten Ausführungsform des Warenlagersystems nach Fig. 14;
- Fig. 16: eine geschnittene Seitenansicht eines Bereichs des Warenlagersystems nach Fig. 14 mit einem Bediengerät in einem Transport-Zustand;
- Fig. 17: ein Detail aus Fig. 16;
- Fig. 18: eine geschnittene Seitenansicht eines Bereichs des Warenlagersystems nach Fig. 14 mit einem Bediengerät in einem Koppel-Zustand;
- Fig. 19: ein Detail aus Fig. 18;
- Fig. 20: einen Einlagerungsprozess anhand eines Warenlagersystems gemäß der zweiten bevorzugten Ausführungsform;
- Fig. 21: einen Auslagerungsprozess anhand eines Warenlagersystems gemäß der zweiten bevorzugten Ausführungsform;
- Fig. 22: einen Einlagerungsprozess anhand eines Warenlagersystems gemäß der dritten bevorzugten Ausführungsform;
- Fig. 23: einen Auslagerungsprozess anhand eines Warenlagersystems gemäß der dritten bevorzugten Ausführungsform;
- Fig. 24: einen Einlagerungsprozess anhand eines Warenlagersystems gemäß einer vierten bevorzugten Ausführungsform;
- Fig. 25: einen Auslagerungsprozess anhand eines Warenlagersystems gemäß der vierten bevorzugten Ausführungsform;
- Fig. 26: einen Einlagerungsprozess anhand eines Warenlagersystems gemäß einer fünften bevorzugten Ausführungsform;
- Fig. 27: einen Auslagerungsprozess anhand eines Warenlagersystems gemäß der fünften bevorzugten Ausführungsform;

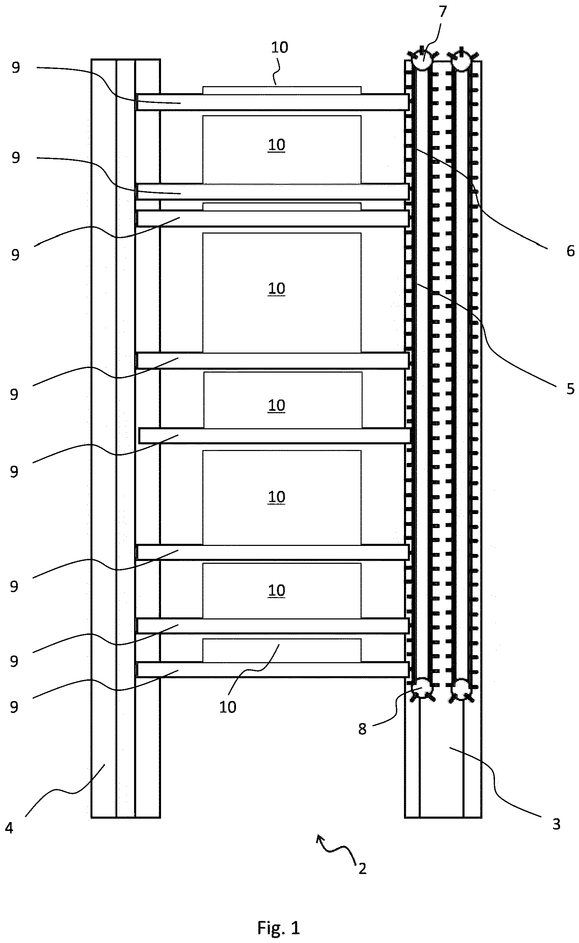

In Figur 1 ist ein Ausschnitt einer bevorzugten Ausführungsform eines Schachts aus einem Warenlagersystem 1000 nach dem ersten Aspekt der vorliegenden Erfindung in einer Seitenansicht dargestellt. Der Schacht 2 ist seitlich begrenzt durch mindestens zwei Pfeiler 3, 4. Der Pfeiler 3 ist mit einer Zugmittelführung ausgestattet, sodass ein Zugmittel 5 vertikal beweglich in diesem Pfeiler 3 gelagert ist.

Der Pfeiler 4 ist in der Seitenansicht gegenüberliegend des Pfeilers 3 angeordnet und weist kein Zugmittel auf. Mit anderen Worten kann der Pfeiler 4 ein Schachtbegrenzungspfeiler sein, wie auch aus anderen Blocklagersystemen bekannt.

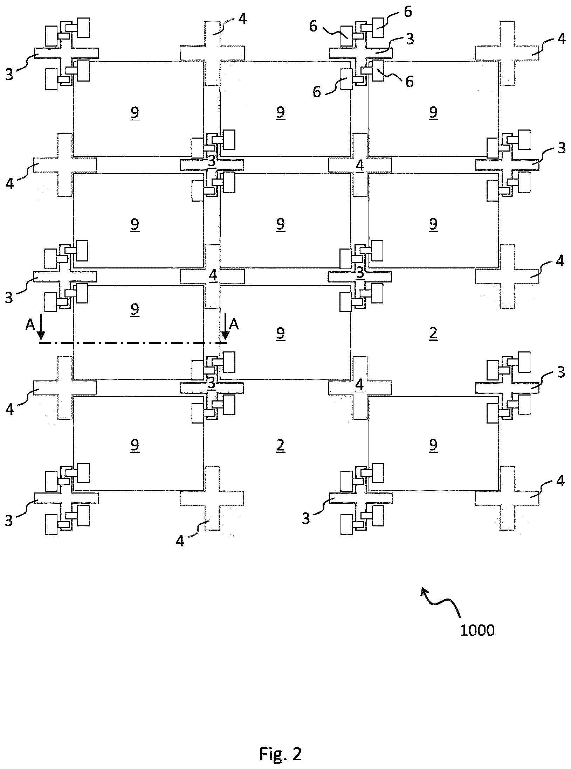

Wie in einer Draufsicht mit Bezug auf Figur 2 erkennbar ist, sind bevorzugt an einem oder jedem, bevorzugt mit rechteckiger Grundfläche ausgebildeten Schacht vier Pfeiler angeordnet, wovon z.B. zwei diagonal gegenüberliegende Pfeiler 3 mit einer Zugmittelführung und einem entsprechenden Zugmittel 5 ausgestattet sind und z.B. zwei versetzt dazu diagonal liegende Pfeiler 4 ohne Zugmittelführung vorgesehen sind.

In der Seitenansicht in Figur 1 ist der Pfeiler 3 derart geschnitten dargestellt, dass das Zugmittel 5 erkennbar ist. Das Zugmittel 5 ist zwischen einer oberen Umlenkrolle 7 und einer unteren Umlenkrolle 8 gelagert und umlaufend um diese Umlenkrollen angeordnet. Somit kann bei Drehung der Umlenkrollen 7, 8 eine Bewegung des Zugmittels 5 veranlasst werden.

Das Zugmittel 5 weist eine Mehrzahl voneinander beabstandeter Aufnahmeelemente 6 auf. Die Aufnahmeelemente 6 sind entlang des Zugmittels 5 in regelmäßigen Abständen zueinander angeordnet. Bei einer Bewegung des Zugmittels 5, in diesem Fall Drehung der Umlenkrollen 7, 8 bewegen sich die Aufnahmeelemente 6 entlang der Umlaufbahn des Zugmittels 5 um die obere Umlenkrolle 7 und die untere Umlenkrolle 8 herum. In einem Schachtinnenraum (linke Seite des Pfeilers 3) bewegen sich die Aufnahmeelemente 6, sofern sich die Umlenkrollen 7, 8 drehen, hauptsächlich in vertikaler Richtung. Mit anderen Worten sind die Aufnahmeelemente 6 vertikal durch den Schacht 2 bewegbar.

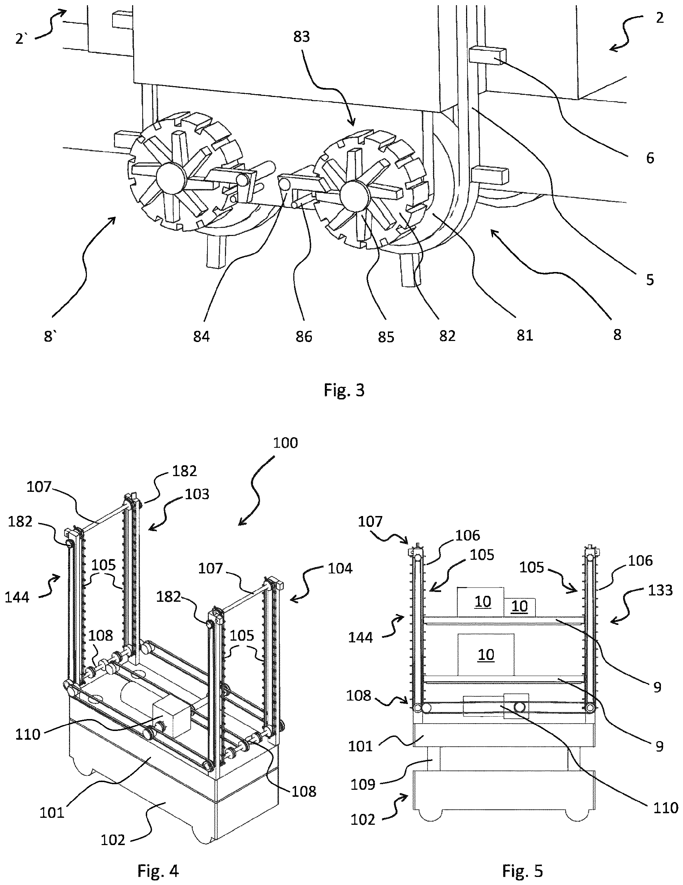

An den Aufnahmeelementen 6 können Lagergutträger arretiert werden. Für eine stabile Arretierung ist bevorzugt, dass Aufnahmeelemente 6 jeweils gegenüberliegend im Schacht angeordnet sind und somit Lagergutträger 9 an gegenüberliegende Ecken bzw. Kanten arretiert werden können, wie dies unten mit Bezug auf Figur 4 erläutert ist. Der Schacht 2 mit den mit Aufnahmeelementen 6 versehenen Zugmitteln 5 unterscheidet sich zumindest dadurch von herkömmlichen Blocklagerschächten und/oder Regalen, dass dieser mit vertikal durch den Schacht bewegbaren Aufnahmeelementen 6 ausgestattet ist, an denen Lagergutträger 9 arretierbar sind. Lagergutträger 9 können also dynamisch durch den Schacht bewegt werden und sind nicht an feste Regalstellplätze gebunden und/oder an einer festen Position in einem Stapel gelagert. Durch eine derartige Ausgestaltung des Schachts 2 kann erreicht werden, dass für jeden Lagergutträger 9 abhängig von dessen Höhe bzw. der Höhe von Lagergutträger 9 zusammen mit einer darauf befindlichen Ware 10 (effektive Gesamthöhe) ein geeignetes Aufnahmeelement 6 ausgewählt werden kann, an welchem der Lagergutträger arretiert werden kann, um einerseits ein Aufeinanderstapeln mehrerer Lagergutträger zu verhindern und andererseits eine möglichst effektive, d.h. hohe Lagerdichte zu erreichen. Dieses System ist einem Blocklager insbesondere dahingehend überlegen, dass auch nicht aufeinander stapelbare Waren in dieses Lager eingelagert werden können. Zusätzlich kann bei diesem Lagersystem nachverdichtet werden, d.h., wenn beispielsweise von einem flachen Lagergutträger 9 (bspw. ein Tray, Tablar oder eine Palette) ein Teil der Ware 10 entnommen wird und der Lagergutträger anschließend wieder in ein Lager eingebracht werden soll (jetzt eben mit einer geringeren Höhe), kann dieser derart eng gegenüber anderen Lagergutträgern eingelagert werden, dass kein oder nur ein bestimmter, geringer, Freiraum über diesem Lagergutträger verbleibt. Somit ist das Lagersystem, insbesondere bei Einsatz von flachen Lagergutträgern 9, einem herkömmlichen Regallager oder Blocklager mit Kisten überlegen. Bei Kisten oder festen Regalfächern verbleibt nämlich, auch wenn das Regalfach oder die Kiste teilweise (beispielsweise halb) entleert ist, weiterhin das verbleibende Regalfach- oder Kistenvolumen (z.B. die andere Hälfte des Volumens) ungenutzt.

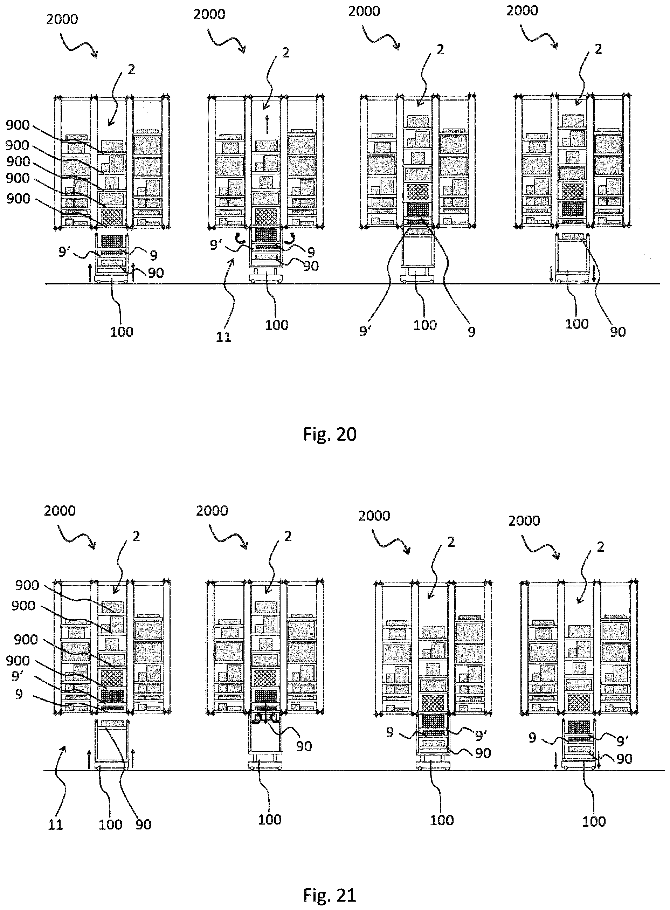

Einem Regallager ist dieses System gemäß dem Schacht 2 zusätzlich auch dadurch überlegen, dass die Lagergutträger im Schacht 2 nicht auf festgelegten Regalplatzhöhen eingelagert werden, sondern abhängig von ihrer tatsächlichen Höhe (effektive Gesamthöhe) in kleineren oder größeren Abständen zueinander eingelagert werden können. Ein vorteilhaftes Verfahren, wie Lagergutträger in ein solches Lagersystem möglichst effizient eingebracht werden und/oder ausgelagert werden können, ist nachfolgend mit Bezug auf die Figuren 20 bis 23 erläutert.

Figur 2 zeigt einen Ausschnitt eines Warenlagersystems 1000 nach dem ersten Aspekt der vorliegenden Erfindung in einer bevorzugten Ausführungsform in einer Ansicht von unten. Es ist zu erkennen, dass das Warenlagersystem 1000 im gezeigten Ausschnitt zwölf Schächte aufweist, welche jeweils von vier Eckpfeilern begrenzt sind. Die zwölf Schächte sind rasterförmig angeordnet und bilden hier eine 4 x 3-Matrix.

Jeder der Schächte 2 ist mit einer rechteckigen, hier auch identischen, Grundfläche ausgebildet.

Die vier den Schacht begrenzenden bzw. definierenden Eckpfeiler sind zwei diagonal gegenüberliegende Pfeiler 3, welche eine Zugmittelführung aufweisen, und zwei diagonal gegenüberliegende Pfeiler 4 (ohne Zugmittelführung). Selbstverständlich können in alternativen Ausführungsformen auch mehr als zwei der vier Pfeiler mit Zugmittelführungen (Pfeiler Typ 3) und/oder Zugmitteln vorgesehen sein. Bevorzugt können alle Pfeiler eine Zugmittelführung aufweisen (wie der Pfeiler 3), jedoch nur mindestens 2 Pfeiler eines Schachts auch ein Zugmittel 5 und/oder Umlenkrollen 7, 8.

Die meisten der zwölf Schächte (zehn Schächte) in Figur 2 weisen mindestens einen Lagergutträger 9 auf, der auf zwei Aufnahmeelementen 6 lastet, wie von unten zu sehen ist. Allerdings sind auch in diesem Teilausschnitt manche Schächte leer, beispielsweise auf der rechten Seite der Abbildung der zweite Schacht von unten sowie auf der unteren Seite der Abbildung der mittlere Schacht 2. Der Schacht 2, welcher sich in der 4 x 3-Matrix im linken unteren Bereich befindet, kann der Schacht 2 sein, welcher in Figur 1 in einer Schnittansicht entlang der Linie A-A gezeigt ist.

Gemäß Figur 2 können die Aufnahmeelemente 6 als flache Plättchen (Laschen) ausgebildet sein, auf welchen eine ebene Unterseite des Lagergutträgers 9 sicher aufliegen kann. Selbstverständlich können die Aufnahmeelemente 6 in alternativen Ausführungsformen auch andere Formen aufweisen, wie beispielsweise Nasen, Zapfen oder Bohrungen. Vorzugsweise ist die Form der Aufnahmeelemente 6 auf den Typ der im Warenlagersystem verwendeten Lagergutträger 9 abgestimmt. In zumindest einem Ausschnitt bzw. Segment eines Warenlagersystems, bevorzugt in zumindest einem Schacht 2, können alle Aufnahmeelemente 6 vom gleichen Typ sein und/oder die gleiche Form aufweisen. Wie ferner in Figur 2 gezeigt, kann jeder der Pfeiler 3, 4 nicht nur einen einzelnen Schacht begrenzen, sondern auch weitere angrenzende Schächte begrenzen. Hier dient jeder Eckpfeiler 3, 4 als Eckpfeiler für vier angrenzende Schächte. Zumindest die Eckpfeiler 3, welche mit der Zugmittelführung ausgestattet sind, können bevorzugt nicht nur lediglich eine Zugmittelführung aufweisen, sondern eine Zugmittelführung für mindestens zwei, bevorzugt jeden der angrenzenden Schächte. So weist im vorliegenden Ausführungsbeispiel ein Eckpfeiler 3 vier Zugmittelführungen auf. Bevorzugt sind in den Zugmittelführungen Zugmittel 5 angeordnet. Die Zugmittelführungen sind derart im Pfeiler 3 angeordnet, dass die Zugmittel 5 unabhängig voneinander im Pfeiler 3 bewegt werden können. In anderen Worten können Zugmittel angrenzender Schächte so ausgebildet sein, dass sie unabhängig voneinander bewegt werden können.

Bevorzugt können in einem Schacht die Aufnahmeelemente 6 bzw. Zugmittel 5 synchron zueinander bewegt werden, d.h. die mindestens zwei Zugmittel 5 in bevorzugt diagonal gegenüberliegenden Pfeilern 3 können derart aufeinander abgestimmt bewegt werden, dass ein im Schacht 2 befindlicher Lagergutträger 9 ohne seine horizontale Ausrichtung zu verändern vertikal durch den Schacht 2 bewegbar ist. Der Antrieb der Zugmittel 5 kann vorzugsweise über die obere und/oder untere Umlenkrolle 7, 8 erfolgen. Die Antriebsenergie kann dabei von beispielsweise einem mit der Umlenkrolle 7, 8 gekoppelten Bediengerät, beispielsweise einem der nachfolgend in Zusammenhang mit den Figuren 4 bis 9 beschriebenen Bediengeräte 100 oder 200, bereitgestellt werden.

In dem Warenlagersystem 1000 nach der bevorzugten Ausführungsform lasten die Lagergutträger 9 und damit auch die Waren 10 nicht auf beispielsweise einem Hallenboden oder auf fest verankerten Regalböden, sondern über die Aufnahmeelemente 6 an den ein oder zwei Zugmitteln 5. Vorzugsweise werden sie über das Zugmittel 5 und weiter bevorzugt weiterhin über die obere und/oder untere Umlenkrolle 7, 8 am Eckpfeiler 3 des Schachts 2 abgestützt.

Die obere und/oder untere Umlenkrolle 7, 8, bevorzugt die untere Umlenkrolle 8 kann einen Arretiermechanismus, beispielsweise in Form des nachfolgend in Zusammenhang mit Fig. 3 beschriebenen Arretiermechanismus 83, aufweisen. Der Arretiermechanismus sperrt oder hemmt bevorzugt eine Drehung der Umlenkrolle 7, 8 in zumindest eine Richtung, die eine Bewegung der Aufnahmeelemente 6 im Schacht nach unten veranlassen würde. Eine bevorzugte Ausführungsform einer unteren Umlenkrolle 8 zusammen mit einem Arretiermechanismus bzw. einer Arretierfunktion ist im Zusammenhang mit Figur 3 schematisch dargestellt.

Figur 3 zeigt eine Detailansicht einer unteren Umlenkrolle 8 eines ersten Schachts 2 in einer bevorzugten Ausführungsform in einer Perspektivansicht. Neben der unteren Umlenkrolle 8 des ersten Schachts 2 ist eine weitere, vorzugsweise prinzipiell identisch ausgeführte, Umlenkrolle 8' erkennbar, welche einem zu Schacht 2 benachbart angeordneten Schacht 2' zugeordnet werden kann. Die untere Umlenkrolle 8 weist eine Umlenkscheibe 81 auf, welche das Zugmittel 5, welches hier als Riemen ausgebildet ist, führt, umlenkt und vorzugsweise antreibt. Um das Zugmittel 5 zu bewegen, und damit die Aufnahmeelemente 6 vertikal durch den Schacht zu bewegen, um beispielsweise einen Lagergutträger ein- oder auszulagern, ist es zweckmäßig, die obere oder untere Umlenkrolle 7, 8 aktiv in Bewegung zu versetzen.

In der gezeigten Ausführungsform soll die untere Umlenkrolle 8, insbesondere die Umlenkscheibe 81, angetrieben werden. Daher ist die Umlenkscheibe 81 drehfest gekoppelt mit einem Antriebsrad 82. Das Antriebsrad 82 ist ausgebildet von einem externen Antrieb angetrieben zu werden. Somit kann nicht nur das Antriebsrad 82, sondern auch die damit verbundene Umlenkscheibe 81 und somit die gesamte untere Umlenkrolle 8 in Drehung versetzt werden. Das Zugmittel 5 kann dadurch entlang seiner Umlaufbahn bewegt werden und/oder die Aufnahmeelemente 6 können durch den Schacht bewegt werden.

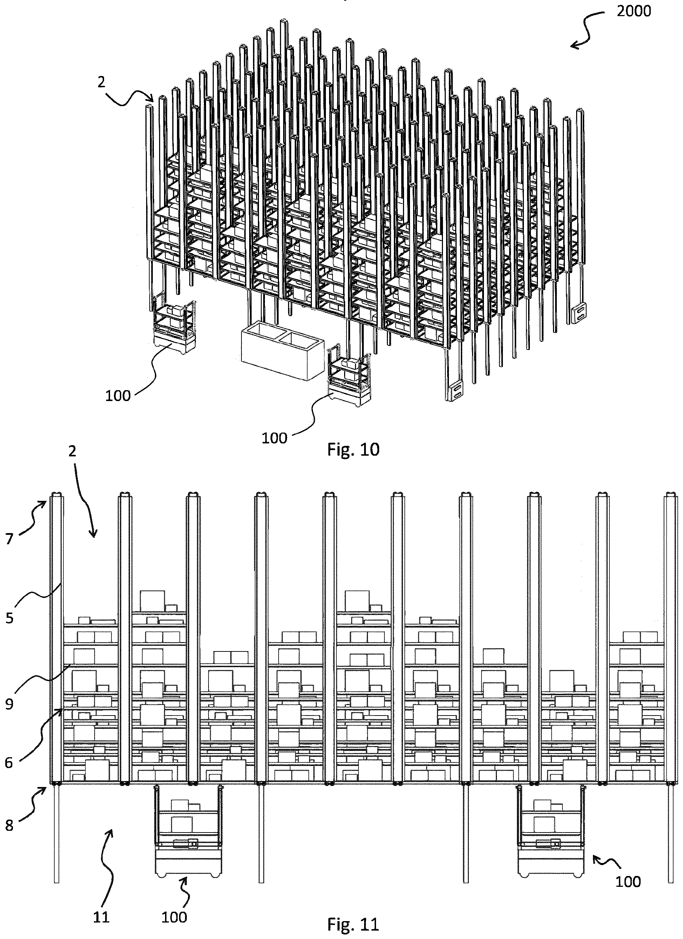

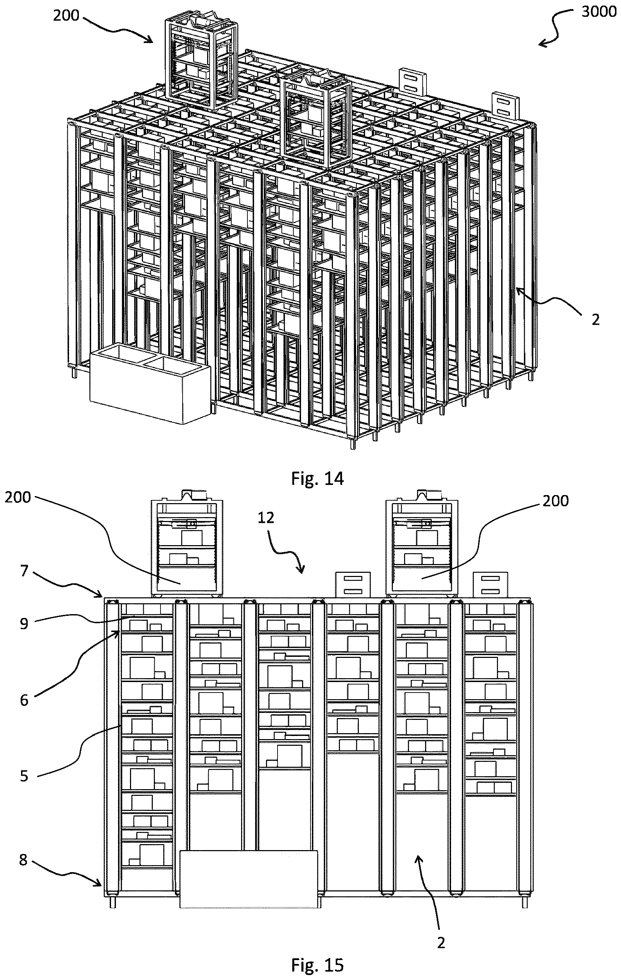

Es ist zweckmäßig, die Kopplung des Antriebs an der Umlenkrolle vorzusehen, die angrenzend an eine Verfahrebene bzw. einen Fahrbereich des Bediengeräts, angeordnet ist. Ist das Warenlagersystem für eine Ein- und/oder Auslagerung von unten konzipiert, wie bspw. nachfolgend mit Bezug auf Fig. 10 bis 13 beschrieben, ist auch der Koppelmechanismus an der unteren Umlenkrolle 8 angeordnet, wie hier beschrieben. Wie für den Fachmann ersichtlich ist, kann der Koppelmechanismus (insbesondere das Antriebsrad 82) stattdessen oder zusätzlich an einer oberen Umlenkrolle 7 vorgesehen sein, insbesondere wenn das Warenlagersystem für eine Ein- und/oder Auslagerung von oben konzipiert ist, wie bspw. nachfolgend mit Bezug auf Fig. 14 bis 19 beschrieben. Vorzugsweise kann das Antriebsrad 82 mittels des Bediengeräts in Bewegung versetzt werden, wie unten mit Bezug auf die Fig. 4 bis 9 genauer erläutert wird.

Die untere Umlenkscheibe 81 weist ferner den Arretiermechanismus 83 auf. Der Arretiermechanismus 83 verhindert eine Drehung der Umlenkscheibe 81 in zumindest eine Richtung, und vorzugsweise zumindest dann, wenn das Antriebsrad 82 nicht aktiv (z.B. durch einen elektrischen oder hydraulischen Antrieb) in Bewegung versetzt wird. Der Arretiermechanismus 83 ist vorzugsweise ein lösbarer Arretiermechanismus, beispielsweise eine entsperrbare Sperrklinke bzw. Ratsche.

Der Arretiermechanismus 83 ist hier durch eine Sperrklinke 84 und einen Anschlag 86 realisiert. Die Sperrklinke 84 greift in eine als Sperrrad wirkende Klinkenscheibe 85, insbesondere in darin ausgebildete Zähne, ein. Sperrklinke 84, hier mit Anschlag 86, und Klinkenscheibe 85 können Bauteile eines (entsperrbaren) Arretiermechanismus bzw. einer entsperrbaren Sperrklinke sein und/oder einen (entsperrbaren) Arretiermechanismus bzw. eine entsperrbare Sperrklinke bilden. Die Klinkenscheibe 85 ist drehfest mit der Umlenkscheibe 81 verbunden. Die Sperrklinke 84 ist derart federnd gelagert, dass sie nach unten klappbar ist, und daher eine Drehung der Klinkenscheibe 85 entgegen des Uhrzeigersinns zulässt. An der Sperrklinke 84 ist jedoch ein Anschlag 86 vorgesehen sodass die Sperrklinke 84 aufgrund des Anschlags 86 nicht nach oben wegklappbar ist, sodass eine Drehung der Klinkenscheibe im Uhrzeigersinn von der Sperrklinke 84 und Anschlag 86 unterbunden wird, dadurch dass die Sperrklinke 84 mit einzelnen Zähnen der Klinkenscheibe 85 eingreift. Hierdurch kann vermieden werden, dass die Aufnahmeelemente 6 sich nach unten bewegen.

Bevorzugt kann ein Sperrklinkenmechanismus zum Einsatz kommen. Vorzugsweise ist der Sperrklinkenmechanismus entsperrbar, bevorzugt durch eine Betätigung mittels des Bediengeräts. In der gezeigten Ausführungsform kann der Anschlag 86 betätigt werden, um diesen aus dem Drehbereich der Sperrklinke 84 zu bringen, sodass die Sperrklinke 84 in beide Richtungen drehbar ist und dadurch auch die Klinkenscheibe 85 im Uhrzeigersinn frei drehbar ist. Somit können auch die Aufnahmeelemente 6 nach unten bewegt werden, was insbesondere für eine Entnahme von Lagergutträgern nach unten aus dem Schacht hinaus zweckmäßig ist. Eine solche Entnahme nach unten aus dem Schacht hinaus kann vorzugsweise mittels eines Bediengeräts erfolgen.

Wie für den Fachmann ersichtlich, ist es nicht notwendig, zwangsläufig einen Sperrklinkenmechanismus nach der gezeigten Ausführungsform einzusetzen. Entsperrbare Sperrmechanismen sind in vielfältigen Varianten aus dem Stand der Technik bekannt. Ein Fachmann kann daher einen bekannten Sperrklinkenmechanismus aus dem Stand der Technik wählen. Zu beachten ist allerdings, dass nicht jede Variante für Lasten, wie sie bei derartigen Blocklageranordnungen gewünscht sind, in Frage kommen. Bevorzugt können Lasten bis zu 2 Tonnen, weiter bevorzugt bis zu 5 Tonnen, weiter bevorzugt bis zu 10 Tonnen auf der Sperrklinke lasten.

In anderen Worten kann der Schacht eine Vorrichtung aufweisen, die eine Bewegung des Zugmittels 5 stoppt, durch die sich die Lagergutträger 9 (aufgrund der Schwerkraft) nach unten bewegen würden. Der Sperrmechanismus kann vorzugsweise gezielt freigegeben werden, wodurch eine Bewegung der Lagergutträger 9 nach unten möglich wird. Die Freigabe des Sperrmechanismus kann z.B. dann erfolgen, wenn ein elektrischer oder hydraulischer Antrieb eines Bediengeräts so mit einem Mechanismus zur Bewegung des Zugmittels 5 gekoppelt ist, dass der Antrieb die Lagergutträger 9 mit einer beabsichtigten Geschwindigkeit nach unten bewegt, um die Lagergutträger aus einem jeweiligen Schacht zu entnehmen oder in den jeweiligen Schacht einzubringen. Die Vorrichtung, um die Bewegung des Zugmittels 5 zu stoppen, kann eine Bremse oder Ratsche sein, die zur Freigabe einer Bewegung des Zugmittels 5 mit den Lagergutträgern 9 nach unten betätigt wird. Die Betätigung kann durch das Bediengerät erfolgen. Zur Bewegung der Lagergutträger 9 nach oben kann die Vorrichtung gezielt freigegeben werden oder so ausgebildet sein, dass eine solche Bewegung nicht verhindert wird (z.B. als eine Ratsche, die eine Bewegung in einer Richtung zulässt und eine Bewegung in der entgegengesetzten Richtung blockiert, solange die Sperrklinke der Ratsche nicht betätigt und dadurch entriegelt wird). Ein Bediengerät in einer ersten bevorzugten Ausführungsform ist nachfolgend in Bezug auf die Fig. 4 bis 6 erläutert.

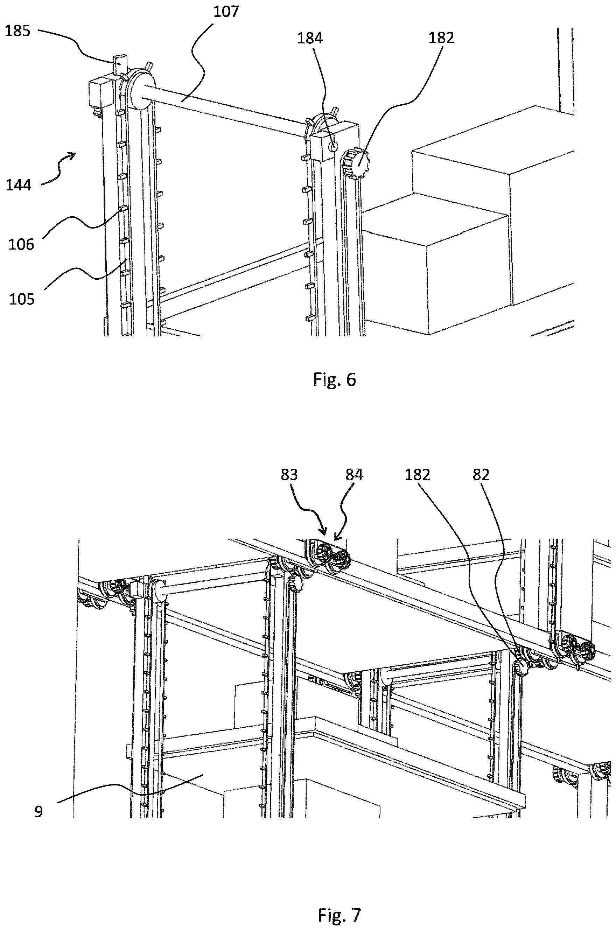

Die Fig. 4 bis 6 zeigen eine erste bevorzugte Ausführungsform eines Bediengeräts 100 nach dem dritten Aspekt der vorliegenden Erfindung. In Fig. 4 ist das Bediengerät 100 in einem unbeladenen und abgesenkten Zustand in einer perspektiven Ansicht dargestellt. Fig. 5 zeigt das Bediengerät 100 in einem beladenen Zustand in einer Seitenansicht, wobei das Bediengerät 100 in dieser Figur in einem Zustand dargestellt ist, in dem es bereit ist, mit einem Schacht 2 des Warenlagersystems zu koppeln. Fig. 6 zeigt ein Detail eines oberen Teils des Bediengeräts 100. Das Bediengerät 100 weist ein Fahrgestell 102 und einen Rahmen 101 auf. Der Rahmen 101 weist unter anderem eine erste Stütze 103, eine zweite Stütze 104, eine dritte Stütze 133 und eine vierte Stütze 144 auf, wobei in jeder der Stützen jeweils ein Zugmittel 105 gelagert ist. In alternativen Ausführungsformen kann auch vorgesehen sein, dass lediglich in zwei einander diagonal gegenüberliegenden Stützen, bspw. die Stützen 104, 144, ein Zugmittel angeordnet ist. Vorzugsweise sind zumindest zwei Stützen, weiter bevorzugt alle Stützen baugleich ausgebildet. Die vier Stützen können einen vertikalen Bediengerätschacht definieren bzw. bilden. Das Zugmittel 105 ist um eine untere Umlenkrolle 108 und eine obere Umlenkrolle 107 umlaufend angeordnet und damit drehbar gelagert. Entlang des Zugmittels 105 sind, vorzugsweise in gleicher Weise wie am Zugmittel 5 des Schachts im Warenlagersystem, Aufnahmeelemente 106 angeordnet. Die Aufnahmeelemente 106 weisen entlang des Zugmittels 105 zueinander einen identischen Abstand auf, und sind ausgebildet, einen Lagergutträger 9 aufzunehmen.

In dem mit Fig. 5 gezeigten Bediengerät 100 sind an den Aufnahmeelementen 106 zwei Lagergutträger 9 angeordnet, welche jeweils unterschiedlich hohe Waren 10 tragen. Das Bediengerät 100 ist geeignet nicht nur lediglich einen Lagergutträger 9, sondern zwei und/oder eine Mehrzahl von Lagergutträgern aufzunehmen, und höhenabhängig (d.h. abhängig von einer effektiven Gesamthöhe der jeweiligen Lagergutträger 9) möglichst dicht übereinander im Bediengerät zu lagern.

Vorzugsweise ist eine Höhe des Lagergutträgers 9 zusammen mit der darauf befindlichen Ware 10, also eine effektive Gesamthöhe des Lagegutträgers 9, bekannt. Die Höhe kann beispielsweise ermittelt werden durch eine Vermessungseinheit oder eine Freiraumkontrolleinheit 185. Hierzu kann dem Bediengerät 100 eine Information von einer Steuerung (z.B. der zentralen Steuerung des Lagers) übermittelt werden (z.B. per Funk). Alternativ kann das Bediengerät 100 die entsprechende Höheninformation über eine Eingabe erfassen. Vorzugsweise wird die Höhe ermittelt, bevor sich der Lagergutträger 9 im Warenlagersystem und/oder im Bediengerät 100 befindet. Alternativ oder zusätzlich ist eine Höhenerfassung beim Einlagern und/oder Auslagern durch das Bediengerät 100 möglich.

Das Zugmittel 105 ist derart im Bediengerät angeordnet, dass es mittels eines Antriebs 110 angetrieben werden kann. Der Antrieb 110 kann vorzugsweise auch der Fahrantrieb des Bediengeräts 100 sein und Räder und/oder Rollen am Fahrgestell 102 antreiben. Das Fahrgestell 102 ist bevorzugt derart ausgebildet, dass das Bediengerät 100 auf einem Hallenboden und/oder auf Schienen verfahrbar ist.

Die Lagergutträger 9 im Bediengerät 100 sind vorzugsweise vertikal verstellbar im Bediengerät 100 angeordnet. Eine derartige Verstellung kann über eine Bewegung des Zugmittels 105 erfolgen. Ferner kann auch eine vertikale Verstellung dadurch erfolgen, dass der gesamte Rahmen 101 gegenüber dem Fahrgestell 102 mittels einer Andockhubfunktion 109 bewegt wird. Die Andockhubfunktion 109 dient im vorliegenden Beispiel in erster Linie dazu, ein an der Oberkante des Bediengeräts 100 befindliches Bediengerät-Antriebsrad 182, welches der Antriebsübertragung dient, mit dem Antriebsrad 82 des Schachts 2 mechanisch zu koppeln und/oder eine Entriegelungsvorrichtung 184, welche der Entriegelung der Sperrklinke bzw. des Arretiermechanismus 83 dient, mechanisch mit dem Arretiermechanismus (z.B. mit dem Anschlag 86) des Schachts 2 zu koppeln. In Fig. 4 ist das Bediengerät in einem vollständig abgesenkten Zustand gezeigt. In Fig. 5 ist der Rahmen 101 mittels der Andockhubfunktion 109 gegenüber dem Fahrgestell 102 nach oben bewegt. In dieser Position kann das Bediengerät 100 an einen Schacht 2 des Warenlagersystems angedockt sein, wie in Fig. 7 dargestellt. Für eine Kopplung ist es nicht zwangsläufig erforderlich, den gesamten Rahmen 101 samt Lagergutträgern 9 in der Höhe zu verstellen, wie in der gezeigten Ausführungsform beschrieben. In alternativen Ausführungsformen kann auch lediglich die Entriegelungsvorrichtung 184 und/oder das Antriebsübertragungsmittel, d.h. das Bediengerät-Antriebsrad 182, höhenverstellbar sein. Das Bediengerät-Antriebsrad 182 ist vorzugsweise mit dem Bediengerätantrieb 110 in einer dem Fachmann bekannten Weise gekoppelt, beispielsweise mittels eines Riemen- oder Kettentriebs. Ein Riemenantrieb oder Kettenantrieb weist den Vorteil auf, dass eine Längenverstellung des Abstands Bediengerät-Antriebsrad 182 zu Bediengerätantrieb 110 ausgeglichen werden kann. Ebenso kann eine Koppelung des unteren Umlenkmechanismus 108 an den Bediengeräteantrieb 110 realisiert werden. Somit kann der Bediengeräteantrieb 110 auch dazu genutzt werden, das Zugmittel 5 des Schachts 2 zu bewegen und/oder die Aufnahmeelemente 106 vertikal im Bediengerät zu bewegen.

Das Bediengerät 100 ist eingerichtet, unter dem Warenlagersystem bzw. der Mehrzahl von Schächten 2 zu verfahren, und in einer Position direkt unter einem Schacht 2 sich mit dem Arretiermechanismus, d.h. mit dem Antriebsrad 82, und vorzugsweise mit der Sperrklinke 84, zu koppeln (mittels des Bediengerät-Antriebsrads 182 und ggfs. mittels der Entriegelungsvorrichtung 184). Anschließend kann das Zugmittel 105 des Bediengeräts 100, vorzugsweise synchron mit dem Zugmittel 5 des Schachts 2, in Bewegung versetzt werden, sodass die Aufnahmeelemente 106 des Bediengeräts 100 in gleicher Geschwindigkeit wie die Aufnahmeelemente 6 des Schachts 2 vertikal bewegt werden. Somit können Lagergutträger 9 vom Bediengerät 100 in den Schacht 2 übertragen, d.h. eingelagert, werden und/oder aus dem Schacht 2 in das Bediengerät 100 übertagen, d.h. ausgelagert, werden.

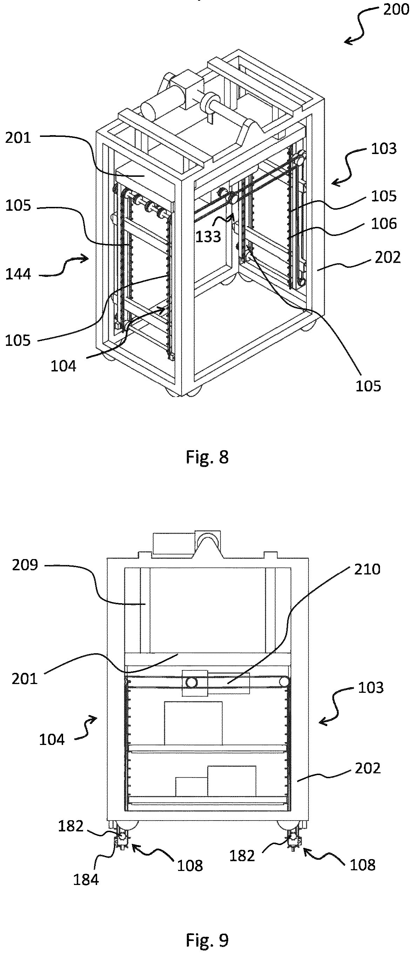

Fig. 8 und 9 zeigen ein Bediengerät 200. In Fig. 8 ist ein unbeladenes Bediengerät 200 in einem Transport-Zustand in einer perspektiven Ansicht dargestellt. Fig. 9 zeigt ein beladenes Bediengerät 200 in einem Koppel-Zustand in einer Seitenansicht. Bei beiden Figuren kann es sich um die Darstellung desselben Bediengeräts 200 handeln. Das Bediengerät 200 unterscheidet sich von Bediengerät 100 dadurch, dass es für eine Bedienung eines Warenlagersystems von oben konfiguriert ist. Das Bediengerät 200 weist vorzugsweise dieselben Komponenten auf wie das Bediengerät 100, wobei einzelne Komponenten unterschiedlich gestaltet sind, um die Bedienfunktion von oben (anstelle der Bedienfunktion von unten wie bei Bediengerät 100) zu realisieren. Auf Komponenten, welche keine signifikant unterschiedlichen funktionellen Unterschiede aufweisen wird daher hier nicht näher eingegangen, sie sind mit denselben Bezugszeichen wie in den Fig. 4 bis 6 gekennzeichnet.

Das Bediengerät 200 weist ein schachtförmiges Fahrgestell 202 und einen Rahmen 201 auf. Der Rahmen 201 weist in ähnlicher Weise wie der Rahmen 101 unter anderem eine erste Stütze 103, eine zweite Stütze 104, eine dritte Stütze 133 und eine vierte Stütze 144 auf, wobei in jeder der Stützen jeweils ein Zugmittel 105 gelagert ist. Der Rahmen 201 bildet einen nach unten offenen Schacht und ist vertikal beweglich über eine Andocksenkfunktion 209 im Fahrgestell 202 gelagert. Die Andocksenkfunktion und die Zugmittel 105 werden vorzugsweise in gleicher Weise wie beim Bediengerät 100 angetrieben. Alternativ kann ein Antrieb über einen zusätzlichen Antriebsmotor 210 erfolgen. Auch kann eine Kopplung des Bediengeräts 200 an einen Schacht 2 in analoger Weise zu den Ausführungen in Bezug auf Bediengerät 100 erfolgen. Insbesondere kann der Rahmen 201 mittels der Andocksenkfunktion 209 so weit nach unten geschoben werden, dass die unteren Umlenkrollen 108, das Bediengerät-Antriebsrad 182 und ggfs. die Entriegelungsvorrichtung 184 sich unterhalb einer Außenkontur des Fahrgestells 202 befinden.

Das Bediengerät 200 ist also eingerichtet, über dem Warenlagersystem bzw. der Mehrzahl von Schächten 2 zu verfahren, und in einer Position direkt über einem Schacht 2 sich mit dem Arretiermechanismus, d.h. mit dem Antriebsrad 82, und vorzugsweise mit einer Sperrklinke 84, zu koppeln (mittels des Bediengerät-Antriebsrads 182 und ggfs. mittels der Entriegelungsvorrichtung 184). Sperrklinke 84 und Antriebsrad 82 können in einem Warenlagersystem, welches eingerichtet ist, von oben bedient zu werden, d.h. welches einen Lagergutaufnahmebereich oberhalb der Schächte 2 aufweist, in analoger Weise wie in Fig. 3 gezeigt, an der oberen Umlenkrolle 7 eines Schachts 2 vorgesehen sein. Sobald das Bediengerät 200 mit dem Antriebsrad 82, und vorzugsweise mit der Sperrklinke 84, gekoppelt ist, kann das Zugmittel 105 des Bediengeräts 200, vorzugsweise synchron mit dem Zugmittel 5 des Schachts 2, in Bewegung versetzt werden, sodass die Aufnahmeelemente 106 des Bediengeräts 200 in gleicher Geschwindigkeit wie die Aufnahmeelemente 6 des Schachts 2 vertikal bewegt werden. Somit können Lagergutträger 9 vom Bediengerät 200 in den Schacht 2 übertragen, d.h. eingelagert, werden und/oder aus dem Schacht 2 in das Bediengerät 200 übertagen, d.h. ausgelagert, werden.

Die Figuren 10 bis 19 zeigen schematische Ansichten weiterer bevorzugter Ausführungsformen eines Warenlagersystems nach dem ersten Aspekt der vorliegenden Erfindung. Die Figuren 10 bis 19 weisen einen höheren Detailgrad auf, als Fig. 1 und 2. Dennoch ist ersichtlich, dass alle gezeigten Ausführungsformen auf demselben Grundprinzip beruhen und Merkmale der ersten drei bevorzugten Ausführungsformen des Warenlagersystems daher im Rahmen der vorliegenden Erfindung untereinander ergänzt und ausgetauscht werden können. Es wird daher bei Merkmalen, welche bereits im Zusammenhang mit der ersten bevorzugten Ausführungsform des Warenlagersystems 1000 ausführlich beschrieben wurden, auf eine weitere detaillierte Beschreibung verzichtet und auf die Beschreibungen in Bezug auf die erste bevorzugte Ausführungsform verwiesen. Insbesondere sind derartige Merkmale durch die Verwendung einheitlicher Bezugszeichen kenntlich gemacht.

Die Figuren 10, 11 zeigen ein Segment eines Warenlagersystems 2000 mit einer Mehrzahl von Schächten 2 und einem unterhalb der Schächte 2, insbesondere unterhalb der Zugmittel 5, angeordneten Lagergutaufnahmebereich 11. Das Warenlagersystem 2000 ist gemäß einer zweiten bevorzugten Ausführungsform der vorliegenden Erfindung ausgebildet und konfiguriert, einen in einen Schacht 2 einzulagernden Lagergutträger 9 im Bereich des unteren Umlenkmechanismus mit den Aufnahmeelementen 6 des Schachts 2 zu koppeln. Entsprechend weist das Warenlagersystem 2000 gemäß der zweiten bevorzugten Ausführungsform hier das Bediengerät 100 auf.

Der untere Umlenkmechanismus ist insbesondere gebildet durch die untere Umlenkrolle 8. Bevorzugt sind, wie in Fig. 2 gezeigt, in jedem Schacht zwei einander diagonal gegenüberliegende Zugmittel 5 mit einander zugeordneten Aufnahmeelementen 6 vorgesehen, sodass zwei einander zugeordnete Aufnahmeelemente 6 eine Ebene bilden. Die jeweils umlaufend ausgebildeten Zugmittel 5 verlaufen um den oberen und einen unteren Umlenkmechanismus, hier obere und untere Umlenkrolle 7, 8. Ein einzulagernder Lagergutträger 9 kann dann im Bereich des unteren Umlenkmechanismus auf die zwei zugeordneten, eine Ebene bildenden, Aufnahmeelemente 6 aufgesetzt werden, welche sich zum Zeitpunkt des Einlagervorgangs im Bereich des unteren Umlenkmechanismus, hier auf Höhe der unteren Umlenkrolle 8 befinden. Das Warenlagersystem 2000 gemäß Fig. 10, 11 ist ferner ausgebildet, einen von den zugeordneten Aufnahmeelementen 6 gehaltenen Lagergutträger 9 nach unten in den Lagergutaufnahmebereich 11 abzugeben, vorzugsweise an ein Bediengerät 100.

Im Lagergutaufnahmebereich 11 kann mindestens ein Bediengerät 100 unterhalb der Schächte 2, insbesondere unterhalb der Zugmittel 5, verfahren. Das untere Ende der Schächte 2 ist in diesem Fall von einer darunter liegenden Verfahrebene beabstandet, sodass sich im Bereich zwischen dem unteren Ende der Schächte 2 und der Verfahrebene der Lagergutaufnahmebereich 11 definieren lässt. Im gezeigten Segment befinden sich zwei als Transportfahrzeug ausgebildete Bediengeräte 100 im Lagergutaufnahmebereich 11. Die Bediengeräte 100 entsprechen vorzugsweise der mit Bezug auf Fig. 4 bis 6 beschriebenen bevorzugten Ausführungsform.

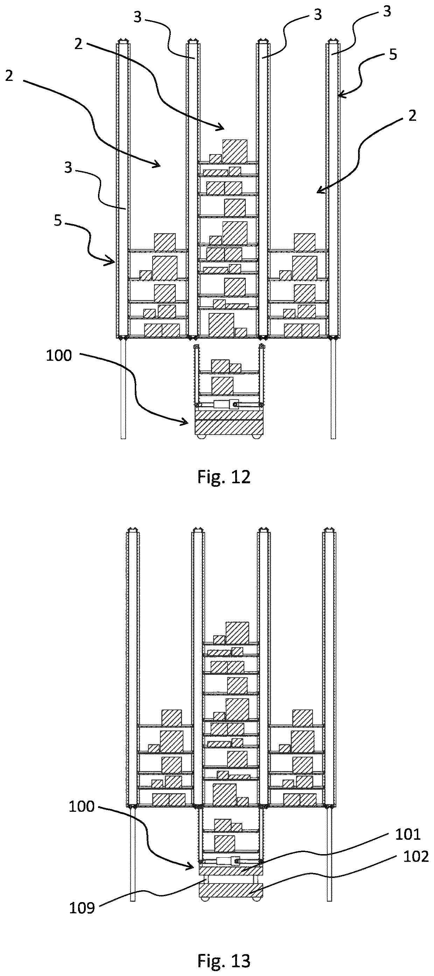

Die Figuren 12 und 13 zeigen eine geschnittene Seitenansicht des Warenlagersystems 2000, wobei das Bediengerät 100 in Fig. 12 in einem Transport-Zustand unter einen Zielschacht 2 bewegt wurde. In Fig. 13 ist gezeigt, wie der Rahmen 101 des Bediengeräts 100 mittels der Andockhubfunktion 109 nach oben bewegt wurde, sodass das Bediengerät 100 in dieser Position mit dem Schacht 2 gekoppelt ist.

Die Figuren 14, 15 zeigen ein Segment eines Warenlagersystems 3000 mit einer Mehrzahl von Schächten 2 und einem oberhalb der Schächte 2, insbesondere oberhalb der Zugmittel 5, angeordneten Lagergutaufnahmebereich 12. Das Warenlagersystem 3000 ist gemäß einer dritten bevorzugten Ausführungsform der vorliegenden Erfindung ausgebildet und konfiguriert, einen in einen Schacht 2 einzulagernden Lagergutträger 9 im Bereich des oberen Umlenkmechanismus mit den Aufnahmeelementen 6 des Schachts 2 zu koppeln. Entsprechend weist das Warenlagersystem 3000 gemäß der zweiten bevorzugten Ausführungsform hier das Bediengerät 200 auf.

Der obere Umlenkmechanismus ist insbesondere gebildet durch die obere Umlenkrolle 7. Bevorzugt sind, wie in Fig. 2 gezeigt, in jedem Schacht zwei einander diagonal gegenüberliegende Zugmittel 5 mit einander zugeordneten Aufnahmeelementen 6 vorgesehen, sodass zwei einander zugeordnete Aufnahmeelemente 6 eine Ebene bilden. Die jeweils umlaufend ausgebildeten Zugmittel 5 verlaufen um den oberen und einen unteren Umlenkmechanismus, hier obere und untere Umlenkrolle 7, 8. Ein einzulagernder Lagergutträger 9 kann dann im Bereich des oberen Umlenkmechanismus auf die zwei zugeordneten, eine Ebene bildenden, Aufnahmeelemente 6 aufgesetzt werden, welche sich zum Zeitpunkt des Einlagervorgangs im Bereich des oberen Umlenkmechanismus, hier auf Höhe der oberen Umlenkrolle 7 befinden. Das Warenlagersystem 3000 gemäß Fig. 14, 15 ist ferner ausgebildet, einen von den zugeordneten Aufnahmeelementen 6 gehaltenen Lagergutträger 9 nach oben in den Lagergutaufnahmebereich 12 abzugeben, vorzugsweise an ein Bediengerät 200.

Im Lagergutaufnahmebereich 12 kann mindestens ein Bediengerät 200 oberhalb der Schächte 2, insbesondere oberhalb der Zugmittel 5, verfahren. Im gezeigten Segment befinden sich zwei als Transportfahrzeug ausgebildete Bediengeräte 200 im Lagergutaufnahmebereich 12. Die Bediengeräte 200 entsprechen vorzugsweise der mit Bezug auf Fig. 8, 9 beschriebenen bevorzugten Ausführungsform.

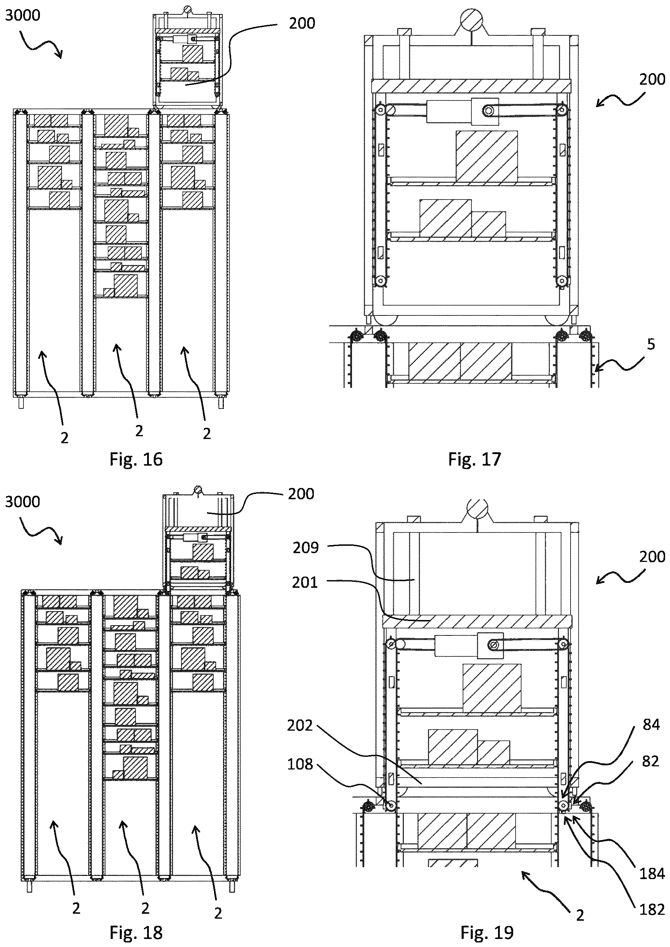

Die Figuren 16 und 18 zeigen eine geschnittene Seitenansicht des Warenlagersystems 3000, wobei das Bediengerät 200 in Fig. 16 in einem Transport-Zustand oberhalb eines Zielschachts 2 ist und in Fig. 18 in einem Koppel-Zustand am Zielschacht 2. Fig. 17 zeigt ein Detail aus Fig. 16, Fig. 19 zeigt ein Detail aus Fig 18. Insbesondere zeigt Fig. 19, wie der Rahmen 201 des Bediengeräts 200 mittels der Andocksenkfunktion 209 nach unten bewegt wurde, sodass das Bediengerät 200 in dieser Position mit dem Schacht 2 gekoppelt ist. Insbesondere befindet sich im Koppel-Zustand die untere Umlenkrolle 108 des Bediengeräts 200 unterhalb des Fahrgestells 202 und vorzugsweise innerhalb des Schachts 2. Ferner befinden sich das Bediengerät-Antriebsrad 182 und die Entriegelungsvorrichtung 184 unterhalb des Fahrgestells 202 und vorzugsweise innerhalb des Schachts 2 und befinden sich in Eingriff mit dem Antriebsrad 82 und Sperrklinke 84.

Die Erfindung betrifft ferner ein Verfahren zum Ein- oder Auslagern von Lagergutträgern. Ein bevorzugtes Verfahren zum Ein- oder Auslagern von Lagergutträgern in ein Warenlagersystem 2000 gemäß der zweiten bevorzugten Ausführungsform, d.h. ein Verfahren zum Ein- oder Auslagern von Lagergutträgern aus einem bzw. in einen unterhalb der Schächte 2 liegenden Lagergutaufnahmebereich 11, ist nachfolgend mit Bezug auf die Figuren 20 und 21 erläutert. Dabei ist in den Fig. 20 und 21 jeweils derselbe Ausschnitt des Warenlagersystems 2000 in vier unterschiedlichen Prozesssequenzen dargestellt.

Figur 20 zeigt einen Einlagerungsprozess gemäß dem vierten Aspekt der vorliegenden Erfindung anhand eines Warenlagersystems 2000 in der zweiten bevorzugten Ausführungsform. Zunächst wird mindestens ein einzulagernder Lagergutträger 9 vom Bediengerät 100 aufgenommen. Bei oder vor dieser Aufnahme wird eine Höhe, bevorzugt die effektive Gesamthöhe, dieses Lagergutträgers 9 ermittelt. Diese Höhe ist somit der Steuerung (auch: Warenlagersystemsteuerung) bekannt. Zweckmäßigerweise kann die Höhe des Lagergutträgers 9 (effektive Gesamthöhe, d.h. Lagergutträger 9 zusammen mit Ware 10) mittels einer Vermessungseinheit oder einer Freiraumkontrolleinheit 185 bestimmt werden.

In einem ersten Schritt bewegt sich das Bediengerät 100 mit einem einzulagernden Lagergutträger 9, welcher sich zuoberst im Bediengerät 100 befindet, unter einen Zielschacht 2. Wie in Fig. 20 gezeigt, können im Bediengerät 100 auch weitere Lagergutträger 9', 90 mitgeführt werden, welche entweder zusammen mit dem Lagergutträger 9 (d.h. unter dem Lagergutträger 9) in einen Zielschacht 2 eingebracht werden (wie hier der Lagergutträger 9'), oder unabhängig von dem darüber befindlichen Lagergutträger 9 in einen anderen Schacht eingebracht werden können (wie hier der Lagergutträger 90), nach dem der Lagergutträger 9 das Bediengerät 100 verlassen hat.

Im Zielschacht 2, unter dem sich das Bediengerät 100 befindet, sind in diesem Beispiel bereits 5 Lagergutträger 900 an den Aufnahmeelementen 6 am Zugmittel 5 eingelagert. Es ist zu erkennen, dass die Lagergutträger 900 nur entsprechend der Höhe der darauf befindlichen Ware 10 voneinander beabstandet sind. Das heißt, es wurde ein (bzw. zwei gegenüberliegende) geeignete(s) Aufnahmeelement(e) 6 gewählt, um den entsprechenden Lagergutträger 900 im Schacht 2 zu halten (Figur 20, ganz links), sodass dieser vorzugsweise nur einen minimalen Abstand zu einem darüber befindlichen Lagergutträger 900 aufweist.

In einen nächsten Schritt (Figur 20, zweite Abbildung von links) wird das Bediengerät 100 mit dem Schacht 2 gekoppelt. Hierbei wird optional die Andockhubfunktion 109 des Bediengeräts 100 betätigt, sodass das Bediengerät-Antriebsrad 182 des Bediengeräts 100 mit dem Antriebsrad 82 des Schachts 2 mechanisch gekoppelt wird, vorzugsweise mittels eines Reib- oder Formschlusses. Im Einlagerungsprozess kann die Kopplung des Bediengeräts 100 mit dem Schacht 2 derart erfolgen, dass lediglich die Antriebseinheit gekoppelt wird.

In anderen Worten können das Bediengerät-Antriebsrad 182 und das Antriebsrad 82 eine Klauenkupplung bilden, die geschlossen wird, wenn das Bediengerät 100 mit dem Schacht 2 koppelt. Die Entriegelungsvorrichtung bzw. der Arretierungsmechanismus kann beim Einlagern außen vor bleiben. Da sich die Zugmittel 5 auch ohne die Sperrklinke zu entsperren in eine Richtung bewegen lassen, sodass die Aufnahmeelemente 6 im Schacht nach oben bewegt werden, ist es beim Einlagerungsprozess nicht notwendig, die Sperrklinke zu entsperren. Die Sperrklinke kann so ausgebildet sein, dass sie immer eine Drehung der Umlenkrolle (hier beispielhaft der unteren Umlenkrolle 8) zur Bewegung des Zugmittels bzw. der darin angebrachten Aufnahmeelemente 6 und/oder Lagergutträger 9 nach oben (im vorliegenden Beispiel im Uhrzeigersinn) zulässt.

Alternativ oder zusätzlich ist über die Kopplung des Bediengeräts 100 mit dem Schacht 2 das Zugmittel 5 des Schachts statisch über das Bediengerät 100 gesichert, sodass auch ein Entsperren der Sperrklinke mittels der Entriegelungsvorrichtung 184 möglich ist. Dies kann auch bevorzugt sein, da das Bediengerät dann immer identisch an den Schacht 2 gekoppelt werden kann, unabhängig ob die Kopplung zum Ein- oder zum Auslagern erfolgt. Das Bediengerät 100 koppelt daher bevorzugt an den Schacht 2, wobei der Arretiermechanismus 83 betätigt wird und/oder die Antriebseinheit gekoppelt wird.

Anschließend wird das Zugmittel 105 des Bediengeräts 100 betätigt, sodass der einzulagernde Lagergutträger 9 vertikal nach oben bewegt wird, bis er sich (abhängig von seiner Höhe) direkt unter dem untersten bereits im Schacht 2 befindlichen Lagergutträgers 900 befindet. Sobald diese Position erreicht ist (z.B. ein voreingestellter Abstand, vorzugsweise zwischen 0 und 20 mm), wird auch das Zugmittel 5, vorzugsweise synchron zum Zugmittel 105, mittels des Bediengerätantriebs 110 über das Antriebsrad 82 und Bediengerät-Antriebsrad 182 angetrieben (Figur 20, die beiden Abbildungen in der Mitte). Die beiden Zugmittel 5, 105 werden so lange synchron angetrieben, bis der einzulagernde Lagergutträger 9 an den Schacht 2 übergeben wurde, vorzugsweise auf Höhe der unteren Umlenkrolle 8. Anders ausgedrückt werden die beiden Zugmittel 5, 105 so lange synchron angetrieben, bis der einzulagernde Lagergutträger 9 sich vollständig im Schacht 2 befindet, d.h. vorzugsweise bis der einzulagernde Lagergutträger 9 die untere Umlenkrolle 8 zumindest zur Hälfte, bevorzugt vollständig passiert hat. Im gezeigten Beispiel soll neben einem ersten einzulagernden Lagergutträger auch ein zweiter darunter befindlicher einzulagernder Lagergutträger 9' eingelagert werden. Entsprechend werden hier die beiden Zugmittel 5, 105 weiterhin so lange synchron angetrieben, bis auch der zweite einzulagernde Lagergutträger 9' sich vollständig im Schacht 2 befindet. Dieser Zustand ist in Figur 20 in der zweiten Abbildung von rechts dargestellt. In diesem Schritt verlässt der Lagergutträger 9 das Bediengerät 100, und damit seinen Kontakt zu den Aufnahmeelementen 106 des Bediengeräts 100. Dabei wird der Lagergutträger von den Aufnahmeelementen 6 des Schachts, d.h. von Zugmittel 5 des Schachts 2, übernommen. Somit ist der Lagergutträger 9 vom Bediengerät 100 an den Schacht 2 übergeben worden.

Anschließend kann das Bediengerät 100 vom Schacht 2 abgedockt werden. Dies ist in Figur 20 ganz rechts dargestellt. Die Andockhubfunktion 109 kann betätigt, d.h. hier, der Rahmen 101 kann abgesenkt werden. Vorzugsweise können ebenso die weiteren im Bediengerät 100 befindlichen Lagergutträger 90 wieder zurück in die Bediengerätkontur, d.h. in den Rahmen 101, abgesenkt werden. Sobald das Bediengerät 100 vom Schacht 2 entkoppelt ist, kann es wieder unter der Mehrzahl von Schächten 2 verfahren und beispielsweise zum nächsten Zielschacht verfahren, um einen weiteren Lagergutträger 90 einzulagern oder einen Lagergutträger 900 zu entnehmen, oder das Bediengerät kann aus dem Warenlagersystem hinaus verfahren.

In Figur 21 ist ein Auslagerungsprozess gemäß dem fünften Aspekt der vorliegenden Erfindung anhand eines Warenlagersystems 2000 in der zweiten bevorzugten Ausführungsform dargestellt. In einem ersten Schritt (Figur 21, links) wird ein Bediengerät 100 unter einem Zielschacht 2 positioniert. Vorzugsweise sind die Lagergutträger 90 im Bediengerät 100 bereits derart mittels des Zugmittels 105 im Rahmen 101 des Bediengeräts 100 angeordnet, dass eine Oberkante der Ware 10 des obersten Lagergutträgers 90 sich im Bereich der Bediengerätoberkannte befindet. Somit kann im Bediengerät möglichst platzsparend eingelagert werden.

In einem nächsten Schritt wird das Bediengerät 100 mit dem Zielschacht 2 gekoppelt. Dabei wird der Antrieb 110 des Bediengeräts 100 über das Antriebsrad 82 und Bediengerät-Antriebsrad 182 mit dem Zugmittel 5 des Schachts 2 gekoppelt. Dies kann vorteilhafterweise mit der Andockhubfunktion 109 realisiert werden, bevorzugt dadurch, dass das Bediengerät-Antriebsrad 182 des Bediengeräts 100 vertikal nach oben verschoben wird (Figur 21, zweites Bild von links).

Anschließend kann mindestens ein auszulagernder Lagergutträger 9 aus dem Schacht 2 entnommen werden. Dazu wird das Schacht-Zugmittel 5, vorzugsweise synchron mit dem Bediengeräte-Zugmittel 105, im Schacht 2 nach unten bewegt. Anders ausgedrückt werden die Aufnahmeelemente 6 mit dem daran gekoppelten Lagergutträger 9, vorzugsweise synchron mit den Aufnahmeelementen 106 nach unten bewegt. Diese Bewegung erfordert, dass bei der Kopplung des Bediengeräts 100 mit dem Schacht 2 auch der Arretiermechanismus 83 gelöst werden muss. D.h., bei der Kopplung des Bediengeräts 100 am Schacht 2 zum Auslagern eines Lagergutträgers muss neben der Klauenkupplung zwangsläufig auch der Arretiermechanismus gekoppelt werden. Vorzugsweise kann dies mittels eines am Bediengerät 100 befindlichen Entriegelungsmechanismus bzw. Entriegelungsvorrichtung 184 geschehen, welcher die Sperrklinke 84 entriegelt, sodass auch eine Drehung der Klinkenscheibe 85, durch die die Lagergutträger 9 nach unten bewegt werden (im vorliegenden Beispiel gegen den Uhrzeigersinn), ermöglicht wird. Die Entriegelung kann elektronisch angesteuert werden oder auch mechanisch mit dem Bediengerätantrieb 110 gekoppelt sein.

Durch eine synchrone Bewegung des Zugmittels 5 im Schacht 2 und des Zugmittels 105 im Bediengerät 100 kann in einem nächsten Schritt (Figur 21, zweite Abbildung von rechts) der auszulagernde Lagergutträger 9, ggfs. mit einem weiteren auszulagernden Lagergutträger 9', aus dem Schacht 2 entnommen werden. Dabei ist vorteilhaft, wenn das Steuersystem bzw. die Steuerung des Warenlagersystems 2000 alle Höhen der Lagergutträger und der darauf befindlichen Waren 10 (also alle effektiven Höhen der Lagergutträger 9, 9', 90, 900) kennt. Es kann bevorzugt also berücksichtigt werden, dass, bevor ein Bediengerät 100 einen Auslagerungsvorgang vornimmt, sichergestellt ist, dass auch im Rahmen 101 des Bediengeräts 100 genügend Raum vorhanden ist, um einen auszulagernden Lagergutträger 9 und ggfs. weitere auszulagernde Lagergutträger 9' mit ggfs. darauf befindlichen Waren 10 vollständig aufzunehmen.

Nachdem der mindestens eine auszulagernde Lagergutträger 9, hier die auszulagernden Lagergutträger 9, 9', vollständig in das Bediengerät 100 hineinbewegt wurde, d.h., der Lagergutträger 9 und der Lagergutträger 9' von den Aufnahmeelementen 6 des Schachts 2 an die Aufnahmeelemente 106 des Bediengeräts 100 übergeben wurde (gekoppelt wurde), kann das Bediengerät 100 vom Schacht 2 entkoppelt werden. Dies kann dadurch vorgenommen werden, dass die Andockhubfunktion 109 betätigt wird und der Rahmen 101 bzw. die Entriegelungsvorrichtung 184 und das Antriebsübertragungsmittel, d.h. das Bediengerät-Antriebsrad 182, abgesenkt wird. Somit befindet sich der Lagergutträger 9 nicht mehr im Schacht 2, sondern im Bediengerät 100, und kann weiterverarbeitet, z.B. aus dem Lagersystem hinaus oder zu einem anderen Schacht 2, transportiert werden.

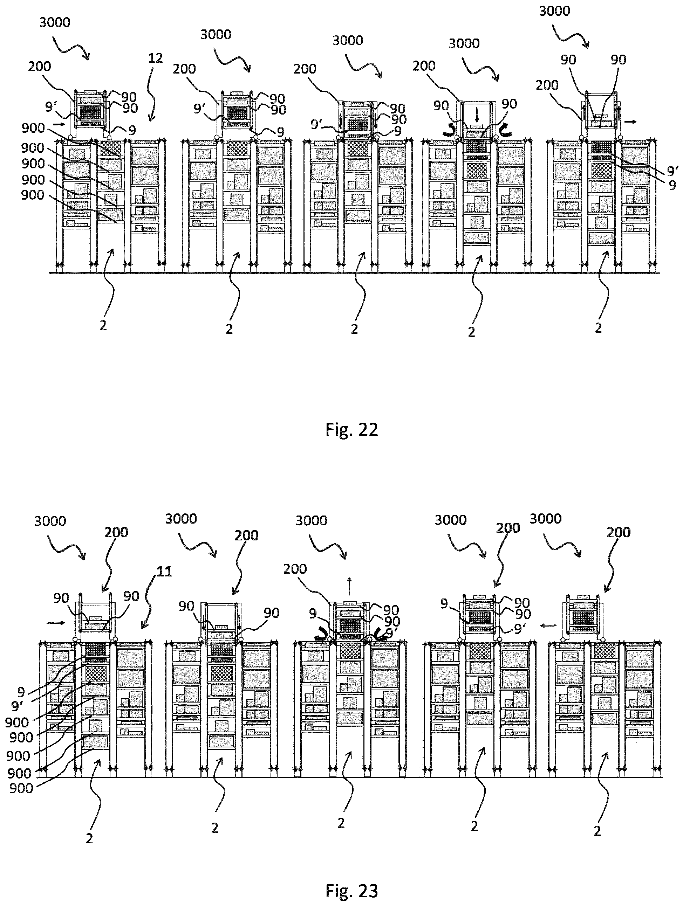

Ein bevorzugtes Verfahren zum Ein- oder Auslagern von Lagergutträgern in ein Warenlagersystem 3000 gemäß der dritten bevorzugten Ausführungsform, d.h. ein Verfahren zum Ein- oder Auslagern von Lagergutträgern aus einem bzw. in einen oberhalb der Schächte 2 liegenden Lagergutaufnahmebereich 12, ist nachfolgend mit Bezug auf die Figuren 22 und 23 erläutert. Dabei ist in den Fig. 22 und 23 jeweils derselbe Ausschnitt des Warenlagersystems 3000 in fünf unterschiedlichen Prozesssequenzen dargestellt.

Figur 22 zeigt einen Einlagerungsprozess gemäß dem vierten Aspekt der vorliegenden Erfindung anhand eines Warenlagersystems 3000 in der dritten bevorzugten Ausführungsform.

In einem ersten Schritt bewegt sich das Bediengerät 200 mit mindestens einem einzulagernden Lagergutträger 9, welcher sich zuunterst im Bediengerät 200 befindet, über einen Zielschacht 2. Hier werden im Bediengerät nicht nur ein Lagergutträger 9, sondern direkt darüber auch ein zweiter einzulagernder Lagergutträger 9' und darüber ein oder mehrere weitere Lagergutträger 90 transportiert (Fig, 22, die ersten beiden Abbildungen von links). Im Zielschacht 2, über dem sich das Bediengerät 200 befindet, sind in diesem Beispiel bereits 5 Lagergutträger 900 an den Aufnahmeelementen 6 am Zugmittel 5 eingelagert. Es ist zu erkennen, dass die Lagergutträger 900 nur entsprechend der Höhe der darauf befindlichen Ware 10 voneinander beabstandet sind. Das heißt, es wurde ein (bzw. zwei gegenüberliegende) geeignete(s) Aufnahmeelement(e) 6 gewählt, um den entsprechenden Lagergutträger 900 im Schacht 2 zu halten (Figur 22, ganz links), sodass dieser vorzugsweise nur einen minimalen Abstand zu einem darüber befindlichen Lagergutträger 900 aufweist.

In einen nächsten Schritt (Figur 22, dritte Abbildung von links) wird das Bediengerät 200 mit dem Schacht 2 gekoppelt. Hierbei wird die Andocksenkfunktion 109 des Bediengeräts 200 betätigt, sodass das Bediengerät-Antriebsrad 182 und die Entriegelungsvorrichtung 184 des Bediengeräts 200 entsprechend mit dem Antriebsrad 82 und dem Arretiermechanismus 83 des Schachts mechanisch gekoppelt wird, vorzugsweise mittels eines Reib- oder Formschlusses. Über die Kopplung des Bediengeräts 100 mit dem Schacht 2 ist das Zugmittel 5 des Schachts vorzugsweise statisch über das Bediengerät 100 gesichert, sodass ein Entsperren des Arretiermechanismus 83 mittels der Entriegelungsvorrichtung 184 möglich ist, ohne dass sich das Zugmittel 105 unkontrolliert bewegt.

Anschließend wird das Zugmittel 105 des Bediengeräts 100 betätigt, sodass der mindestens eine einzulagernde Lagergutträger 9 vertikal nach unten bewegt wird, bis er sich auf Höhe eines Übergabepunktes zum Schacht 2 befindet. Sobald diese Position erreicht ist, wird auch das Zugmittel 5, vorzugsweise synchron zum Zugmittel 105, mittels des Bediengerätantriebs 110 oder 210 über das Antriebsrad 82 und Bediengerät-Antriebsrad 182 angetrieben (Figur 22, Mitte). In diesem Schritt verlässt der Lagergutträger 9 das Bediengerät 200, und damit seinen Kontakt zu den Aufnahmeelementen 106 des Bediengeräts 200. Dabei wird der Lagergutträger 9 von den Aufnahmeelementen 6 des Schachts 2, d.h. von den Zugmitteln 5 des Schachts 2, übernommen. Das Zugmittel 5 wird so lange über das Bediengerät 200 angetrieben, bis der einzulagernde Lagergutträger 9 vollständig im Schacht 2 aufgenommen wurde, d.h. sich der Lagergutträger 9 inklusive einer ggfs. darauf befindlichen Ware 10 sich innerhalb einer Kontur des Schachts 2 befindet. Wenn, wie hier dargestellt, mehrere Lagergutträger in einem Einlagerungsvorgang in den Schacht eingelagert werden sollen, wird das Zugmittel 5 entsprechend so lange über das Bediengerät 200 angetrieben, bis auch die weiteren einzulagernden Lagergutträger, hier Lagergutträger 9' vollständig im Schacht 2 aufgenommen wurden. Dieser Zustand ist in Figur 22 in der zweiten Abbildung von rechts dargestellt.

Anschließend kann das Bediengerät 200 vom Schacht 2 abgedockt werden. Dies ist in Figur 22 ganz rechts dargestellt. Die Andockabsenkfunktion 209 kann betätigt werden, sodass der Rahmen 201 wieder nach oben in das Bediengerät 200 zurückbewegt wird. Sobald das Bediengerät 200 vom Schacht 2 entkoppelt ist, kann es wieder über der Mehrzahl von Schächten 2 verfahren und beispielsweise zum nächsten Zielschacht verfahren, um einen weiteren Lagergutträger 90 einzulagern oder einen Lagergutträger 900 zu entnehmen, oder das Bediengerät kann aus dem Warenlagersystem hinaus verfahren.

In Figur 23 ist ein Auslagerungsprozess gemäß dem fünften Aspekt der vorliegenden Erfindung anhand eines Warenlagersystems 3000 in der dritten bevorzugten Ausführungsform dargestellt. In einem ersten Schritt (Figur 23, links) wird ein Bediengerät 200 über einem Zielschacht 2 positioniert. Vorzugsweise sind die Lagergutträger 90 im Bediengerät 200 bereits derart mittels des Zugmittels 105 im Rahmen 201 des Bediengeräts 200 angeordnet, dass eine Unterkante des untersten Lagergutträgers 90 sich im Bereich der Bediengeräteunterkante befindet. Somit kann im Bediengerät möglichst platzsparend eingelagert werden.

In einem nächsten Schritt wird das Bediengerät 200 mit dem Zielschacht 2 gekoppelt. Dabei wird der Antrieb 210 des Bediengeräts 200 über das Antriebsrad 82 und Bediengerät-Antriebsrad 182 mit dem Zugmittel 5 des Schachts 2 gekoppelt. Dies kann vorteilhafterweise mit der Andockabsenkfunktion 209 realisiert werden, bevorzugt dadurch, dass das Bediengerät-Antriebsrad 182 des Bediengeräts 200 vertikal nach unten verschoben wird (Figur 23, zweites Bild von links). In diesem Schritt ist es nicht notwendig, die Sperrklinke 84 des Schachts 2 zu entsperren, da die Aufnahmeelemente 6 des Schachts im Rahmen des Auslagervorgangs hier lediglich nach oben bewegt werden.

Anschließend kann mindestens ein auszulagernder Lagergutträger 9, hier zwei auszulagernde Lagergutträger 9, 9', aus dem Schacht 2 entnommen werden. Dazu wird das Schacht-Zugmittel 5, vorzugsweise synchron mit dem Bediengeräte-Zugmittel 105, im Schacht 2 nach oben bewegt. Anders ausgedrückt werden die Aufnahmeelemente 6 mit den daran gekoppelten Lagergutträgern 9, 9', vorzugsweise synchron mit den Aufnahmeelementen 106 nach oben bewegt.

Durch eine synchrone Bewegung des Zugmittels 5 im Schacht 2 und des Zugmittels 105 im Bediengerät 100 können in einem nächsten Schritt (Figur 23, Mitte) der Lagergutträger 9 und der Lagergutträger 9' aus dem Schacht 2 entnommen werden. Dabei ist es notwendig, dass das Steuersystem bzw. die Steuerung des Warenlagersystems 3000 die Höhe der auszulagernden Lagergutträger 9, 9' und der darauf befindlichen Waren 10 kennt. Somit kann der Weg gesteuert werden, um den die Aufnahmeelemente 6 und 106 nach oben bewegt werden müssen, damit der mindestens eine auszulagernde Lagergutträger 9 zusammen mit der ggfs. darauf befindlichen Ware 10 (hier die Lagergutträger 9, 9' zusammen mit den ggfs. darauf befindlichen Waren) sicher vollständig im Bediengerät 200 aufgenommen ist (d.h. an die Aufnahmeelemente 106 übergeben wurde).

Nachdem der mindestens eine auszulagernde Lagergutträger 9 (hier die zwei Lagergutträger 9, 9') vollständig in das Bediengerät 200 hineinbewegt wurde, d.h., der Lagergutträger 9 und der Lagergutträger 9' von den Aufnahmeelementen 6 des Schachts 2 an die Aufnahmeelemente 106 des Bediengeräts 200 übergeben wurden (gekoppelt wurden), kann das Bediengerät 200 vom Schacht 2 entkoppelt werden (Fig. 23, rechts und zweite Abbildung von rechts). Dies kann dadurch vorgenommen werden, dass die Andocksenkfunktion 209 betätigt wird und der Rahmen 201 bzw. das Bediengerät-Antriebsrad 182 nach oben in die Kontur des Fahrgestells 202 zurückbewegt wird. Somit befinden sich die Lagergutträger 9, 9' nicht mehr im Schacht 2, sondern im Bediengerät 200, und können weiterverarbeitet, z.B. aus dem Lagersystem hinaus oder zu einem anderen Schacht 2, transportiert werden.

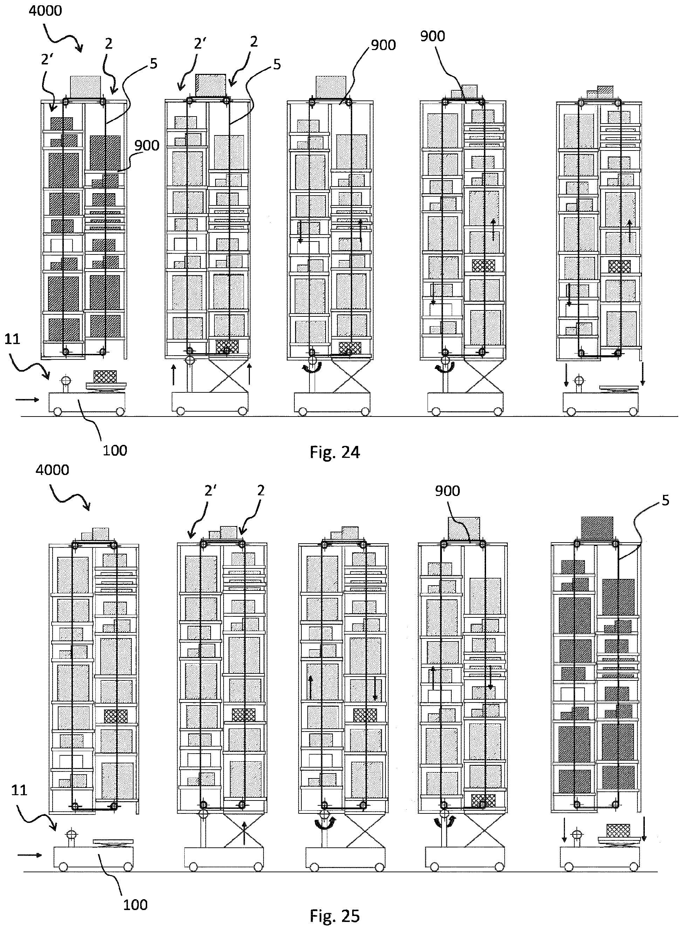

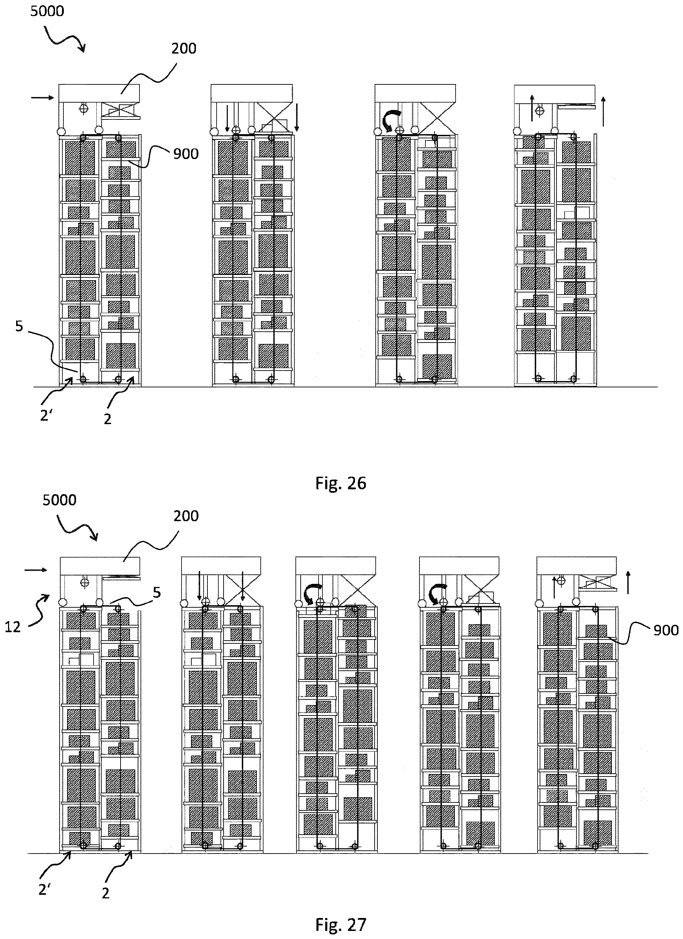

In den Fig. 24 bis 27 sind weitere bevorzugte Warenlagersysteme 4000 und 5000 gezeigt. Fig. 24 und Fig. 25 zeigen jeweils fünf unterschiedliche Momentaufnahmen desselben Ausschnitts eines Warenlagersystems 4000. Fig. 26 und Fig. 27 zeigen jeweils vier unterschiedliche Momentaufnahmen desselben Ausschnitts eines Warenlagersystems 5000. Das Warenlagersystem 4000 aus Fig. 24, 25 weist einen Lagergutaufnahmebereich 11 unterhalb der Mehrzahl von Schächten 2 auf. Eine Ein- und Auslagerung kann daher analog zu dem in Zusammenhang mit den Fig. 20, 21 beschriebenen Verfahren erfolgen. Diese Verfahren sind daher lediglich schematisch in den Fig. 24, 25 angedeutet. Das Warenlagersystem 5000 aus Fig. 26, 27 weist einen Lagergutaufnahmebereich 12 oberhalb der Mehrzahl von Schächten 2 auf. Eine Ein- und Auslagerung kann daher analog zu dem in Zusammenhang mit den Fig. 22, 23 beschriebenen Verfahren erfolgen. Diese Verfahren sind daher lediglich schematisch in den Fig. 26, 27 angedeutet.

Die Warenlagersysteme 4000 und 5000 unterschieden sich von den Warenlagersystemen nach den ersten drei bevorzugten Ausführungsformen insbesondere dadurch, dass gemeinsam bewegbare Zugmittel 5 nicht nur lediglich in separaten Schächten angeordnet sind, sondern die Zugmittel 5 derart angeordnet sind, dass ein erstes und ein zweites Zugmittel 5jeweils mindestens zwei Schächte 2, 2' durchlaufen und gemeinsam durch diese Schächte 2, 2' bewegbar sind. Somit können Lagergüter 900 von einem ersten Schacht 2 in einen benachbarten zweiten Schacht 2' überführt werden. Es genügt dann, wenn lediglich der erste Schacht 2 eine Kopplungsschnittstelle aufweist, d.h. eine Möglichkeit bietet, ein Bediengerät zu koppeln und somit das Zugmittel 5 mechanisch mit dem Antrieb des Bediengeräts zu koppeln.

Bei einer derartigen Ausgestaltung führt eine Bewegung des ersten Zugmittels 5 dazu, dass sich das Zugmittel 5 im ersten Schacht 2 in eine erste Richtung, beispielsweise nach oben bewegt, wohingegen es sich im zweiten Schacht 2' in eine der ersten Richtung entgegengesetzte zweite Richtung, beispielsweise nach unten bewegt. Vorzugsweise kann die Bewegungsrichtung des Zugmittels 5 durch die Schächte 2, 2' umkehrbar sein. Beispielsweise kann das Zugmittel 5 mit den Aufnahmeelementen 6 im ersten Schacht 2 nach oben bewegt werden, wenn ein Lagergutträger von unten in den Schacht 2 eingelagert werden soll (Lagergutaufnahmebereich 11 unterhalb der Mehrzahl von Schächten 2; vgl. Fig. 24), und das Zugmittel 5 mit den Aufnahmeelementen 6 kann im ersten Schacht 2 nach unten bewegt werden, wenn ein Lagergutträger nach unten aus dem Schacht 2 ausgelagert werden soll (Lagergutaufnahmebereich 11 unterhalb der Mehrzahl von Schächten 2; vgl. Fig. 25). Alternativ kann beispielsweise das Zugmittel 5 mit den Aufnahmeelementen 6 im ersten Schacht 2 nach unten bewegt werden, wenn ein Lagergutträger von oben in den Schacht 2 eingelagert werden soll (Lagergutaufnahmebereich 12 oberhalb der Mehrzahl von Schächten 2; vgl. Fig. 26), und das Zugmittel 5 mit den Aufnahmeelementen 6 kann im ersten Schacht 2 nach oben bewegt werden, wenn ein Lagergutträger nach oben aus dem Schacht 2 ausgelagert werden soll (Lagergutaufnahmebereich 12 oberhalb der Mehrzahl von Schächten 2; vgl. Fig. 27).

In jedem Fall können bei einer Ausgestaltung nach einer der Fig. 24 bis 27. Lagergutträger vom ersten Schacht 2 in den zweiten Schacht 2' überführt werden. Eine derartige Ausgestaltung des Warenlagersystems ermöglicht es, nicht nur den jeweils untersten oder obersten Lagergutträger aus einem Schacht 2 entnehmen zu können, sondern die Lagergutträger vielmehr durch die benachbarten Schächte hindurchbewegen zu können, um gezielt einen im Schacht 2 befindlichen Lagergutträger an die Koppel-Schnittstelle zu bewegen und diesen beispielsweise aus dem Schacht zu entnehmen. Vorzugsweise können das erste und das zweite umlaufende Zugmittel 5 mit den entsprechenden Aufnahmeelementen 6 nach dem Paternosterprinzip die benachbarten Schächte 2, 2' durchlaufen. Ein solches Warenlagersystem kann Flexibilität und Zugänglichkeit weiter verbessern.

Ein Warenlagersystem mit einem oder mehreren Komponenten nach einem der bevorzugten Ausführungsformen kann vorteilhaft dahingehend eingesetzt werden, dass ein sicherer Betrieb gewährleistet werden kann, Brandschutz erhöht werden kann, Lagerdichte erhöht werden kann, insbesondere bei nur teilweise befüllten Lagergutträgern, und/oder auch schwere Lasten blocklagerähnlich in großen Höhen gelagert werden können.

Die im Zusammenhang mit den Figuren geschilderten Ausführungsformen der vorliegenden Erfindung stellen lediglich beispielhafte Ausgestaltungen dar, die den Umfang der Ansprüche nicht beschränken. Der Schutzumfang wird lediglich durch die nachfolgenden Ansprüche und deren Äquivalente definiert.

## Patentansprüche

1. Warenlagersystem, aufweisend:
- eine Mehrzahl vertikaler Schächte,
wobei jeder Schacht zur Aufnahme einer Mehrzahl vertikal übereinander angeordneter Lagergutträger ausgebildet ist,
wobei jeder Schacht mindestens ein erstes Zugmittel aufweist, das vertikal durch den Schacht bewegbar ist, wobei das erste Zugmittel mehrere vertikal beabstandete erste Aufnahmeelemente aufweist, die jeweils dazu ausgebildet sind, mindestens einen der im Schacht aufzunehmenden Lagergutträger zu halten,
wobei die ersten Aufnahmeelemente entlang des ersten Zugmittels angeordnet und mittels des ersten Zugmittels durch den Schacht bewegbar sind;
- eine Steuerung, die ausgebildet ist, eine Bewegung eines bestimmten Zugmittels zu veranlassen, sodass sich eine vertikale Position der ersten Aufnahmeelemente des Zugmittels im jeweiligen Schacht um eine definierte Distanz verändert, wobei die Steuerung ausgebildet ist, die definierte Distanz abhängig von einer Höhe eines in den jeweiligen Schacht aufzunehmenden oder aus dem jeweiligen Schacht zu entnehmenden Lagergutträgers und/oder einer Höhe eines auf dem Lagergutträger befindlichen Lagerguts zu steuern;
- mindestens ein Bediengerät mit mindestens einem Antrieb;
- eine Schnittstelle, die dazu ausgebildet ist, das erste Zugmittel mechanisch mit dem Antrieb des Bediengeräts zu koppeln, um das erste Zugmittel mittels des Antriebs des Bediengeräts anzutreiben.

2. Warenlagersystem nach Anspruch 1,
wobei jeder Schacht ferner mindestens ein zweites Zugmittel aufweist, das vertikal durch den Schacht bewegbar ist,
wobei das zweite Zugmittel mehrere vertikal beabstandete zweite Aufnahmeelemente aufweist, die jeweils dazu ausgebildet sind, mindestens einen der im Schacht aufzunehmenden Lagergutträger zu halten,
wobei die zweiten Aufnahmeelemente entlang des zweiten Zugmittels angeordnet und mittels des zweiten Zugmittels durch den Schacht bewegbar sind, vorzugsweise wobei die Schnittstelle das zweite Zugmittel mechanisch mit dem Antrieb des Bediengeräts koppelt, um das zweite Zugmittel mittels des Antriebs des Bediengeräts anzutreiben,
vorzugsweise wobei:
das zweite Zugmittel im Schacht gegenüberliegend zum ersten Zugmittel angeordnet ist, vorzugsweise diagonal gegenüberliegend, und/oder
jedes zweite Aufnahmeelement einem gegenüberliegenden ersten Aufnahmeelement zugeordnet ist, wobei die einander zugeordneten Aufnahmeelemente ausgebildet sind, gemeinsam den im Schacht aufzunehmenden Lagergutträger zu halten, vorzugsweise wobei die zugeordneten Aufnahmeelemente in einer gemeinsamen horizontalen Ebene liegen.

3. Warenlagersystem nach Anspruch 1 oder 2,
wobei die ersten und/oder zweiten Aufnahmeelemente in regelmäßigen Abständen entlang des ersten und/oder zweiten Zugmittels angeordnet sind,
vorzugsweise wobei:
ein Abstand zwischen zwei benachbarten Aufnahmeelementen an dem ersten und/oder zweiten Zugmittel mindestens 20 mm, bevorzugt mindestens 50 mm, weiter bevorzugt mindestens 80 mm beträgt, und/oder
ein Abstand zwischen zwei benachbarten Aufnahmeelementen an dem ersten und/oder zweiten Zugmittel maximal 500 mm, bevorzugt maximal 350 mm, bevorzugt maximal 250 mm, weiter bevorzugt maximal 150 mm beträgt.

4. Warenlagersystem nach einem der vorstehenden Ansprüche, wobei die ersten und/oder zweiten Aufnahmeelemente ausgebildet sind, Lagergutträger vertikal durch den Schacht zu bewegen; und/oder
wobei die ersten und/oder zweiten Aufnahmeelemente als Stifte, Platten, Winkel, Gabeln, Nuten, Klemmstücke, Haken, Bolzen, Mitnehmerelemente, Schraubenköpfe oder Löcher, insbesondere Freiräume im ersten und/oder zweiten Zugmittel, ausgebildet sind.

5. Warenlagersystem nach einem der vorstehenden Ansprüche, wobei die Mehrzahl von Schächten direkt aneinander angrenzend angeordnet ist und/oder wobei keine Gassen für ein Bediengerät zwischen einzelnen Schächten aus der Mehrzahl von Schächten vorgesehen sind.

6. Warenlagersystem nach einem der vorstehenden Ansprüche, wobei das erste und/oder zweite Zugmittel um einen oberen Umlenkmechanismus verläuft, vorzugsweise wobei der obere Umlenkmechanismus im Bereich eines oberen Endes des Schachts angeordnet ist; und/oder
wobei das erste und/oder zweite Zugmittel um einen unteren Umlenkmechanismus verläuft, vorzugsweise wobei der untere Umlenkmechanismus im Bereich eines unteren Endes des Schachts angeordnet ist.

7. Warenlagersystem nach Anspruch 6, wobei das erste und/oder zweite Zugmittel ein umlaufendes Zugmittel ist, welches um den oberen und den unteren Umlenkmechanismus läuft, vorzugsweise wobei die ersten und/oder zweiten Aufnahmeelemente umlaufend entlang des gesamten jeweiligen ersten bzw. zweiten Zugmittels angeordnet sind, weiter bevorzugt in regelmäßigem Abstand zueinander.

8. Warenlagersystem nach einem der vorstehenden Ansprüche, wobei das System konfiguriert ist,
einen in den Schacht einzulagernden Lagergutträger mit einem der ersten und/oder zugeordneten zweiten Aufnahmeelemente zu koppeln, bevorzugt auf Höhe des oberen und/oder unteren Umlenkmechanismus; und/oder
einen aus dem Schacht auszulagernden Lagergutträger von einem der ersten und/oder zugeordneten zweiten Aufnahmeelemente zu entkoppeln, bevorzugt auf Höhe des oberen und/oder unteren Umlenkmechanismus.

9. Warenlagersystem nach einem der vorstehenden Ansprüche, wobei das Warenlagersystem einen Lagergutaufnahmebereich unterhalb oder oberhalb des mindestens einen ersten und/oder zweiten Zugmittels aufweist, wobei das Warenlagersystem ausgebildet ist, einen von den zugeordneten Aufnahmeelementen gehaltenen Lagergutträger in den Lagergutaufnahmebereich abzugeben.

10. Warenlagersystem nach einem der vorstehenden Ansprüche, wobei die Steuerung ausgebildet ist, die definierte Distanz zu steuern abhängig von einer Gesamthöhe eines mit Lagergut beladenen Lagergutträgers, wobei die Gesamthöhe definiert ist, als das Maximum aus:
einer Höhe von Unterkante Lagergutträger zu Oberkante Lagergut; oder einer Höhe von Unterkante Lagergutträger zu Oberkante Lagergutträger; bevorzugt
wobei die definierte Distanz mindestens der Gesamthöhe eines einzulagernden Lagergutträgers entspricht, bevorzugt der Gesamthöhe eines einzulagernden Lagergutträgers zuzüglich eines Abstandswerts, wobei der Abstandswert bevorzugt mindestens 10 mm, weiter bevorzugt mindestens 20 mm und/oder bevorzugt maximal 200 mm, weiter bevorzugt maximal 150 mm beträgt.

11. Warenlagersystem nach einem der vorstehenden Ansprüche, ferner aufweisend eine Vermessungseinheit und/oder eine Freiraumkontrolleinheit, wobei die Vermessungseinheit und/oder die Freiraumkontrolleinheit ausgebildet ist, einen oder mehrere der folgenden Werte zu bestimmen und/oder einen Lagergutträger basierend auf einem oder mehrerer der folgenden Werte in ein vorgegebenes Höhenraster einzuordnen:
die Höhe eines Lagergutträgers;
die Höhe von auf dem Lagergutträger befindlichen Lagergütern; und/oder
die Gesamthöhe eines mit Lagergut beladenen Lagergutträgers, vorzugsweise zuzüglich eines definierten Abstandswerts.

12. Warenlagersystem nach einem der vorstehenden Ansprüche, ferner aufweisend einen Lagergutträger, wobei der Lagergutträger zumindest in einem Randbereich eine Dicke aufweist, die kleiner ist als der vertikale Abstand zweier benachbarter erster Aufnahmeelemente.

13. Bediengerät für ein Warenlagersystem nach einem der Ansprüche 1-12, wobei das Bediengerät dazu ausgebildet ist, einen und/oder mehrere Lagergutträger zu puffern und/oder abzugeben, bevorzugt nach oben und/oder unten abzugeben.

14. Bediengerät nach Anspruch 13, wobei das Bediengerät ein drittes Zugmittel aufweist, das im Bediengerät vertikal bewegbar ist, wobei das dritte Zugmittel mehrere vertikal beabstandete dritte Aufnahmeelemente aufweist, die jeweils dazu ausgebildet sind, mindestens einen Lagergutträger zu halten, wobei die dritten Aufnahmeelemente entlang des dritten Zugmittels angeordnet und mittels des dritten Zugmittels im Bediengerät vertikal bewegbar sind; wobei das Bediengerät bevorzugt ferner eine Hubsteuerung aufweist, die ausgebildet ist, eine Bewegung des dritten Zugmittels zu veranlassen, sodass sich eine jeweilige vertikale Position der dritten Aufnahmeelemente entlang einer Vertikalachse des Bediengeräts um eine definierte Distanz verändert, wobei die Hubsteuerung ausgebildet ist, die definierte Distanz abhängig von einer Höhe eines Lagergutträgers und/oder einer Höhe eines auf dem Lagergutträger befindlichen Lagerguts festzulegen.

15. Verfahren zum Betrieb eines Warenlagersystems nach einem der Ansprüche 1-12, aufweisend einen Einlagerungsprozess mit den Schritten:
a. Bestimmung der Gesamthöhe eines einzulagernden Lagergutträgers, wobei die Gesamthöhe des einzulagernden Lagergutträgers bevorzugt definiert ist, als das Maximum aus:
einer Höhe von Unterkante Lagergutträger zu Oberkante Lagergut; oder
einer Höhe von Unterkante Lagergutträger zu Oberkante Lagergutträger;
b. Transport des einzulagernden Lagergutträgers zu einem Zielschacht aus der Mehrzahl von Schächten durch ein Bediengerät, vorzugsweise durch ein Bediengerät nach einem der Ansprüche 13-14;
c. Koppeln des Bediengeräts mit der Schnittstelle des Zielschachts;
d. Bewegen des ersten und/oder zweiten Zugmittels, sodass sich ein erstes und/oder zugeordnetes zweites Aufnahmeelement im Schacht um eine definierte Distanz vertikal bewegt, wobei die definierte Distanz abhängig ist von der Gesamthöhe des einzulagernden Lagergutträgers;
e. Koppeln des Lagergutträgers mit dem ersten und/oder zweiten Aufnahmeelement.
